(19) Europäisches Patentamt / European Patent Office / Office européen des brevets

(11) **EP 4 787 733 A1**

(12) **EUROPEAN PATENT APPLICATION**
published in accordance with Art. 153(4) EPC

(43) Date of publication:
**05.08.2026 Bulletin 2026/32**

(21) Application number: **24910616.2**

(22) Date of filing: **05.12.2024**

(51) International Patent Classification (IPC):
***H04B 7/185*** *(2006.01)*

(52) Cooperative Patent Classification (CPC):
**H04B 7/185; H04W 72/0453**

(86) International application number:
**PCT/CN2024/137170**

(87) International publication number:
**WO 2025/139684 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.12.2023 CN 202311840097**
**28.04.2024 CN 202410544898**
**18.11.2024 CN 202411649804**

(71) Applicant: **HUAWEI TECHNOLOGIES CO., LTD.**
**Shenzhen 518129 (CN)**

(72) Inventors:
• **SUN, Libin**
**Shenzhen, Guangdong 518129 (CN)**
• **TANG, Rundong**
**Shenzhen, Guangdong 518129 (CN)**
• **SHI, Chuanbo**
**Shenzhen, Guangdong 518129 (CN)**
• **WANG, Hanyang**
**Shenzhen, Guangdong 518129 (CN)**
• **CHU, Jiahui**
**Shenzhen, Guangdong 518129 (CN)**
• **XUE, Liang**
**Shenzhen, Guangdong 518129 (CN)**
• **YUAN, Linghua**
**Shenzhen, Guangdong 518129 (CN)**
• **WANG, Jikang**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **ELECTRONIC DEVICE**

(57) This application provides an electronic device. The electronic device includes a first antenna and a second antenna. An operating frequency band of the first antenna and an operating frequency band of the second antenna include a satellite communication frequency band. The first antenna and the second antenna may generate different maximum radiation directions. The electronic device may switch between the first antenna and the second antenna to perform satellite communication, or perform satellite communication through both the first antenna and the second antenna, so that user experience during satellite communication can be improved.

FIG. 10

# Description

This application claims priorities to Chinese Patent Application No. 202311840097.2, filed with the China National Intellectual Property Administration on December 27, 2023 and entitled "ELECTRONIC DEVICE", to Chinese Patent Application No. 202410544898.2, filed with the China National Intellectual Property Administration on April 28, 2024 and entitled "ELECTRONIC DEVICE", and to Chinese Patent Application No. 202411649804.4, filed with the China National Intellectual Property Administration on November 18, 2024 and entitled "ELECTRONIC DEVICE", all of which are incorporated herein by reference in their entireties.

## TECHNICAL FIELD

This application relates to the field of wireless communication, and in particular, to an electronic device.

## BACKGROUND

Currently, a side frame serves as an antenna radiator in an existing terminal electronic device. For example, in a satellite communication system, a side frame radiator is mainly configured to form a linearly polarized antenna. When a user performs satellite communication, an area in which the antenna has a good radiation characteristic (for example, a gain of the antenna in the area is greater than or equal to AdBic, where A is a minimum gain value that meets a communication requirement in the satellite communication system) needs to be pointed to a satellite, to implement satellite alignment (establish a communication connection to the satellite).

However, during the satellite communication, relative positions of the electronic device and the satellite change. For example, when a low-orbit satellite moves, the satellite may be out of the area in which the antenna has a good radiation characteristic. In this case, the user needs to change a holding posture or move to ensure that the satellite is still in the area in which the antenna has a good radiation characteristic, so as to maintain satellite alignment or establish a connection to a new satellite. Otherwise, communication quality is poor or even a disconnection occurs, which greatly affects communication experience of the user.

## SUMMARY

This application provides an electronic device. The electronic device includes a first antenna and a second antenna. An operating frequency band of the first antenna and an operating frequency band of the second antenna include a satellite communication frequency band. The first antenna and the second antenna may generate different maximum radiation directions. The electronic device may switch between the first antenna and the second antenna to perform satellite communication, or perform satellite communication through both the first antenna and the second antenna, so that user experience during satellite communication can be improved.

According to a first aspect, an electronic device is provided, including: a ground plane; a first side frame, where the first side frame includes a first position, a second position, a third position, and a fourth position that are sequentially disposed, the first side frame is coupled to the ground plane or has an insulation slot at the first position, the first side frame is coupled to the ground plane or has an insulation slot at the second position, the first side frame is coupled to the ground plane or has an insulation slot at the third position, the first side frame is coupled to the ground plane or has an insulation slot at the fourth position, the first side frame includes a first edge and a second edge that intersect at an angle, a length of the first edge is less than a length of the second edge, the first position and the second position are located on the first edge, and the third position and the fourth position are located on the second edge; a first antenna, where the first antenna includes: a first radiator, where the first radiator includes a conductive part of the first side frame between the first position and the second position, and at least a part of the first radiator is spaced from the ground plane; and a first feed circuit, where the first radiator includes a first feed point, the first feed circuit is coupled to the first feed point, and the first feed circuit is configured to transmit a radio frequency signal of a satellite communication frequency band; and a second antenna, where the second antenna includes: a second radiator, where the second radiator includes a conductive part of the first side frame between the third position and the fourth position, and at least a part of the second radiator is spaced from the ground plane; and a second feed circuit, where the second radiator includes a second feed point, the second feed circuit is coupled to the second feed point, and the second feed circuit is configured to transmit the radio frequency signal of the satellite communication frequency band, where a first direction pattern generated by the first antenna is different from a second direction pattern generated by the second antenna, and the electronic device performs satellite communication on the satellite communication frequency band through at least one of the first antenna or the second antenna.

According to this embodiment of this application, because the first radiator is located on a short edge (for example, a top edge) of the electronic device, and the second radiator is located on a side edge of the electronic device, the first antenna may generate good radiation in a top direction, and has a good radiation characteristic. The second antenna may be configured to improve radiation of the electronic device in an upper hemispherical area. For example, the second antenna may be configured to enhance radiation of the electronic device in the top direction toward a side on which the second radiator is located, and the electronic device may have a good communication characteristic within a larger angle range relative to the top direction. The upper hemispherical area may be understood as an area within an angle less than or equal to 90° relative to the top direction. In a coordinate system, the upper hemispherical area may be understood as an area that faces a positive direction of a z direction and that is on an xoy plane.

With reference to the first aspect, in some implementations of the first aspect, the first side frame has a first insulation slot and a second insulation slot respectively at the first position and the second position.

According to this embodiment of this application, a resonance generated by the first radiator is generated in a wire DM mode. For a direction pattern generated in the wire DM mode, because there is no strong current flowing to the ground plane, a small quantity of currents are excited on the ground plane, and impact of the ground plane on the direction pattern generated in the wire DM mode is similar to that of a reflector. In this way, the direction pattern generated in the wire DM mode mainly faces the top direction of the electronic device (a direction in which the first radiator is away from the ground plane, for example, the z direction). However, for a direction pattern generated in a wire CM mode, because a current flowing to the ground plane in the wire CM mode is strong, a large quantity of currents are excited on the ground plane, and the ground plane has large impact on a direction pattern generated by an antenna. In this way, the direction pattern generated in the wire CM mode does not mainly face the top direction of the electronic device (the direction in which the first radiator 310 is away from the ground plane, for example, the z direction).

In addition, in the satellite communication frequency band, efficiency (for example, radiation efficiency) of an antenna that generates a resonance in the wire DM mode may meet a satellite communication requirement. For example, when the first radiator extends in a straight line, under an action of a co-directional current, both a conductor loss and a dielectric loss are smaller. In this case, efficiency (for example, radiation efficiency) of the first antenna is higher. However, because currents on the radiator are reverse in direction in the wire CM mode, the loss is greater, and efficiency (for example, radiation efficiency) of the antenna that generates a resonance in the wire CM mode is lower.

With reference to the first aspect, in some implementations of the first aspect, the first antenna further includes a first tuning circuit. The first radiator includes a first connection point, the first tuning circuit is coupled to the first connection point, the first connection point and the first feed point are respectively located on two sides of a first virtual axis of the first radiator, and lengths of the first radiator on two sides of the first virtual axis are the same.

According to this embodiment of this application, the first tuning circuit may be configured to switch a resonance point frequency of a resonance generated by the first antenna, so that an operating frequency band of the first antenna includes different communication frequency bands at different time/in different time periods.

With reference to the first aspect, in some implementations of the first aspect, the first tuning circuit further includes a first switch branch, a second switch branch, and a first switch. The first switch branch and the second switch branch are coupled between the first connection point and the ground plane through the first switch.

According to this embodiment of this application, the first switch branch and the second switch branch may be configured to adjust current distribution on the ground plane, so that the first direction pattern generated by the first antenna is deflected.

With reference to the first aspect, in some implementations of the first aspect, based on coupling between the first connection point and the first switch branch, the first radiator is configured to generate a first resonance; based on coupling between the first connection point and the second switch branch, the first radiator is configured to generate a second resonance; and a resonance frequency band of the first resonance and a resonance frequency band of the second resonance each include the satellite communication frequency band.

According to this embodiment of this application, when the first connection point is coupled to the first switch branch or the second switch branch through the first switch, a resonance frequency band of a resonance generated by the first radiator may include a same satellite communication frequency band.

With reference to the first aspect, in some implementations of the first aspect, the first side frame further includes a first ground point between the first position and the second position, and the first side frame is coupled to the ground plane at the first ground point; based on the coupling between the first connection point and the first switch branch, the first radiator is further configured to generate a third resonance, and there is a first frequency difference between a resonance point frequency of the first resonance and a resonance point frequency of the third resonance; and based on the coupling between the first connection point and the second switch branch, the first radiator is further configured to generate a fourth resonance, there is a second frequency difference between a resonance point frequency of the second resonance and a resonance point frequency of the fourth resonance, and a frequency difference between the second frequency difference and the first frequency difference is greater than or equal to 50 MHz.

According to this embodiment of this application, when the difference between the first frequency difference and the second frequency difference is within the foregoing range, and the first connection point is separately coupled to the first switch branch or the second switch branch, a difference between a current on the ground plane on a first side of a virtual axis and a current on the ground plane on a second side of the virtual axis is greater, so that a difference between the first direction pattern and the second direction pattern is greater (for example, an angle between maximum radiation directions increases), and a width of a radiation beam of the first antenna can be further increased. The first antenna has a wider beam width, so that the first antenna has a better communication characteristic in a wider angle (an angle with the top direction) range.

With reference to the first aspect, in some implementations of the first aspect, based on the coupling between the first connection point and the first switch branch, a current on the ground plane on a first side of the virtual axis is greater than a current on the ground plane on a second side of the virtual axis; and based on the coupling between the first connection point and the second switch branch, the current on the ground plane on the first side of the virtual axis is less than the current on the ground plane on the second side of the virtual axis.

With reference to the first aspect, in some implementations of the first aspect, a length of the first side frame between the first feed point and the third position is less than a length of the first side frame between the first connection point and the third position.

According to this embodiment of this application, the first feed point may be located on a side close to the second antenna. In an embodiment, the first feed circuit and the second feed circuit may be generated by different radio frequency channels of a same radio frequency chip. When the first feed point is close to the second feed point, a current transmission path from the radio frequency chip to the first feed point and the second feed point is short, so that a loss caused by line transmission can be reduced, and a radiation characteristic of the antenna can be improved.

In addition, because an area near a feed point usually has a strong current, when the first feed point may be located on a side close to the second antenna, a current on the ground plane on the second side of the virtual axis may be more easily enhanced. In this way, a maximum radiation direction of a direction pattern generated by the first antenna is deflected toward a side away from the second antenna, so that a difference between the direction patterns generated by the first antenna and the second antenna is larger. In this way, the electronic device has a good communication characteristic in a wider angle (an angle with the top direction) range.

With reference to the first aspect, in some implementations of the first aspect, the first side frame further includes a first ground point between the first position and the second position, and the first side frame is coupled to the ground plane at the first ground point. The first radiator is configured to generate a first resonance and a second resonance, and a resonance point frequency of the second resonance is lower than a resonance point frequency of the first resonance. A ratio of the resonance point frequency of the first resonance to the resonance point frequency of the second resonance is less than or equal to 1.3; and a center frequency of the satellite communication frequency band is greater than the resonance point frequency of the second resonance, and is less than a resonance frequency of the first resonance.

According to this embodiment of this application, on the first frequency band (or the second frequency band), the first antenna may operate in a hybrid mode of the wire CM mode and the wire DM mode, and radiation is jointly generated in the wire CM mode and the wire DM mode. The first antenna has both a part of radiation characteristics of the wire CM mode and a part of radiation characteristics of the wire DM mode.

With reference to the first aspect, in some implementations of the first aspect, a length of the first radiator between the first ground point and the first position is greater than or equal to one quarter of a length of the first radiator, and a length of the first radiator between the first ground point and the second position is greater than or equal to one quarter of the length of the first radiator.

According to this embodiment of this application, the first ground point may be disposed in an area close to a center of the first radiator, so as to better excite the first radiator to generate the wire CM mode and the wire DM mode. In addition, when the first ground point may be disposed in the area close to the center of the first radiator, it is more convenient to adjust a frequency difference between resonances generated in the wire CM mode and the wire DM mode, so that the first antenna has a better radiation characteristic.

With reference to the first aspect, in some implementations of the first aspect, the first antenna further includes a first element, the first radiator includes a second connection point and a third connection point, the first radiator has a third insulation slot between the second connection point and the third connection point, and the first element is coupled between the second connection point and the third connection point. The first side frame has a first insulation slot at the first position, and the first side frame is coupled to the ground plane at the second position; or the first side frame is coupled to the ground plane at the first position, and the first side frame has a second insulation slot at the second position.

According to this embodiment of this application, the first radiator is a structure in which one end is a ground end and the other end is an open end. In addition, the third insulation slot of the first radiator may be considered as an equivalent capacitor (for example, a distributed capacitor) disposed on the first radiator, and the equivalent capacitor may enable the first radiator to form a metamaterial (metamaterial, meta) structure. The first radiator having the metamaterial structure can increase a radiation aperture, and after the fifth insulation slot is provided, electric fields are more dispersed. In an embodiment, a dielectric loss near the first radiator that forms the metamaterial structure is reduced. Therefore, a radiation characteristic (for example, total efficiency and radiation efficiency) of the first antenna can be effectively improved.

In addition, an equivalent capacitance value of the fifth insulation slot may be adjusted through the first element coupled between the first connection point and the second connection point, so as to adjust the radiation characteristic (for example, the resonance point frequency of the first resonance generated by the first radiator) of the first antenna.

With reference to the first aspect, in some implementations of the first aspect, based on the first insulation slot of the first side frame at the first position, and coupling between the first side frame and the ground plane at the second position, a length of the first radiator between the second position and the third insulation slot is less than a length of the first radiator between the first position and the third insulation slot; and based on coupling between first side frame and the ground plane at the first position, and the second insulation slot of the first side frame at the second position, the length of the first radiator between the second position and the third insulation slot is greater than the length of the first radiator between the first position and the third insulation slot.

With reference to the first aspect, in some implementations of the first aspect, the first side frame has a fourth insulation slot at the third position, and the first side frame is coupled to the ground plane at the fourth position; or the first side frame is coupled to the ground plane at the third position, and the first side frame has a fifth insulation slot at the fourth position.

According to this embodiment of this application, the second radiator is a structure in which one end is a ground end and the other end is an open end. The second radiator may form a structure similar to an inverted F antenna or a left-handed antenna.

With reference to the first aspect, in some implementations of the first aspect, the second antenna further includes a second element. The second radiator includes a fourth connection point and a fifth connection point, the second radiator has a sixth insulation slot between the fourth connection point and the fifth connection point, and the second element is coupled between the fourth connection point and the fifth connection point. The first side frame has the fourth insulation slot at the third position, and the first side frame is coupled to the ground plane at the fourth position; or the first side frame is coupled to the ground plane at the third position, and the first side frame has the fifth insulation slot at the fourth position.

According to this embodiment of this application, the second radiator is a structure in which one end is a ground end and the other end is an open end. In addition, the sixth insulation slot of the second radiator may be considered as an equivalent capacitor (for example, a distributed capacitor) disposed on the second radiator, and the equivalent capacitor may enable the second radiator to form a metamaterial structure.

With reference to the first aspect, in some implementations of the first aspect, based on the fourth insulation slot of the first side frame at the third position, and coupling between the first side frame and the ground plane at the fourth position, a length of the second radiator between the fourth position and the sixth insulation slot is less than a length of the second radiator between the third position and the sixth insulation slot; and based on coupling between the first side frame and the ground plane at the third position, and a fifth insulation slot of the first side frame at the fourth position, the length of the second radiator between the fourth position and the sixth insulation slot is greater than the length of the second radiator between the third position and the sixth insulation slot.

With reference to the first aspect, in some implementations of the first aspect, the first side frame has a fourth insulation slot and a fifth insulation slot respectively at the third position and the fourth position.

According to this embodiment of this application, a resonance generated by the second radiator is generated in the wire DM mode. For a direction pattern generated in the wire DM mode, because there is no strong current flowing to the ground plane, a small quantity of currents are excited on the ground plane, and impact of the ground plane on the direction pattern generated in the wire DM mode is similar to that of a reflector. In this way, the direction pattern generated in the wire DM mode mainly faces the top direction of the electronic device (a direction in which the first radiator is away from the ground plane, for example, the z direction). However, for a direction pattern generated in a wire CM mode, because a current flowing to the ground plane in the wire CM mode is strong, a large quantity of currents are excited on the ground plane, and the ground plane has large impact on a direction pattern generated by an antenna. In this way, the direction pattern generated in the wire CM mode does not mainly face the top direction of the electronic device (the direction in which the first radiator 310 is away from the ground plane, for example, the z direction).

With reference to the first aspect, in some implementations of the first aspect, the second antenna further includes a second tuning circuit. The second radiator includes a second connection point, the second tuning circuit is coupled to the second connection point, the second connection point and the second feed point are respectively located on two sides of a second virtual axis of the second radiator, and lengths of the second radiator on two sides of the second virtual axis are the same.

According to this embodiment of this application, the second tuning circuit may be configured to switch a resonance point frequency of a resonance generated by the second antenna, so that an operating frequency band of the second antenna includes different communication frequency bands at different time/in different time periods.

With reference to the first aspect, in some implementations of the first aspect, the first side frame further includes a second ground point between the third position and the fourth position, and the first side frame is coupled to the ground plane at the second ground point.

With reference to the first aspect, in some implementations of the first aspect, the second radiator is configured to generate a fifth resonance and a sixth resonance, and a resonance point frequency of the sixth resonance is lower than a resonance point frequency of the fifth resonance. A ratio of the resonance point frequency of the fifth resonance to the resonance point frequency of the sixth resonance is less than or equal to 1.3; and the center frequency of the satellite communication frequency band is less than the resonance point frequency of the fifth resonance, and is greater than a resonance frequency of the sixth resonance.

According to this embodiment of this application, on a first frequency band (or a second frequency band), the second antenna may operate in the hybrid mode of the wire CM mode and the wire DM mode, and radiation is jointly generated in the wire CM mode and the wire DM mode. The second antenna has both a part of radiation characteristics of the wire CM mode and a part of radiation characteristics of the wire DM mode.

With reference to the first aspect, in some implementations of the first aspect, the electronic device further includes a first housing, a second housing, and a first rotating shaft. The first rotating shaft is located between the first housing and the second housing, and the first rotating shaft is rotatably connected to the first housing and the second housing separately. The first housing includes the first side frame.

With reference to the first aspect, in some implementations of the first aspect, a minimum distance between the second radiator and the first radiator in an extension direction of the second edge is greater than or equal to 20 mm and less than or equal to a half of the length of the second edge.

According to this embodiment of this application, the first radiator and/or the second radiator may be located on an upper half part (an area close to the top) of the electronic device, which is more conducive to radiation generated by the first antenna and/or the second antenna in the top direction, so that quality of communication between the electronic device and a communication satellite is good.

With reference to the first aspect, in some implementations of the first aspect, the satellite communication frequency band includes a first frequency band; and the first frequency band includes at least one transmit frequency band in the satellite communication frequency band.

With reference to the first aspect, in some implementations of the first aspect, the satellite communication frequency band includes a first frequency band and a second frequency band, and the second frequency band includes at least one receive frequency band in the satellite communication frequency band.

With reference to the first aspect, in some implementations of the first aspect, at first time, the electronic device performs satellite communication on the first frequency band through the first antenna, and at second time, the electronic device performs satellite communication on the first frequency band through the second antenna; or at the first time, the electronic device performs satellite communication on the first frequency band separately through the first antenna and the second antenna.

With reference to the first aspect, in some implementations of the first aspect, at third time, the electronic device performs satellite communication on the second frequency band through the first antenna, and at fourth time, the electronic device performs satellite communication on the second frequency band through the second antenna; or at the third time, the electronic device performs satellite communication on the second frequency band separately through the first antenna and the second antenna.

With reference to the first aspect, in some implementations of the first aspect, the second antenna is configured to improve a radiation characteristic of the electronic device in an upper hemispherical area. The upper hemispherical area is an area whose angle with a top direction is less than or equal to 90°, and the top direction is a direction that is perpendicular to the first edge and that points from the inside of the electronic device to the first edge.

According to this embodiment of this application, because the first radiator is located on a top edge of the electronic device, and the second radiator is located on a side edge of the electronic device, the first antenna may generate good radiation in the top direction, and has a good radiation characteristic. The second antenna may be configured to improve radiation of the electronic device in the upper hemispherical area. For example, the second antenna may be configured to enhance radiation of the electronic device in the top direction toward a side on which the second radiator is located, and the electronic device may have a good communication characteristic within a larger angle range relative to the top direction.

The upper hemispherical area may be understood as an area within an angle less than or equal to 90° relative to the top direction. In a coordinate system, the upper hemispherical area may be understood as an area that faces a positive direction of a z direction and that is on an xoy plane.

According to a second aspect, an electronic device is provided, including: a ground plane; a first side frame, where the first side frame includes a first position and a second position, the first side frame is coupled to the ground plane or has an insulation slot at the first position, and the first side frame is coupled to the ground plane or has an insulation slot at the second position; a first antenna, where the first antenna includes: a first radiator, where the first radiator includes a conductive part of the first side frame between the first position and the second position, and at least a part of the first radiator is spaced from the ground plane; and a first feed circuit, where the first radiator includes a first feed point, the first feed circuit is coupled to the first feed point, and the first feed circuit is configured to transmit a radio frequency signal of a satellite communication frequency band; and a second antenna, where the second antenna includes: a second radiator, where the second radiator includes a first ground point, the first ground point is coupled to the ground plane, the second radiator is attached to a rear cover of the electronic device, at least a part of the second radiator is spaced from the ground plane; and a second feed circuit, where the second radiator includes a second feed point, the second feed circuit is coupled to the second feed point, and the second feed circuit is configured to transmit the radio frequency signal of the satellite communication frequency band, where the first side frame includes a first edge and a second edge that intersect at an angle, a length of the first edge is less than a length of the second edge, the first position and the second position are located on the first edge, and the third position and the fourth position are located on the second edge; a maximum distance between the first radiator and the second radiator in an extension direction of the second edge is less than or equal to a half of the length of the second edge; and a first direction pattern generated by the first antenna is different from a second direction pattern generated by the second antenna, and the electronic device performs satellite communication on the satellite communication frequency band through at least one of the first antenna or the second antenna.

With reference to the second aspect, in some implementations of the second aspect, the first side frame has a first insulation slot and a second insulation slot respectively at the first position and the second position.

With reference to the second aspect, in some implementations of the second aspect, the first antenna further includes a first tuning circuit. The first radiator includes a first connection point, the first tuning circuit is coupled to the first connection point, the first connection point and the first feed point are respectively located on two sides of a first virtual axis of the first radiator, and lengths of the first radiator on two sides of the first virtual axis are the same.

With reference to the second aspect, in some implementations of the second aspect, the first tuning circuit further includes a first switch branch, a second switch branch, and a first switch. The first switch branch and the second switch branch are coupled between the first connection point and the ground plane through the first switch.

With reference to the second aspect, in some implementations of the second aspect, based on coupling between the first connection point and the first switch branch, the first radiator is configured to generate a first resonance; based on coupling between the first connection point and the second switch branch, the first radiator is configured to generate a second resonance; and a resonance frequency band of the first resonance and a resonance frequency band of the second resonance each include the satellite communication frequency band.

With reference to the second aspect, in some implementations of the second aspect, the first side frame further includes a first ground point between the first position and the second position, and the first side frame is coupled to the ground plane at the first ground point; based on the coupling between the first connection point and the first switch branch, the first radiator is further configured to generate a third resonance, and there is a first frequency difference between a resonance point frequency of the first resonance and a resonance point frequency of the third resonance; and based on the coupling between the first connection point and the second switch branch, the first radiator is further configured to generate a fourth resonance, there is a second frequency difference between a resonance point frequency of the second resonance and a resonance point frequency of the fourth resonance, and a frequency difference between the second frequency difference and the first frequency difference is greater than or equal to 50 MHz.

With reference to the second aspect, in some implementations of the second aspect, based on the coupling between the first connection point and the first switch branch, a current on the ground plane on a first side of the virtual axis is greater than a current on the ground plane on a second side of the virtual axis; and based on the coupling between the first connection point and the second switch branch, the current on the ground plane on the first side of the virtual axis is less than the current on the ground plane on the second side of the virtual axis.

With reference to the second aspect, in some implementations of the second aspect, the first side frame further includes a first ground point between the first position and the second position, and the first side frame is coupled to the ground plane at the first ground point. The first radiator is configured to generate a first resonance and a second resonance, and a resonance point frequency of the second resonance is lower than a resonance point frequency of the first resonance. A ratio of the resonance point frequency of the first resonance to the resonance point frequency of the second resonance is less than or equal to 1.3; and a center frequency of the satellite communication frequency band is greater than the resonance point frequency of the second resonance, and is less than a resonance frequency of the first resonance.

With reference to the second aspect, in some implementations of the second aspect, a length of the first radiator between the first ground point and the first position is greater than or equal to one quarter of a length of the first radiator, and a length of the first radiator between the first ground point and the second position is greater than or equal to one quarter of the length of the first radiator.

With reference to the second aspect, in some implementations of the second aspect, the first side frame has a first insulation slot at the first position, and the first side frame is coupled to the ground plane at the second position. The first antenna further includes a first element, the first radiator includes a second connection point and a third connection point, the first radiator has a third insulation slot between the second connection point and the third connection point, and the first element is coupled between the second connection point and the third connection point.

With reference to the second aspect, in some implementations of the second aspect, a length of the first radiator between the second position and the third insulation slot is less than a length of the first radiator between the first position and the third insulation slot.

With reference to the second aspect, in some implementations of the second aspect, the first side frame has a first insulation slot at the first position, and the first side frame is coupled to the ground plane at the second position. The first antenna further includes a first element, the first radiator includes a second connection point and a third connection point, the first radiator has a third insulation slot between the second connection point and the third connection point, and the first element is coupled between the second connection point and the third connection point.

With reference to the second aspect, in some implementations of the second aspect, the second radiator further includes a second ground point, and the second ground point is coupled to the ground plane. The second radiator includes a first center line, the second feed point and a center of the second radiator are located on the first center line, the first center line divides the second radiator into a first part and a second part, the first ground point is located on the first part, and the second ground point is located on the second part.

With reference to the second aspect, in some implementations of the second aspect, the second radiator is in a ring shape.

With reference to the second aspect, in some implementations of the second aspect, the second radiator is configured to generate a third resonance and a fourth resonance, a resonance point frequency of the fourth resonance is higher than a resonance point frequency of the third resonance, and a ratio of the resonance point frequency of the fourth resonance to the resonance point frequency of the third resonance is less than or equal to 1.3.

With reference to the second aspect, in some implementations of the second aspect, the center frequency of the satellite communication frequency band is less than the resonance point frequency of the second resonance, and is greater than the resonance point frequency of the first resonance.

With reference to the second aspect, in some implementations of the second aspect, the second radiator is in a ring shape; at a resonance point of the third resonance, currents on the second radiator on two sides of the first ground point are reverse in direction, currents on the second radiator on two sides of the second ground point are reverse in direction, and currents on the second radiator between the first ground point and the second ground point are reverse in direction; and at a resonance point of the fourth resonance, the currents on the second radiator on the two sides of the first ground point are co-directional, the currents on the second radiator on the two sides of the second ground point are co-directional, and the currents on the second radiator between the first ground point and the second ground point are reverse in direction.

With reference to the second aspect, in some implementations of the second aspect, the second radiator further includes a third connection point, and an angle between the third connection point and the second feed point relative to the center of the second radiator is less than or equal to 180° and greater than or equal to 45°; and the second antenna further includes a second element, and the second element is coupled between the third connection point and the ground plane.

With reference to the second aspect, in some implementations of the second aspect, the second antenna further includes a first switch and a third element, the first switch is coupled between the third connection point and the ground plane, and the second element and the third element are connected in parallel between the first switch and the third connection point or between the first switch and the ground plane.

With reference to the second aspect, in some implementations of the second aspect, a distance between the first feed point and the second feed point is less than or equal to 20 mm.

With reference to the second aspect, in some implementations of the second aspect, the satellite communication frequency band includes a first frequency band; and the first frequency band includes at least one transmit frequency band in the satellite communication frequency band.

With reference to the second aspect, in some implementations of the second aspect, the satellite communication frequency band includes a first frequency band and a second frequency band; and the second frequency band includes at least one receive frequency band in the satellite communication frequency band.

With reference to the second aspect, in some implementations of the second aspect, at first time, the electronic device performs satellite communication on the first frequency band through the first antenna, and at second time, the electronic device performs satellite communication on the first frequency band through the second antenna; or at the first time, the electronic device performs satellite communication on the first frequency band separately through the first antenna and the second antenna.

With reference to the second aspect, in some implementations of the second aspect, at third time, the electronic device performs satellite communication on the second frequency band through the first antenna, and at fourth time, the electronic device performs satellite communication on the second frequency band through the second antenna; or at the third time, the electronic device performs satellite communication on the second frequency band separately through the first antenna and the second antenna.

According to a third aspect, an electronic device is provided, including: a ground plane; a first side frame, where the first side frame includes a first position, a second position, a third position, and a fourth position that are sequentially disposed, the first side frame is coupled to the ground plane or has an insulation slot at the first position, the first side frame is coupled to the ground plane or has an insulation slot at the second position, the first side frame is coupled to the ground plane or has an insulation slot at the third position, the first side frame is coupled to the ground plane or has an insulation slot at the fourth position, and the first side frame includes a first edge and a second edge that intersect at an angle, a length of the first edge is less than a length of the second edge, and the second position and the third position are located on the first edge; a first antenna, where the first antenna includes: a first radiator, where the first radiator includes a conductive part of the first side frame between the first position and the second position, and at least a part of the first radiator is spaced from the ground plane; and a first feed circuit, where the first radiator includes a first feed point, the first feed circuit is coupled to the first feed point, and the first feed circuit is configured to transmit a radio frequency signal of a satellite communication frequency band; and a second antenna, where the second antenna includes: a second radiator, where the second radiator includes a conductive part of the first side frame between the third position and the fourth position, and at least a part of the second radiator is spaced from the ground plane; and a second feed circuit, where the second radiator includes a second feed point, the second feed circuit is coupled to the second feed point, and the second feed circuit is configured to transmit the radio frequency signal of the satellite communication frequency band, where a first direction pattern generated by the first antenna is different from a second direction pattern generated by the second antenna, and the electronic device performs satellite communication on the satellite communication frequency band through at least one of the first antenna or the second antenna.

With reference to the third aspect, in some implementations of the third aspect, the first position is located on the first edge, and the second position coincides with the third position; and the first side frame has a first insulation slot and a second insulation slot respectively at the first position and the second position.

With reference to the third aspect, in some implementations of the third aspect, the first position is located on the second edge; and the first side frame has a first insulation slot and a second insulation slot respectively at the first position and the second position.

With reference to the third aspect, in some implementations of the third aspect, the first antenna further includes a first tuning circuit. The first radiator includes a first connection point, the first tuning circuit is coupled to the first connection point, the first connection point and the first feed point are respectively located on two sides of a first virtual axis of the first radiator, and lengths of the first radiator on two sides of the first virtual axis are the same.

With reference to the third aspect, in some implementations of the third aspect, the first tuning circuit further includes a first switch branch, a second switch branch, and a first switch. The first switch branch and the second switch branch are coupled between the first connection point and the ground plane through the first switch.

With reference to the third aspect, in some implementations of the third aspect, based on coupling between the first connection point and the first switch branch, the first radiator is configured to generate a first resonance; based on coupling between the first connection point and the second switch branch, the first radiator is configured to generate a second resonance; and a resonance frequency band of the first resonance and a resonance frequency band of the second resonance each include the satellite communication frequency band.

With reference to the third aspect, in some implementations of the third aspect, the first side frame further includes a first ground point between the first position and the second position, and the first side frame is coupled to the ground plane at the first ground point; based on the coupling between the first connection point and the first switch branch, the first radiator is further configured to generate a third resonance, and there is a first frequency difference between a resonance point frequency of the first resonance and a resonance point frequency of the third resonance; and based on the coupling between the first connection point and the second switch branch, the first radiator is further configured to generate a fourth resonance, there is a second frequency difference between a resonance point frequency of the second resonance and a resonance point frequency of the fourth resonance, and a frequency difference between the second frequency difference and the first frequency difference is greater than or equal to 50 MHz.

With reference to the third aspect, in some implementations of the third aspect, based on the coupling between the first connection point and the first switch branch, a current on the ground plane on a first side of the virtual axis is greater than a current on the ground plane on a second side of the virtual axis; and based on the coupling between the first connection point and the second switch branch, the current on the ground plane on the first side of the virtual axis is less than the current on the ground plane on the second side of the virtual axis.

With reference to the third aspect, in some implementations of the third aspect, the first radiator further includes a first ground point, and the first ground point is coupled to the ground plane.

With reference to the third aspect, in some implementations of the third aspect, the first position is located on the first edge, and a distance between the first position and the second edge in an extension direction of the first edge is less than or equal to 10 mm; and the first side frame is coupled to the ground plane at the first position, and the first side frame has a second insulation slot at the second position.

With reference to the third aspect, in some implementations of the third aspect, the second edge further includes a fifth position and a sixth position, the first side frame is coupled to the ground plane or has an insulation slot at the fifth position, and the first side frame is coupled to the ground plane or has an insulation slot at the sixth position. The first antenna further includes a first parasitic stub, the first parasitic stub includes a conductive part of the first side frame between the fifth position and the sixth position, and at least a part of the first parasitic stub is spaced from the ground plane. The first radiator is configured to generate a first main resonance, the first parasitic stub is configured to generate a first parasitic resonance, a resonance point of the first parasitic resonance is located on a resonance frequency band of the first main resonance, the first main resonance and the first parasitic resonance jointly form a first resonance, and a resonance frequency band of the first resonance includes the satellite communication frequency band.

With reference to the third aspect, in some implementations of the third aspect, the first side frame further includes a third edge that intersects with the first edge at an angle. The fourth position is located on the third edge, and the first side frame has a third insulation slot and a fourth insulation slot respectively at the third position and the fourth position.

With reference to the third aspect, in some implementations of the third aspect, the second radiator further includes a second ground point, and the second ground point is coupled to the ground plane.

With reference to the third aspect, in some implementations of the third aspect, the first side frame further includes a third edge that intersects with the first edge at an angle; a distance between the fourth position and the first edge and a distance between the fourth position and the third edge in the extension direction of the first edge are less than or equal to 10 mm; and the first side frame is coupled to the ground plane at the fourth position, and the first side frame has a third insulation slot at the third position.

With reference to the third aspect, in some implementations of the third aspect, the third edge further includes a seventh position and an eighth position, the first side frame is coupled to the ground plane or has an insulation slot at the seventh position, and the first side frame is coupled to the ground plane or has an insulation slot at the eighth position. The second antenna further includes a second parasitic stub, the second parasitic stub includes a conductive part of the first side frame between the seventh position and the eighth position, and at least a part of the second parasitic stub is spaced from the ground plane. The second radiator is configured to generate a second main resonance, the second parasitic stub is configured to generate a second parasitic resonance, a resonance point of the second parasitic resonance is located on a resonance frequency band of the second main resonance, the second main resonance and the second parasitic resonance jointly form a second resonance, and a resonance frequency band of the second resonance includes the satellite communication frequency band.

With reference to the third aspect, in some implementations of the third aspect, the first position and the fourth position are located on the first edge. The electronic device further includes a first element, the second position coincides with the third position, and the first element is coupled between the second position and the ground plane; and the first side frame has a first insulation slot and a fourth insulation slot respectively at the first position and the fourth position.

With reference to the third aspect, in some implementations of the third aspect, the satellite communication frequency band includes a first frequency band; and the first frequency band includes at least one transmit frequency band in the satellite communication frequency band.

With reference to the third aspect, in some implementations of the third aspect, the satellite communication frequency band includes a first frequency band and a second frequency band, and the second frequency band includes at least one receive frequency band in the satellite communication frequency band.

With reference to the third aspect, in some implementations of the third aspect, at first time, the electronic device performs satellite communication on the first frequency band through the first antenna, and at second time, the electronic device performs satellite communication on the first frequency band through the second antenna; or at the first time, the electronic device performs satellite communication on the first frequency band separately through the first antenna and the second antenna.

With reference to the third aspect, in some implementations of the third aspect, at third time, the electronic device performs satellite communication on the second frequency band through the first antenna, and at fourth time, the electronic device performs satellite communication on the second frequency band through the second antenna; or at the third time, the electronic device performs satellite communication on the second frequency band separately through the first antenna and the second antenna. With reference to the third aspect, in some implementations of the third aspect, the first side frame is coupled to the ground plane at the first position and the fourth position, and the first side frame has the second insulation slot and the third insulation slot respectively at the second position and the third position; or the first side frame has the first insulation slot and the fourth insulation slot respectively at the first position and the fourth position, and the first side frame is coupled to the ground plane at the second position and the third position; or the first side frame has the first insulation slot, the second insulation slot, the third insulation slot, and the fourth slot respectively at the first position, the second position, the third position, and the fourth position.

According to a fourth aspect, an electronic device is provided, including a first housing, a second housing, and a ground plane, where the first housing includes a first side frame, and the second housing includes a second side frame; the first side frame includes a first position and a second position, the first side frame is coupled to the ground plane or has an insulation slot at the first position, and the first side frame is coupled to the ground plane or has an insulation slot at the second position; and the second side frame includes a third position and a fourth position, the second side frame is coupled to the ground plane or has an insulation slot at the third position, and the second side frame is coupled to the ground plane or has an insulation slot at the fourth position; a first rotating shaft, where the first rotating shaft is located between the first housing and the second housing, and the first rotating shaft is rotatably connected to the first housing and the second housing separately; a first antenna, where the first antenna includes: a first radiator, where the first radiator includes a conductive part of the first side frame between the first position and the second position, and at least a part of the first radiator is spaced from the ground plane; and a first feed circuit, where the first radiator includes a first feed point, the first feed circuit is coupled to the first feed point, and the first feed circuit is configured to transmit a radio frequency signal of a satellite communication frequency band; and a second antenna, where the second antenna includes: a second radiator, where the second radiator includes a conductive part of the second side frame between the third position and the fourth position, and at least a part of the second radiator is spaced from the ground plane; and a second feed circuit, where the second radiator includes a second feed point, the second feed circuit is coupled to the second feed point, and the second feed circuit is configured to transmit the radio frequency signal of the satellite communication frequency band. The first side frame includes a first edge, the second side frame includes a third edge, and when the electronic device in an unfolded state, the first edge and the third edge are top edges or bottom edges of the electronic device, the first position is located on the first edge, and the third position is located on the third edge. A first direction pattern generated by the first antenna is different from a second direction pattern generated by the second antenna, and the electronic device performs satellite communication on the satellite communication frequency band through at least one of the first antenna or the second antenna.

With reference to the fourth aspect, in some implementations of the fourth aspect, the first side frame has a first insulation slot and a second insulation slot respectively at the first position and the second position.

With reference to the fourth aspect, in some implementations of the fourth aspect, the first antenna further includes a first tuning circuit. The first radiator includes a first connection point, the first tuning circuit is coupled to the first connection point, the first connection point and the first feed point are respectively located on two sides of a first virtual axis of the first radiator, and lengths of the first radiator on two sides of the first virtual axis are the same.

With reference to the fourth aspect, in some implementations of the fourth aspect, the first tuning circuit further includes a first switch branch, a second switch branch, and a first switch. The first switch branch and the second switch branch are coupled between the first connection point and the ground plane through the first switch.

With reference to the fourth aspect, in some implementations of the fourth aspect, based on coupling between the first connection point and the first switch branch, the first radiator is configured to generate a first resonance; based on coupling between the first connection point and the second switch branch, the first radiator is configured to generate a second resonance; and a resonance frequency band of the first resonance and a resonance frequency band of the second resonance each include the satellite communication frequency band.

With reference to the fourth aspect, in some implementations of the fourth aspect, the first side frame further includes a first ground point between the first position and the second position, and the first side frame is coupled to the ground plane at the first ground point; based on the coupling between the first connection point and the first switch branch, the first radiator is further configured to generate a third resonance, and there is a first frequency difference between a resonance point frequency of the first resonance and a resonance point frequency of the third resonance; and based on the coupling between the first connection point and the second switch branch, the first radiator is further configured to generate a fourth resonance, there is a second frequency difference between a resonance point frequency of the second resonance and a resonance point frequency of the fourth resonance, and a frequency difference between the second frequency difference and the first frequency difference is greater than or equal to 50 MHz.

With reference to the fourth aspect, in some implementations of the fourth aspect, based on the coupling between the first connection point and the first switch branch, a current on the ground plane on a first side of the virtual axis is greater than a current on the ground plane on a second side of the virtual axis; and based on the coupling between the first connection point and the second switch branch, the current on the ground plane on the first side of the virtual axis is less than the current on the ground plane on the second side of the virtual axis.

With reference to the fourth aspect, in some implementations of the fourth aspect, the first side frame further includes a first ground point between the first position and the second position, and the first side frame is coupled to the ground plane at the first ground point. The first radiator is configured to generate a first resonance and a second resonance, and a resonance point frequency of the second resonance is lower than a resonance point frequency of the first resonance. A ratio of the resonance point frequency of the first resonance to the resonance point frequency of the second resonance is less than or equal to 1.3; and a center frequency of the satellite communication frequency band is greater than the resonance point frequency of the second resonance, and is less than a resonance frequency of the first resonance.

With reference to the fourth aspect, in some implementations of the fourth aspect, the first side frame has a first insulation slot at the first position, and the first side frame is coupled to the ground plane at the second position.

With reference to the fourth aspect, in some implementations of the fourth aspect, the first antenna further includes a first element, the first radiator includes a first connection point and a second connection point, the first radiator has a third insulation slot between the first connection point and the second connection point, and the first element is coupled between the first connection point and the second connection point.

With reference to the fourth aspect, in some implementations of the fourth aspect, the second position is located on the first edge.

With reference to the fourth aspect, in some implementations of the fourth aspect, the second side frame has a fourth insulation slot and a fifth insulation slot respectively at the third position and the fourth position.

With reference to the fourth aspect, in some implementations of the fourth aspect, the second side frame further includes a second ground point between the third position and the fourth position, the second side frame is coupled to the ground plane at the second ground point, the second radiator is configured to generate a third resonance and a fourth resonance, and a resonance point frequency of the fourth resonance is lower than a resonance point frequency of the third resonance. A ratio of the resonance point frequency of the third resonance to the resonance point frequency of the fourth resonance is less than or equal to 1.3; and a center frequency of the satellite communication frequency band is less than the resonance point frequency of the third resonance, and is greater than a resonance frequency of the fourth resonance.

With reference to the fourth aspect, in some implementations of the fourth aspect, the second side frame has a fourth insulation slot at the third position, and the second side frame is coupled to the ground plane at the fourth position.

With reference to the fourth aspect, in some implementations of the fourth aspect, the second antenna further includes a second element. The second radiator includes a third connection point and a fourth connection point, the second radiator has a sixth insulation slot between the third connection point and the fourth connection point, and the first element is coupled between the third connection point and the fourth connection point.

With reference to the fourth aspect, in some implementations of the fourth aspect, the fourth position is located on the first edge.

With reference to the fourth aspect, in some implementations of the fourth aspect, the satellite communication frequency band includes a first frequency band; and the first frequency band includes at least one transmit frequency band in the satellite communication frequency band.

With reference to the fourth aspect, in some implementations of the fourth aspect, the satellite communication frequency band includes a first frequency band and a second frequency band, and the second frequency band includes at least one receive frequency band in the satellite communication frequency band.

With reference to the fourth aspect, in some implementations of the fourth aspect, at first time, the electronic device performs satellite communication on the first frequency band through the first antenna, and at second time, the electronic device performs satellite communication on the first frequency band through the second antenna; or at the first time, the electronic device performs satellite communication on the first frequency band separately through the first antenna and the second antenna.

With reference to the fourth aspect, in some implementations of the fourth aspect, at third time, the electronic device performs satellite communication on the second frequency band through the first antenna, and at fourth time, the electronic device performs satellite communication on the second frequency band through the second antenna; or at the third time, the electronic device performs satellite communication on the second frequency band separately through the first antenna and the second antenna.

## BRIEF DESCRIPTION OF DRAWINGS

FIG. 1 is a diagram of an electronic device 100 according to an embodiment of this application;

FIG. 2 is a diagram of a structure of a foldable electronic device 100 according to an embodiment of this application;

FIG. 3 is a diagram of a structure of a foldable electronic device 100 in an outward folded state;

FIG. 4 is a diagram of a structure of a foldable electronic device 100 in a possible unfolded state;

FIG. 5 is a diagram of a structure of a foldable electronic device 100 in a possible folded state;

FIG. 6 is a diagram of a structure of a foldable electronic device 100 in a possible partially-unfolded state;

FIG. 7 is a diagram of a structure of an antenna in a common mode and distribution of corresponding currents and electric fields according to this application;

FIG. 8 is a diagram of a structure of another antenna in a differential mode and distribution of corresponding currents and electric fields according to this application;

FIG. 9 is a diagram of a use scenario of satellite communication according to an embodiment of this application;

FIG. 10 is a diagram of an electronic device 100 according to an embodiment of this application;

FIG. 11 is a diagram of an electronic device 100 according to an embodiment of this application;

FIG. 12 is a diagram of an electronic device 100 according to an embodiment of this application;

FIG. 13 is a diagram of an electronic device 100 according to an embodiment of this application;

FIG. 14 is a diagram of an electronic device 100 according to an embodiment of this application;

FIG. 15 is a diagram of an electronic device 100 according to an embodiment of this application;

FIG. 16 shows simulation results of S parameters of a first antenna 301 and a second antenna 302 in the electronic device 100 shown in FIG. 14;

FIG. 17 shows simulation results of radiation efficiency of a first antenna 301 and a second antenna 302 in the electronic device 100 shown in FIG. 14;

FIG. 18 is a first direction pattern generated by a first antenna 301 in the electronic device 100 shown in FIG. 14;

FIG. 19 is a second direction pattern generated by a second antenna 302 in the electronic device 100 shown in FIG. 14;

FIG. 20(a) to FIG. 20(c) are a diagram of another electronic device 100 according to an embodiment of this application;

FIG. 21 shows simulation results of S parameters of a first antenna 301 and a second antenna 302 in the electronic device 100 shown in FIG. 20(a);

FIG. 22 shows simulation results of radiation efficiency of a first antenna 301 and a second antenna 302 in the electronic device 100 shown in FIG. 20(a);

FIG. 23(a) and FIG. 23(b) are a first direction pattern generated by a first antenna 301 in the electronic device 100 shown in FIG. 20(a);

FIG. 24(a) and FIG. 24(b) are a second direction pattern generated by a second antenna 302 in the electronic device 100 shown in FIG. 20(a);

FIG. 25 is a diagram of another electronic device 100 according to an embodiment of this application;

FIG. 26 is a diagram of an electronic device 100 according to an embodiment of this application;

FIG. 27 is a diagram of an electronic device 100 according to an embodiment of this application;

FIG. 28 is a diagram of an electronic device 100 according to an embodiment of this application;

FIG. 29 is a diagram of a structure of a patch antenna in a common mode, distribution of corresponding currents and electric fields, and a generated direction pattern according to this application;

FIG. 30 is a diagram of a structure of a patch antenna in a differential mode, distribution of corresponding currents and electric fields, and a generated direction pattern according to this application;

FIG. 31 is a diagram of an electronic device 100 according to an embodiment of this application;

FIG. 32 is a diagram of an electronic device 100 according to an embodiment of this application;

FIG. 33 shows simulation results of S parameters of a first antenna 301 and a second antenna 302 in the electronic device 100 shown in FIG. 31;

FIG. 34 shows simulation results of radiation efficiency of a first antenna 301 and a second antenna 302 in the electronic device 100 shown in FIG. 31;

FIG. 35 is a first direction pattern generated by a first antenna 301 in the electronic device 100 shown in FIG. 31;

FIG. 36 is a second direction pattern generated by a second antenna 302 in the electronic device 100 shown in FIG. 31;

FIG. 37 is a diagram of another electronic device 100 according to an embodiment of this application;

FIG. 38 is a diagram of another electronic device 100 according to an embodiment of this application;

FIG. 39 is a diagram of another electronic device 100 according to an embodiment of this application;

FIG. 40 is a diagram of another electronic device 100 according to an embodiment of this application;

FIG. 41 is a diagram of another electronic device 100 according to an embodiment of this application;

FIG. 42 is a diagram of another electronic device 100 according to an embodiment of this application;

FIG. 43 is a diagram of another electronic device 100 according to an embodiment of this application;

FIG. 44 shows simulation results of S parameters of a first antenna 301 and a second antenna 302 in the electronic device 100 shown in FIG. 39;

FIG. 45 shows simulation results of radiation efficiency of a first antenna 301 and a second antenna 302 in the electronic device 100 shown in FIG. 39;

FIG. 46 is a first direction pattern generated by a first antenna 301 in the electronic device 100 shown in FIG. 39;

FIG. 47 is a second direction pattern generated by a second antenna 302 in the electronic device 100 shown in FIG. 39;

FIG. 48 is a diagram of another electronic device 100 according to an embodiment of this application;

FIG. 49 is a diagram of another electronic device 100 according to an embodiment of this application;

FIG. 50 is a diagram of another electronic device 100 according to an embodiment of this application;

FIG. 51 is a diagram of another electronic device 100 according to an embodiment of this application;

FIG. 52 is a diagram of another electronic device 100 according to an embodiment of this application;

FIG. 53 is a diagram of another electronic device 100 according to an embodiment of this application;

FIG. 54 shows simulation results of S parameters of a first antenna 301 and a second antenna 302 in the electronic device 100 shown in FIG. 50;

FIG. 55 shows simulation results of radiation efficiency of a first antenna 301 and a second antenna 302 in the electronic device 100 shown in FIG. 50;

FIG. 56(a) and FIG. 56(b) are a first direction pattern generated by a first antenna 301 in the electronic device 100 shown in FIG. 50;

FIG. 57(a) and FIG. 57(b) are a second direction pattern generated by a second antenna 302 in the electronic device 100 shown in FIG. 50;

FIG. 58 is a diagram of a use scenario of an electronic device 100 according to an embodiment of this application;

FIG. 59 is a diagram of gains of a first antenna and a second antenna in the scenario shown in FIG. 58; and

FIG. 60 is a diagram of simulation of satellite communication performed by an electronic device through a second antenna in the scenario shown in FIG. 58.

## DESCRIPTION OF EMBODIMENTS

The following describes terms that may appear in embodiments of this application.

It should be understood that the term "and/or" used in this specification describes only a same field for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

In this application, "within a range of..." is used, except when it is separately specified that no end value is included, end values at both ends of the range are included by default. For example, within a range from 1 to 5, two values 1 and 5 are included.

Coupling: The coupling may be understood as direct coupling and/or indirect coupling, and a "coupling connection" may be understood as a direct coupling connection and/or an indirect coupling connection. The direct coupling may also be referred to as an "electrical connection", and may be understood as physical contact and electrical conduction of components, or may be understood as a form in which different components in a line structure are connected through a physical line that may transmit a signal, for example, a printed circuit board (printed circuit board, PCB) copper foil or a conducting wire. The "indirect coupling" may be understood as electrical conduction of two conductors through air or without contact. In an embodiment, the indirect coupling may also be referred to as capacitive coupling. For example, signal transmission is implemented by forming an equivalent capacitor through coupling in a gap between two spaced conductive members.

Element/component: The element/component includes at least one of a lumped element/component, and a distributed element/component.

Lumped element/component: The lumped element/component is a general name of all elements whose sizes are far less than a wavelength corresponding to an operating frequency of a circuit. For a signal, a characteristic of the element is always constant at any time, regardless of a frequency. The lumped element/-component may include a lumped capacitor, a lumped inductor, and the like.

Distributed element/component: A difference between the distributed element/component and the lumped element lies in that when a signal passes through an element, a characteristic of each point of the element varies with a signal. In this case, the element cannot be considered as a single body with a constant characteristic, but should be referred to as a distributed element. The distributed element/component may include a distributed capacitor, a distributed inductor, and the like.

Capacitor: The capacitor may be understood as a lumped capacitor and/or a distributed capacitor. The lumped capacitor includes a capacitive component, for example, a capacitive element. The distributed capacitor (or a distributed type capacitor) includes an equivalent capacitor including two conductive members that are spaced from each other by a specific gap.

Inductor: The inductor may be understood as a lumped inductor and/or a distributed inductor. The lumped inductor includes an inductive component, for example, an inductive element. The distributed inductor (or a distributed type inductor) includes an equivalent inductor including a conductive member with a specific length, for example, an equivalent inductor formed by a conductor due to curling or rotation.

Radiator: The radiator is an apparatus configured to receive/send electromagnetic wave radiation in an antenna. In some cases, an "antenna" is understood as a radiator in a narrow sense. The antenna converts guided wave energy from a transmitter into a radio wave, or converts a radio wave into guided wave energy to radiate and receive a radio wave. Modulated high-frequency current energy (or guided wave energy) generated by the transmitter is transmitted to a transmit radiator through a feed line. The radiator converts the energy into specific polarized electromagnetic wave energy and radiates the energy in a required direction. A receive radiator converts specific polarized electromagnetic wave energy from a specific direction of space into modulated high-frequency current energy, and transmits the modulated high-frequency current energy to an input end of a receiver through a feed line.

The radiator may include a conductor with a specific shape and size, for example, a linear radiator or a sheet-like radiator. A specific shape is not limited in this application. In an embodiment, the linear radiator may be referred to as a wire antenna for short. In an embodiment, the linear radiator may be implemented by a conductive side frame, and may also be referred to as a side frame antenna. In an embodiment, the linear radiator may be implemented by a bracketed conductor, and may also be referred to as a bracketed antenna. In an embodiment, a wire diameter (for example, including a thickness and a width) of the linear radiator or a radiator of a wire antenna is far less than a wavelength (for example, a dielectric wavelength) (for example, is less than 1/16 of the wavelength), and a length may be compared with the wavelength (for example, the dielectric wavelength) (for example, the length is approximately 1/8 of the wavelength, or 1/8 to 1/4 of the wavelength, or 1/4 to 1/2 of the wavelength, or greater). Main forms of the wire antenna include a dipole antenna, a half-wave dipole antenna, a monopole antenna, a loop antenna, and an inverted F antenna (Inverted F Antenna, IFA). For example, for the dipole antenna, each dipole antenna usually includes two radiation stubs, and each stub is fed by a feed part from a feed end of the radiation stub. For example, the inverted F antenna (Inverted F Antenna, IFA) may be considered as being obtained by adding a ground path to a monopole antenna. The IFA has a feed point and a ground point, and is referred to as the inverted F antenna because a side view of the IFA is inverted F-shaped. In an embodiment, a sheet-like radiator may include a microstrip antenna, or a patch (patch) antenna, for example, a planar inverted F antenna (Planar Inverted F Antenna, PIFA). In an embodiment, the sheet-like radiator may be implemented by a planar conductor (for example, a conductive sheet or a conductive coating). In an embodiment, the sheet-like radiator may include a conductive sheet, for example, a copper sheet. In an embodiment, the sheet-like radiator may include a conductive coating, for example, silver paste. The sheet-like radiator is in a shape of a circle, a rectangle, a loop, or the like. A specific shape is not limited in this application. A structure of the microstrip antenna generally includes a dielectric substrate, a radiator, and a ground plane, where the dielectric substrate is disposed between the radiator and the ground plane.

The radiator may also include a slot or a slit formed on a conductor, for example, a closed or semi-closed slot or slit formed on a grounded conductor surface. In an embodiment, a radiator with a slot or a slit may be referred to as a slot antenna or a slotted antenna for short. In an embodiment, a radial size (for example, including a width) of the slot or slit of the slot antenna/-slotted antenna is far less than a wavelength (for example, a dielectric wavelength) (for example, is less than 1/16 of the wavelength), and a length size may be compared with the wavelength (for example, the dielectric wavelength) (for example, the length is approximately 1/8 of the wavelength, or 1/8 to 1/4 of the wavelength, or 1/4 to 1/2 of the wavelength, or greater). In an embodiment, a radiator having a closed slot or slit may be referred to as a closed slot antenna for short. In an embodiment, a radiator having a semi-closed slot or slit (for example, an opening is additionally provided on the closed slot or slit) may be referred to as an open slot antenna for short. In some embodiments, the slit is long bar-shaped. In some embodiments, a length of the slit is approximately half the wavelength (for example, the dielectric wavelength). In some embodiments, a length of the slit is approximately an integer multiple of the wavelength (for example, a one-fold dielectric wavelength). In some embodiments, the slit may be used for feeding through a transmission line bridged on one side or two sides of the slit. In this way, a radio frequency electromagnetic field is excited on the slit, and an electromagnetic wave is radiated to space. In an embodiment, a radiator of the slot antenna or the slotted antenna may be implemented by a conductive side frame that is grounded at two ends, and may also be referred to as a side frame antenna. In this embodiment, it may be considered that the slot antenna or the slotted antenna includes a linear radiator, and the linear radiator is spaced from the ground plane and is grounded at two ends of the radiator, to form a closed or semi-closed slot or slit. In an embodiment, the radiator of the slot antenna or the slotted antenna may be implemented by a bracketed conductor that is grounded at two ends, and may also be referred to as a bracketed antenna.

A feed circuit is a circuit configured to receive and/or transmit radio frequency signals. The feed circuit may include a transceiver (transceiver) and a radio frequency front end (RF front end) circuit. In some cases, in a narrow sense, the "feed circuit" is a radio frequency chip (Radio Frequency Integrated Circuit, RFIC), and the RFIC may be considered to include a radio frequency front end circuit (or a radio frequency front end chip) and the transceiver. The feed circuit has a function of converting a radio wave (for example, a radio frequency signal) and a signal (for example, a digital signal). Generally, the feed circuit is considered as a part of radio frequency.

In some embodiments, an electronic device may further include a test base (which is also referred to as a radio frequency base or a radio frequency test base). A coaxial cable may be inserted into the test base, to test a characteristic of the radio frequency front end circuit or the radiator of the antenna through the cable. The radio frequency front end circuit may be considered as a circuit part coupled between the test base and the transceiver.

In some embodiments, the radio frequency front end circuit may be integrated into the radio frequency front end chip of the electronic device, or the radio frequency front end circuit and the transceiver may be integrated into the radio frequency chip of the electronic device.

It should be understood that any two of a first feed circuit/a second feed circuit/, ..., an Nth feed circuit in this application may include a same transceiver. For example, one transmit channel in one transceiver serves as a first feed circuit, and one receive channel serves as a second feed circuit; or a first receive channel in one transceiver serves as a first feed circuit, and a second receive channel serves as a second feed circuit. Any two of the first feed circuit/the second feed circuit/, ..., the Nth feed circuit in this application may further include a same radio frequency front end circuit. For example, a signal is processed through a tuning circuit or an amplifier in the radio frequency front end circuit.

It should be further understood that two of the first feed circuit, the second feed circuit, ..., and the Nth feed circuit in this application usually correspond to two radio frequency test bases of the electronic device.

A matching circuit is a circuit configured to adjust a radiation characteristic of an antenna. In an embodiment, the matching circuit is coupled between the feed circuit and a corresponding radiator. In an embodiment, the matching circuit is coupled between a test base and a radiator. Generally, the matching circuit is a combination of circuits coupled between the radiator and the ground plane. In an embodiment, the matching circuit may include a tuning circuit and/or an element. The tuning circuit may be an element configured to switch a coupling connection of the radiator. The matching circuit has a function of impedance matching and/or frequency tuning. Generally, the matching circuit is considered as a part of the antenna.

Ground structure/feed structure: The ground structure/feed structure may include a connector, for example, a metal spring. The radiator is coupled to the ground plane via the ground structure/coupled to the feed circuit via the feed structure. In some embodiments, the feed structure may include a transmission line/feed line, and the ground structure may include a ground line.

End/point: The "end/point" in a first end/second end/feed end/ground end/feed point/ground point/connection point of a radiator of an antenna cannot be understood in a narrow sense as an endpoint or an end part that is physically disconnected from another radiator, and may also be considered as a point or a section on a continuous radiator. In an embodiment, the "end/point" may include a connection/coupling area that is on the radiator of the antenna and that is coupled to another conductive structure. For example, the feed end/feed point may be a connection/coupling area that is on the radiator of the antenna and that is coupled to a feed structure or a feed circuit (for example, an area opposite to a part of the feed circuit). For another example, the ground end/ground point may be a connection/coupling area (for example, an area opposite to a part of the ground circuit) that is on the radiator of the antenna and that is coupled to the ground structure or the ground circuit.

Open end and closed end: In some embodiments, the open end and the closed end are defined based on whether the open end and the closed end are grounded, for example, the closed end is grounded, and the open end is not grounded. In some embodiments, the open end and the closed end are, for example, relative to another conductor. The closed end is electrically connected to the another conductor, and the open end is not electrically connected to the another conductor. In an embodiment, the open end may also be referred to as a floating end, a free end, an opening end or an open-circuit end. In an embodiment, the closed end may also be referred to as a ground end or a short-circuit end. It should be understood that, in some embodiments, another conductor may be coupled and connected through the open end, to transfer coupling energy (which may be understood as transferring a current).

In some embodiments, the "closed end" may also be understood from a perspective of current distribution. The closed end, the ground end, or the like may be understood as a current strong point on a radiator, or may be understood as an electric field weak point on a radiator. In an embodiment, the closed end is coupled to an electronic component (for example, a capacitor or an inductor), so that a current distribution characteristic of the current strong point/an electric field weak point on the radiator may not be changed. In an embodiment, a slit (for example, a slot filled with an insulation material) at or near the closed end may not change a current distribution characteristic of the current strong point/electric field weak point of the radiator at the slit.

In some embodiments, the "open end" may also be understood from a perspective of current distribution. The open end, the floating end, or the like may be understood as a current weak point on a radiator, or may be understood as an electric field strong point on a radiator. In an embodiment, the open end is coupled to an electronic component (for example a capacitor or an inductor), so that a current distribution characteristic of the current weak point/electric field strong point on the radiator may not be changed.

It should be understood that a radiator end (similar to a radiator at an opening of the open end or the floating end from a perspective of a radiator structure) in a slot is coupled to the electronic component (for example, the capacitor or the inductor), so that the radiator end is a current strong point/an electric field weak point. In this case, it should be understood that the radiator end in the slot is actually a closed end, a ground end, or the like.

A "floating radiator" in embodiments of this application means that the radiator is not directly connected to a feed line/feed stub and/or a ground line/ground stub, but is fed and/or grounded through indirect coupling.

It should be understood that "floating" in the "floating end" and the "floating radiator" does not mean that there is no structure around the radiator to support the radiator. In an embodiment, the floating radiator may be, for example, a radiator provided on an inner surface of an insulation rear cover.

That currents are co-directional/reverse in direction in embodiments of this application should be understood as that directions of main currents on conductors on a same side are co-directional/reverse in direction. For example, when co-directionally distributed currents are excited on a bent conductor or an annular conductor (for example, a current path is also bent or annular), it should be understood that, for example, although directions of main currents excited on conductors on two sides of the annular conductor (for example, on conductors on two sides of a slot in conductors around the slot) are reverse in direction, the main currents still fall within a definition of co-directionally distributed currents in embodiments of this application. In an embodiment, that currents on a conductor are co-directional may mean that the currents on the conductor have no reversal point. In an embodiment, that currents on a conductor are in reverse direction may mean that the currents on the conductor have at least one reversal point. In an embodiment, that currents on two conductors are co-directional may mean that none of the currents on the two conductors has a reversal point and the currents flow in the same direction. In an embodiment, that currents on two conductors are reverse in direction may mean that none of the currents on the two conductors has a reversal point and the currents flow in reverse directions. It may be correspondingly understood that directions of currents on a plurality of conductors are co-directional/reverse in direction.

Resonance frequency: The resonance frequency is also referred to as a resonant frequency. The resonance frequency may have a frequency range, namely, a frequency range in which a resonance occurs. The resonance frequency may be a frequency range in which a return loss is less than -5 dB. A strongest resonance point may be referred to as a resonance point, and a frequency corresponding to the resonance point is a center frequency or a point frequency. A return loss of the center frequency may be less than -10 dB, -15 dB, or less than -20 dB. It should be understood that, unless otherwise specified, an antenna/a radiator generates a "first/-second ... resonance" in this application, where the first resonance should be a fundamental mode resonance generated by the antenna/radiator, or a resonance that is generated by the antenna/radiator and that has a lowest frequency. It should be understood that the antenna or the radiator may generate one or more antenna modes based on a specific design, and one fundamental mode resonance may be correspondingly generated in each antenna mode.

Resonance frequency band: A range of the resonance frequency is the resonance frequency band. A frequency range in which a return loss of a frequency in a resonance is less than -5 dB may be considered as the resonance frequency band.

Communication frequency band/operating frequency band: Regardless of a type of antenna, the antenna constantly operates in a specific frequency range (a frequency bandwidth). For example, an operating frequency band of an antenna supporting a B40 frequency band includes a frequency in a range of 2300 MHz to 2400 MHz. In other words, the operating frequency band of the antenna includes the B40 frequency band. A frequency range that meets a requirement of an indicator may be considered as an operating frequency band of an antenna.

The resonance frequency band and the operating frequency band may be the same, or may partially overlap. In an embodiment, one or more resonance frequency bands of an antenna may cover one or more operating frequency bands of the antenna.

Electrical length: The electrical length may be a ratio of a physical length (namely, a mechanical length or a geometric length) to a wavelength of a transmitted electromagnetic wave, and the electrical length may satisfy the following formula:

$$\overline{L} = \frac{L}{\lambda},$$

where
L is the physical length, and $\lambda$ is the wavelength of the electromagnetic wave.

Wavelength: The wavelength or an operating wavelength may be a wavelength corresponding to a center frequency of a resonance frequency or a center frequency of an operating frequency band supported by an antenna. For example, it is assumed that a center frequency of a B1 uplink frequency band (with a resonance frequency ranging from 1920 MHz to 1980 MHz) is 1955 MHz. In this case, an operating wavelength may be a wavelength calculated based on the frequency of 1955 MHz. The "operating wavelength" is not limited to the center frequency, and may alternatively be a wavelength corresponding to a non-center frequency of the resonance frequency or the operating frequency band.

It should be understood that a wavelength of a radiation signal in air may be calculated as follows: (air wavelength or vacuum wavelength)=speed of light/frequency, where the frequency is a frequency (MHz) of the radiation signal, and the speed of light may be $3 \times 10^8$ m/s.

A wavelength of the radiation signal in a dielectric may be calculated as follows: dielectric wavelength=(speed of

$$\text{wavelength=(speed of light}/\sqrt{\varepsilon})/\text{frequency}$$ ,

where $\varepsilon$ is a relative dielectric constant of the dielectric. The wavelength in embodiments of this application is usually a dielectric wavelength, and may be a dielectric wavelength corresponding to a center frequency of a resonance frequency, or a dielectric wavelength corresponding to a center frequency of an operating frequency band supported by an antenna. For example, it is assumed that a center frequency of a B1 uplink frequency band (with a resonance frequency ranging from 1920 MHz to 1980 MHz) is 1955 MHz. In this case, a wavelength may be a dielectric wavelength calculated based on the frequency of 1955 MHz. The "dielectric wavelength" is not limited to the center frequency, and may alternatively be a dielectric wavelength corresponding to a non-center frequency of the resonance frequency or the operating frequency band. For ease of understanding, the dielectric wavelength mentioned in embodiments of this application may be simply calculated based on a relative dielectric constant of a dielectric filled in one or more sides of a radiator.

Total efficiency (total efficiency) of an antenna: The total efficiency of the antenna is a ratio of input power to output power at an antenna port.

Radiation efficiency (radiation efficiency) of an antenna: The radiation efficiency of the antenna is a ratio of power radiated by the antenna to space (namely, power that is effectively converted into an electromagnetic wave) to active power input to the antenna. Herein, active power input to the antenna=input power of the antenna-loss power. The loss power mainly includes return loss power and metal ohmic loss power and/or dielectric loss power. The radiation efficiency is a value for measuring a radiation capability of the antenna. Both a metal loss and a dielectric loss are factors that affect the radiation efficiency.

A person skilled in the art may understand that efficiency is usually indicated by a percentage, and there is a corresponding conversion relationship between the efficiency and dB. Efficiency closer to 0 dB indicates better efficiency of the antenna.

Antenna return loss: The antenna return loss may be understood as a ratio of power of a signal reflected back to an antenna port through an antenna circuit to transmit power of the antenna port. A smaller reflected signal indicates a larger signal radiated by an antenna to space and higher radiation efficiency of the antenna. A larger reflected signal indicates a smaller signal radiated by the antenna to space and lower radiation efficiency of the antenna.

The antenna return loss may be represented by an S11 parameter, and S11 is one of S parameters. S11 indicates a reflection coefficient, and the parameter can indicate transmit efficiency of the antenna. The S11 parameter is usually a negative number. A smaller S11 parameter indicates a smaller antenna return loss, and less energy reflected back by the antenna, namely, more energy that actually enters the antenna, and higher total efficiency of the antenna. A greater S11 parameter indicates a greater antenna return loss and lower total efficiency of the antenna.

It should be noted that, an S11 value of -6 dB is usually used as a standard in engineering. When an S11 value of the antenna is less than -6 dB, it may be considered that the antenna can operate normally, or it may be considered that transmit efficiency of the antenna is high.

Antenna pattern: The antenna pattern is also referred to as a radiation pattern, is a pattern in which relative field strength (a normalized modulus value) of a radiation field of an antenna changes with a direction at a specific distance from the antenna (a far field), and is usually represented by two plane direction patterns that are perpendicular to each other in a maximum radiation direction of the antenna.

The antenna pattern usually includes a plurality of radiation beams. A radiation beam with highest radiation intensity is referred to as a main lobe, and the other radiation beams are referred to as minor lobes or side lobes. In the minor lobes, a minor lobe in an opposite direction of the main lobe is also referred to as a back lobe.

Beam width: The beam width means that a gain of a direction pattern generated by an antenna is greater than or equal to a threshold within a range of a first angle from a top direction (for example, a y direction) pointing to the electronic device, and the first angle is the beam width. When the first angle is large, for example, greater than or equal to 60°, it may be considered that the antenna has a wide beam characteristic, and the antenna has a good radiation characteristic in the angle range.

Directivity (directivity): The directivity is also referred to as directionality of an antenna. The directivity is a ratio of a maximum power density to an average value in an antenna pattern at a specific distance from the antenna (a far field), is a dimensionless ratio greater than or equal to 1, and may indicate an energy radiation characteristic of the antenna. Higher directivity indicates a larger proportion of energy radiated by the antenna in a direction, and more concentrated energy radiation.

Antenna gain: The antenna gain indicates a degree to which an antenna intensively radiates input power. Usually, a narrower main lobe of the antenna pattern indicates a smaller minor lobe, and a higher antenna gain.

Polarization direction of an antenna: At a given point in space, electric field strength E (a vector) is a function of time t. A vector endpoint periodically depicts a trajectory in space over time. That the trajectory is a straight line and perpendicular to the ground is referred to as vertical polarization. That the trajectory is horizontal to the ground is referred to as horizontal polarization. That the trajectory is an ellipse or a circle and rotates right-handed or clockwise with the time when viewed in a propagation direction is referred to as right-hand circular polarization (right-hand circular polarization, RHCP). That the trajectory is an ellipse or a circle and rotates left-handed or counter-clockwise with the time when viewed in a propagation direction is referred to as left-hand circular polarization (left-hand circular polarization, LHCP).

Ground (ground plane) (ground, GND): The ground (ground plane) may generally be at least a part of any grounding plane, grounding plate, grounding metal layer, or the like in an electronic device (like a mobile phone), or at least a part of any combination of the foregoing grounding plane, grounding plate, ground component, or the like. The "ground/ground plane" may be configured to ground components in the electronic device, or may serve as a reference ground of a component in the electronic device. Generally, a large piece of metal (for example, a metal layer) in the electronic device may serve as a "ground/ground plane". In an embodiment, the "ground/ground plane" may include any one or more of the following: a grounding plane of a circuit board of the electronic device, a grounding plate formed by a middle frame of the electronic device, a grounding metal layer formed by a metal thin film under a screen, a conductive grounding plane of a battery, a metal rotating shaft of a foldable electronic device, a metal rear cover of the electronic device (for example, at least a part of the rear cover is metal), and a conductive member or metal member that is electrically connected to the foregoing grounding plane/grounding plate/metal layer. In an embodiment, the circuit board may be a printed circuit board (printed circuit board, PCB), for example, an 8-layer, 10-layer, 12-layer, a 13-layer, or a 14-layer board with 8, 10, 12, 13, or 14 layers of conductive materials, or an element that is separated and electrically insulated by a dielectric layer or an insulation layer, for example, a glass fiber or a polymer. In an embodiment, the circuit board includes a dielectric substrate, a grounding plane, and a routing layer. The routing layer and the grounding plane are electrically connected through a via. In an embodiment, components such as a display, a touchscreen, an input button, a transmitter, a processor, a memory, a battery, a charging circuit, and a system-on-chip (system-on-chip, SoC) structure may be mounted on or connected to the circuit board, or electrically connected to the routing layer and/or the grounding plane in the circuit board. For example, a radio frequency source is disposed on the routing layer.

Any of the foregoing grounding plane, or grounding plate, or grounding metal layer is made of a conductive material. In an embodiment, the conductive material may be any one of the following materials: copper, aluminum, stainless steel, brass and an alloy thereof, copper foil on an insulation substrate, aluminum foil on the insulation substrate, gold foil on the insulation substrate, silver-plated copper, silver-plated copper foil on the insulation substrate, silver foil on the insulation substrate, tin-plated copper, cloth impregnated with graphite powder, a graphite-coated substrate, a copper-plated substrate, a brass-plated substrate, and an aluminum-plated substrate. A person skilled in the art may understand that the grounding plane/grounding plate/-grounding metal layer may alternatively be made of another conductive material.

Grounding: The grounding means coupling to the ground/ground plane through a ground structure and/or a grounding circuit. In an embodiment, the grounding may be grounding via an entity, for example, grounding via an entity (or referred to as entity grounding) at a specific position on a side frame is implemented via some mechanical parts of a middle frame. In an embodiment, the grounding may be grounding via a component, for example, grounding via a component (or referred to as component grounding) like a capacitor/inductor/resistor connected in series or in parallel.

The following describes technical solutions of embodiments in this application with reference to accompanying drawings.

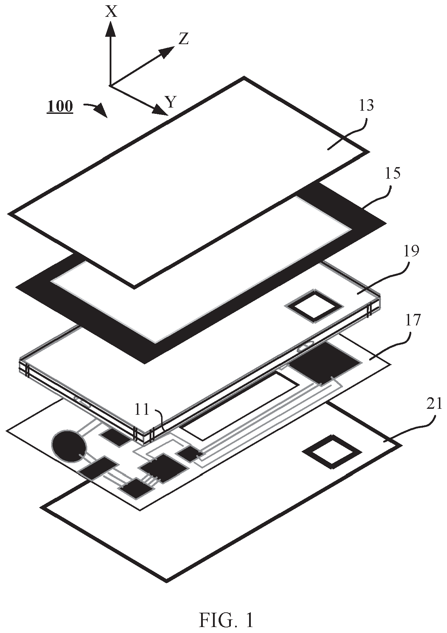

As shown in FIG. 1, an electronic device 100 may include a cover (cover) 13, a display/module (display) 15, a printed circuit board (printed circuit board, PCB) 17, a middle frame (middle frame) 19, and a rear cover (rear cover) 21. It should be understood that, in some embodiments, the cover 13 may be cover glass (cover glass), or may be replaced with a cover made of another material, for example, a cover made of a polyethylene terephthalate (Polyethylene terephthalate, PET) material.

The cover 13 may be tightly attached to the display module 15, and may be mainly configured to protect the display module 15 for dust resistance.

In an embodiment, the display module 15 may include a liquid crystal display (liquid crystal display, LCD) panel, a light-emitting diode (light-emitting diode, LED) display panel, an organic light-emitting semiconductor (organic light-emitting diode, OLED) display panel, or the like. This is not limited in embodiments of this application.

The middle frame 19 is mainly used to support the entire electronic device. FIG. 1 shows that the PCB 17 is disposed between the middle frame 19 and the rear cover 21. It should be understood that, in an embodiment, the PCB 17 may alternatively be disposed between the middle frame 19 and the display module 15. This is not limited in embodiments of this application. The printed circuit board PCB 17 may be a flame-resistant material (FR-4) dielectric board, or may be a Rogers (Rogers) dielectric board, or may be a hybrid dielectric board of Rogers and FR-4, or the like. Herein, FR-4 is a grade designation of a flame-resistant material, and the Rogers dielectric board is a high-frequency board. An element, for example, a radio frequency chip, is carried on the PCB 17. In an embodiment, a metal layer may be disposed on the printed circuit board PCB 17. The metal layer may be configured to ground the element carried on the printed circuit board PCB 17, or may be configured to ground another element, for example, a bracketed antenna or a side frame antenna. The metal layer may be referred to as a ground plane, a grounding plate, or a grounding plane. In an embodiment, the metal layer may be formed by etching metal on a surface of any dielectric board in the PCB 17. In an embodiment, the metal layer configured for grounding may be disposed on a side that is of the printed circuit board PCB 17 that is close to the middle frame 19. In an embodiment, an edge of the printed circuit board PCB 17 may be considered as an edge of the grounding plane of the PCB 17. In an embodiment, the metal middle frame 19 may also be configured to ground the foregoing element. The electronic device 100 may further have another ground plane/grounding plate/grounding plane. As described above, details are not described herein again.

Due to internal compactness of the electronic device, a ground plane/grounding plate/grounding plane (for example, a printed circuit board, a middle frame, a screen metal layer, and a battery may all be considered as a part of the ground plane) is usually disposed in internal space 0 mm to 2 mm away from an inner surface of the side frame. In an embodiment, a dielectric is filled between the side frame and the ground plane. A length and a width of a rectangle enclosed by an inner surface contour of the filled dielectric may be simply considered as a length and a width of the ground plane. Alternatively, a length and a width of a rectangle enclosed by a contour formed by superposing all conductive parts inside the side frame may be considered as a length and a width of the ground plane.

The electronic device 100 may further include a battery (not shown in the figure). The battery may be disposed between the middle frame 19 and the rear cover 21, or may be disposed between the middle frame 19 and the display module 15. This is not limited in embodiments of this application. In some embodiments, the PCB 17 is divided into a mainboard and a subboard. The battery may be disposed between the mainboard and the subboard. The mainboard may be disposed between the middle frame 19 and an upper edge of the battery, and the subboard may be disposed between the middle frame 19 and a lower edge of the battery.

The electronic device 100 may further include a side frame 11. The side frame 11 may be made of a conductive material like metal. The side frame 11 may be disposed between a display module 15 and a rear cover 21, and extend circumferentially around a periphery of the electronic device 100. The side frame 11 may have four side edges surrounding the display module 15, to help fasten the display module 15.

In an implementation, the side frame 11 mainly including a conductive material may be referred to as a conductive side frame or a metal side frame of the electronic device 100, and is applicable to a metal industrial design (industrial design, ID). In an implementation, an outer surface of the side frame 11 is mainly made of a conductive material, for example, a metal material, to form an appearance of a metal side frame. In these implementations, the conductive part that is of the side frame 11 and that includes the outer surface may serve as an antenna radiator of the electronic device 100, and is usually referred to as a side frame antenna.

In another implementation, an outer surface of the side frame 11 is mainly made of a non-conductive material, for example, plastic, to form an appearance of a non-metal side frame, and is applicable to a non-metal ID. In an implementation, an inner surface of the side frame 11 may include a conductive material, for example, a metal material. In this implementation, the conductive part of the inner surface of the side frame 11 may serve as an antenna radiator of the electronic device 100. It should be understood that, the radiator (or the conductive material on the inner surface) disposed on the inner surface of the side frame 11 may be disposed close to the non-conductive material of the side frame 11, to minimize a volume occupied by the radiator, and be closer to the outside of the electronic device 100, thereby implementing better signal transmission effect. The radiator may also be referred to as a side frame antenna. It should be noted that, disposing the antenna radiator close to the non-conductive material of the side frame 11 means that the antenna radiator may be disposed close to an inner surface of the non-conductive material, or may be disposed in the non-conductive material, or may be disposed close to an inner surface of the non-conductive material. For example, there may be a specific small slot between the antenna radiator and the inner surface of the non-conductive material. It should be understood that both the conductive material and the non-conductive material may be considered as a part of the side frame 11.

It should be understood that the side frame 11 may have insulation slots, and a conductor part of the side frame between the insulation slots, and/or between the insulation slot and a ground point serves as a radiator, so as to form a side frame antenna (it should be understood that the radiator of the side frame antenna may also include a conductor part of the side frame between ground points). When the side frame 11 is made of a conductive material such as metal, the insulation slot may be understood as that a slot provided in the side frame 11 is filled with a non-metal material (insulation material). In this case, the slot is visible on an appearance surface. When the outer surface of the side frame 11 is made of a non-conductive material, the insulation slot may be understood as an end part (for example, an end part that is not electrically connected to another radiator or a conductor) of the radiator on the inner surface of the side frame 11, or may be understood as a slot formed between radiators on the inner surface of the side frame 11, and a non-metal material (an insulation material) may be disposed in the slot, or may not be disposed, for example, filled with air. In this case, the slot is invisible on the appearance surface.

In FIG. 1 and subsequent embodiments, an example in which the side frame 11 of the electronic device 100 is a metal side frame (a conductive side frame) and a slit (an insulation slot visible on the appearance surface) visible on the appearance surface is used for description. In this case, the metal side frame serves as at least a part of the antenna radiator. It should be understood that, when the side frame 11 of the electronic device 100 is a non-metal side frame (with a slit invisible on the appearance surface), same technical effect may also be implemented. For brevity of description, details are not described again.

The middle frame 19 may include the side frame 11, and the middle frame 19 including the side frame 11 serves as an integrated part, and may support an electronic component in the entire device. The cover 13 and the rear cover 21 respectively fit upper edges and lower edges of the side frame, to enclose a casing or a housing (housing) of the electronic device. In an embodiment, the cover 13, the rear cover 21, the side frame 11, and/or the middle frame 19 may be collectively referred to as a casing or a housing of the electronic device 100. It should be understood that the "casing or housing" may mean a part or all of any one of the cover 13, the rear cover 21, the side frame 11, and the middle frame 19, or mean a part or all of any combination of the cover 13, the rear cover 21, the side frame 11, and the middle frame 19.

At least a part of the side frame 11 may serve as a radiator of an antenna to transmit/receive a radio frequency signal. A gap may exist between the part of the side frame that serves as the radiator and another part of the middle frame 19, to ensure that the radiator of the antenna has a good radiation environment. In an embodiment, the middle frame 19 may be provided with an aperture at the part of the side frame that serves as the radiator, to facilitate radiation of the antenna.

Alternatively, the side frame 11 may not be considered as a part of the middle frame 19. In an embodiment, the side frame 11 may be connected to and integrally formed with the middle frame 19. In another embodiment, the side frame 11 may include a protruding part extending inward, to be connected to the middle frame 19, for example, connected by using a spring or a screw, or connected through welding. The protruding part of the side frame 11 may be further configured to receive a feed signal, so that at least a part of the side frame 11 serves as a radiator of an antenna to receive/transmit a radio frequency signal. A gap may exist between the middle frame 19 and the part of the side frame that serves as the radiator, to ensure that the radiator of the antenna has a good radiation environment, and the antenna has a good signal transmission function.

The rear cover 21 may be a rear cover made of a metal material, or may be a rear cover made of a non-conductive material, for example, may be a non-metal rear cover like a glass rear cover and a plastic rear cover, or may be a rear cover made of both a conductive material and a non-conductive material. In an embodiment, the rear cover 21 including the conductive material may replace the middle frame 19, and serves as an integrated part with the side frame 11, to support an electronic component in the entire device.

In an embodiment, the middle frame 19 and/or a conductive part of the rear cover 21 may serve as a reference ground of the electronic device 100. The side frame 11, the PCB 17, and the like of the electronic device may be electrically connected to the middle frame for grounding.

The antenna of the electronic device 100 may be further disposed in the casing, for example, a bracketed antenna or a millimeter wave antenna (not shown in FIG. 1). Clearance of the antenna disposed in the housing may be obtained through a slit/hole in any one of the middle frame, and/or the side frame, and/or the rear cover, and/or the display, or through a non-conductive slit/aperture formed between any several of the middle frame, and/or the side frame, and/or the rear cover, and/or the display. The clearance of the antenna may be provided, to ensure a radiation characteristic of the antenna. It should be understood that the clearance of the antenna may be a non-conductive area formed by any conductive component in the electronic device 100, and the antenna radiates a signal to external space through the non-conductive area. In an embodiment, a form of the antenna 40 may be an antenna form based on a flexible mainboard (flexible printed circuit, FPC), an antenna form based on laser-direct-structuring (laser-direct-structuring, LDS), or an antenna form like a microstrip antenna (microstrip disk antenna, MDA). In an embodiment, the antenna may alternatively use a transparent structure embedded into a display of the electronic device 100, so that the antenna is a transparent antenna element embedded into the display of the electronic device 100.

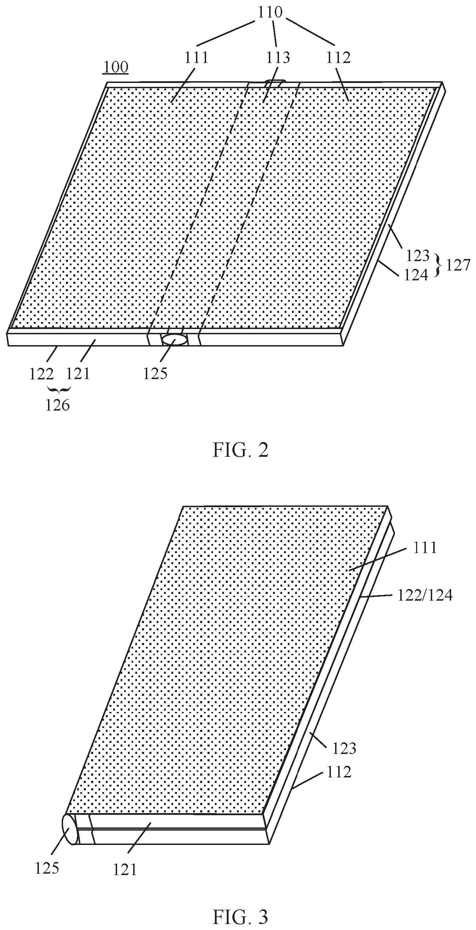

FIG. 2 is a diagram of a structure of a foldable electronic device 100 according to an embodiment of this application. The foldable electronic device 100 may be an electronic device with a folding function, for example, a mobile phone, a tablet computer, an e-reader, a notebook computer, or a wearable device such as a watch. The embodiment shown in FIG. 2 is described by using a foldable mobile phone as an example.

It should be understood that FIG. 1 shows only the electronic device 100 including one housing (for example, the middle frame 19). In actual production or design, the electronic device 100 may alternatively include a plurality of housings to form the foldable electronic device 100.

As shown in FIG. 2, the foldable electronic device 100 may include a flexible display 110 (which may correspond to the display module 15 in FIG. 1), a first side frame 121 (which may correspond to the side frame 11 in FIG. 1), a first cover 122, a second side frame 123 (which may correspond to the side frame 11 in FIG. 1), a second cover 124, and a rotating shaft 125. In some embodiments, the first side frame 121, the first cover 122, the second side frame 123, and the second cover 124 may form a first housing 126 (which may correspond to the middle frame 19 in FIG. 1) and a second housing 127 (which may correspond to the middle frame 19 in FIG. 1) that support the flexible display 110. In some other embodiments, at least one of the first cover 122 and the second cover 124 may include a display.

A lattice pattern filled in FIG. 2 may schematically represent the flexible display 110. The flexible display 110 may have features of strong flexibility and bendability, and may provide a user with a new bendability-based interaction mode.

The flexible display 110 may include a first display part 111 corresponding to the first housing 126, a second display part 112 corresponding to the second housing 127, and a foldable display part 113 corresponding to the rotating shaft 125. The foldable display part 113 may be connected between the first display part 111 and the second display part 112.

The first side frame 121 may surround a periphery of the first cover 122, and at least a part of the first side frame 121 may further surround a periphery of the first display part 111. The first display part 111 and the first cover 122 may be spaced from each other in parallel, and the first display part 111 and the first cover 122 may be located on two sides of the first side frame 121. Space between the first display part 111 and the first cover 122 may be provided with a component of the foldable electronic device 100, for example, an antenna or a circuit board component.

The second side frame 123 may surround a periphery of the second cover 124, and at least a part of the second side frame 123 may further surround a periphery of the second display part 112. The second display part 112 and the second cover 124 may be spaced from each other in parallel, and the second display part 112 and the second cover 124 may be located on two sides of the second side frame 123. Space between the second display part 112 and the second cover 124 may be provided with a component of the foldable electronic device 100, for example, an antenna or a circuit board component.

In an embodiment provided in this application, the cover and the side frame may be two parts of the housing of the foldable electronic device 100. The cover and the side frame may be connected to each other, and a form of the connection may not belong to an assembly manner such as clamping, bonding, welding, riveting, or clearance fit. A connection relationship between the cover and the side frame is usually difficult to divide. In another embodiment provided in this application, the cover and the side frame may be two different parts. The housing of the foldable electronic device 100 may be formed by assembling the cover and the side frame.

The rotating shaft 125 may be connected between the first housing 126 and the second housing 127. Under an action of the rotating shaft 125, the first housing 126 and the second housing 127 may be close to or away from each other. Correspondingly, the first display part 111 of the flexible display 110 and the second display part 112 of the flexible display 110 may be close to or away from each other, so that the flexible display 110 may be folded or unfolded.

In an example, the rotating shaft 125 may include, for example, a main shaft, a first connection component, and a second connection component. The first connection component may be fastened to the first cover 122, the second connection component may be fastened to the second cover 124, and the first connection component and the second connection component may rotate relative to the main shaft. Mutual movement between the first connection component and the second connection component may drive mutual movement between the first housing 126 and the second housing 127, to implement folding and unfolding functions of the foldable electronic device 100.

The foldable electronic device 100 shown in FIG. 2 is currently in a possible unfolded state. In this unfolded state, an angle between the first housing 126 and the second housing 127 may be 180°, or may be referred to as a flattened state. The flexible display 110 may be in the flattened state shown in FIG. 2.

That the flexible display 110 is in the flattened state may be understood as that an angle between the first display part 111 corresponding to the first housing 126 and the second display part 112 corresponding to the second housing 127 is 180. Because there may be a specific error in engineering implementation, when the angle between the first display part 111 and the second display part 112 is between 170° and 190°, it may be considered that the flexible display 110 is in the flattened state.

FIG. 3 shows a possible folded state of the foldable electronic device 100. FIG. 3 shows an outward folded state (the outward folded state may be referred to as an outward-folded state for short) of the foldable electronic device 100. The outward folded state shown in FIG. 3 may be, for example, a left-right outward folded state or a top-down outward folded state. With reference to FIG. 2 and FIG. 3, the following describes a possible folded state of the foldable electronic device 100.

In this embodiment of this application, that the foldable electronic device 100 is in a folded state may mean that the foldable electronic device 100 is currently bent, and the foldable electronic device 100 reaches a maximum bending degree. In this case, the first cover 122 and the second cover 124 may be approximately parallel to each other, spaced from each other, or provided face to face. In addition, a spacing distance between the first cover 122 and the second cover 124 is minimal, and at least a part of the first housing 126 and at least a part of the second housing 127 are accommodated in space enclosed by the flexible display 110. The first display part 111, the first housing 126, the second housing 127, and the second display part 112 are sequentially stacked. Similarly, the first display part 111 and the second display part 112 may be approximately parallel to each other, and are spaced from each other. A spacing distance between the first cover 122 and the second cover 124 is less than a spacing distance between the first display part 111 and the second display part 112. In this case, the first display part 111 and the second display part 112 may be considered to be located on different planes.

With reference to FIG. 2 and FIG. 3, when the foldable electronic device 100 is in the outward folded state, the first cover 122 and the second cover 124 may be close to each other, and the first display part 111 and the second display part 112 may be close to each other. The first display part 111, the second display part 112, and the foldable display part 113 may form a housing area used to accommodate the first cover 122, the second cover 124, and the rotating shaft 125. That is, the first cover 122, the second cover 124, and the rotating shaft 125 may be accommodated in space between the first display part 111 and the second display part 112.

It should be understood that the foldable electronic device 100 may be folded inward (the inward folded state may be referred to as an inward-folded state for short). When the foldable electronic device 100 is in the inward folded state, the first cover 122 and the second cover 124 may be close to each other, and the first display part 111 and the second display part 112 may be close to each other. The first cover 122, the second cover 124, and the rotating shaft 125 may form a housing area used to accommodate the first display part 111, the second display part 112, and the foldable display part 113. In other words, the first display part 111, the second display part 112, and the foldable display part 113 may be accommodated in space between the first cover 122 and the second cover 124.

The foldable electronic device 100 may be switched between a folded state and an unfolded state. When the foldable electronic device 100 is in the folded state, space occupied by the foldable electronic device 100 is small. When the foldable electronic device 100 is in the unfolded state, the foldable electronic device 100 may display a large screen, to increase a viewing range of a user. It should be understood that the folded state includes a closed state, and in this case, the foldable electronic device 100 occupies minimum space. The unfolded state includes a flattened state, and in this case, the foldable electronic device 100 occupies maximum space.

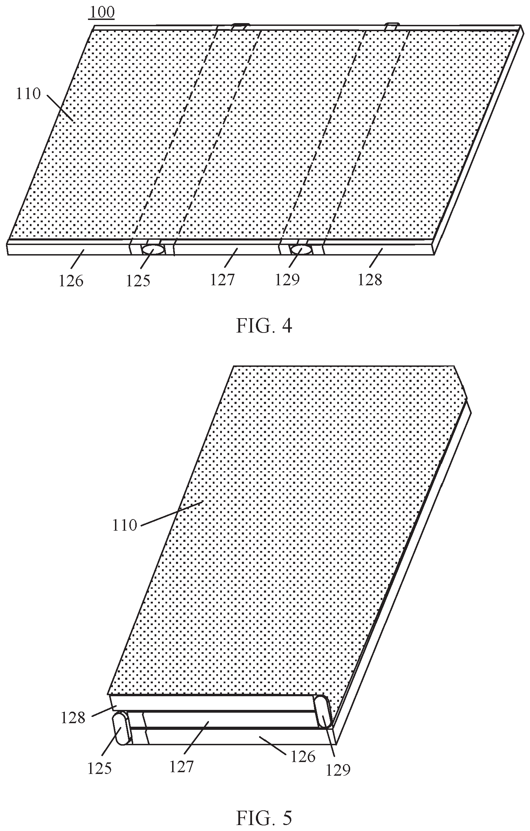

The foldable electronic device 100 may further include a third housing 128 and a rotating shaft 129, as shown in FIG. 4. The rotating shaft 129 may be connected between the third housing 128 and the second housing 127. The third housing 128 and the second housing 127 may be close to or away from each other. As a quantity of foldable parts of the foldable electronic device 100 increases, in a case in which a same screen size is maintained in the unfolded state, space occupied by the foldable electronic device 100 may be further reduced in the folded state.

However, the foldable electronic device 100 shown in FIG. 4 has three foldable parts (the first housing 126, the second housing 127, and the third housing 128). Therefore, the foldable electronic device 100 has at least three forms: 1, an unfolded state. 2, a folded state, and 3, a partially-unfolded state.

1. FIG. 4 shows a possible unfolded state of the foldable electronic device 100. In the unfolded state, angles among the first housing 126, the second housing 127, and the third housing 128 may be approximately 180°. The flexible display 110 may be in the unfolded state.
2. FIG. 5 shows a possible folded state (a triple-fold state) of the foldable electronic device 100. In the folded state, the first housing 126 and the second housing 127 rotate along the rotating shaft 125, and the second housing 127 and the third housing 128 rotate along the rotating shaft 129, so that the foldable electronic device 100 reaches a maximum bending degree. In this case, the first housing 126, the second housing 127, and the third housing 128 may be considered to be located on different planes.

It should be understood that, for brief description, in the structure shown in FIG. 5, the foldable electronic device 100 is in an S-folded state (a side surface of the foldable electronic device 100 is S-shaped, and the second housing 127 is located between the first housing 126 and the third housing 128). In an embodiment, the foldable electronic device 100 may alternatively be in a G-folded state (a side surface of the foldable electronic device 100 is G-shaped, and the third housing 128 is located between the first housing 126 and the second housing 127). The folded state of the foldable electronic device 100 is not limited in embodiments of this application.

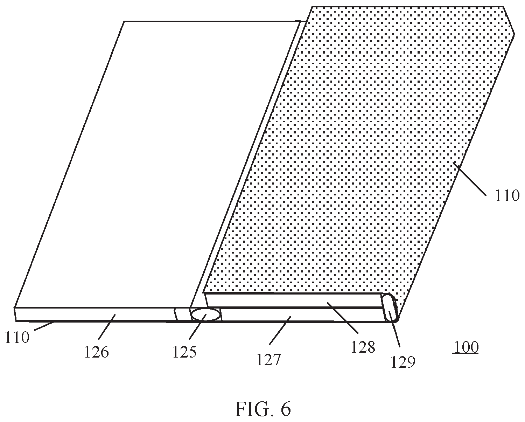

3. FIG. 6 shows a possible partially-unfolded state (a two-folded state) of the foldable electronic device 100. In a partially-unfolded state, an angle between the first housing 126 and the second housing 127 may be approximately 180°, and the second housing 127 and the third housing 128 rotate along the rotating shaft 129, so that the third housing 128 approaches the second housing 127. In this case, the first housing 126 and the second housing 127 are considered to be located on a same plane, and the second housing 127 and the third housing 128 may be considered to be located on different planes. In another possible partially-unfolded state, an angle between the third housing 128 and the second housing 127 may be approximately 180°, and the first housing 126 and the second housing 127 rotate along the rotating shaft 125, so that the first housing 126 approaches the second housing 127.

FIG. 1 and FIG. 2 show only some components included in the electronic device 100 and the foldable electronic device 100. Actual shapes, actual sizes, and actual structures of these components are not limited by the foregoing accompanying drawings.

It should be understood that, in embodiments of this application, it may be considered that a surface on which the display of the electronic device is located is a front surface, a surface on which the rear cover is located is a rear surface, and a surface on which the side frame is located is a side surface.

It should be understood that, in embodiments of this application, it is considered that when a user holds the electronic device (the user usually holds the electronic device vertically and faces the screen), an orientation in which the electronic device is located has a top part, a bottom part, a left part, and a right part. It should be understood that, in embodiments of this application, it is considered that when the user holds the electronic device (the user usually holds the electronic device vertically and faces the screen), the orientation in which the electronic device is located has the top part, the bottom part, the left part, and the right part.

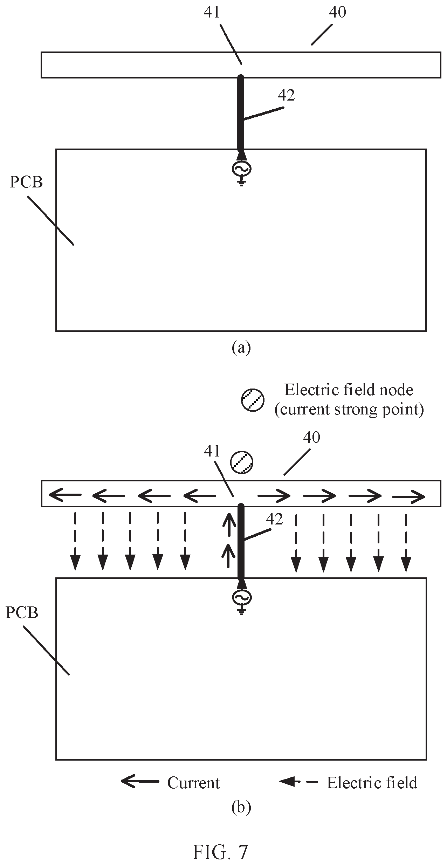

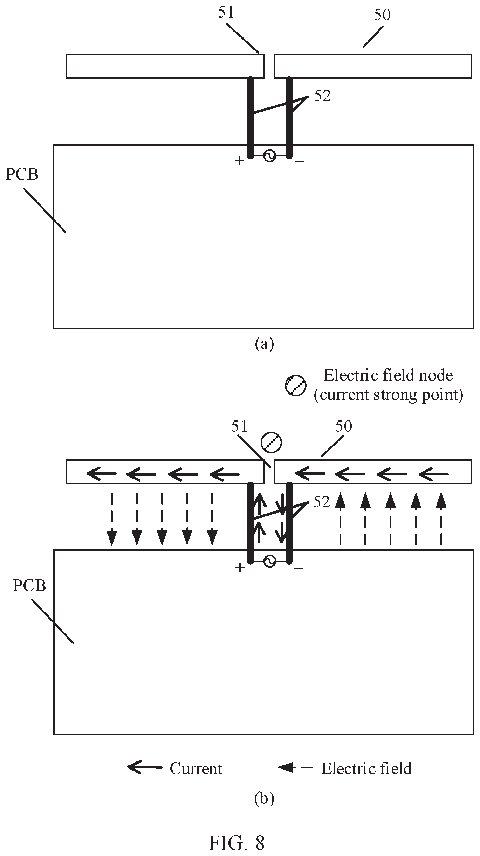

First, FIG. 7 and FIG. 8 are used to describe two antenna modes in this application. FIG. 7 is a diagram of a structure of an antenna in a common mode and distribution of corresponding currents and electric fields according to this application. FIG. 8 is a diagram of a structure of another antenna in a differential mode and distribution of corresponding currents and electric fields according to this application. Two ends of each of radiators of antennas in FIG. 7 and FIG. 8 are open, and a common mode and a differential mode of the radiators of the antennas may be respectively referred to as a wire common mode and a wire differential mode.

It should be understood that the "common mode" or the "CM mode" in this application includes a wire common mode and a slot common mode, and the "differential mode" or the "DM mode" in this application includes a wire differential mode and a slot differential mode, which may be specifically determined based on a structure of an antenna.

It should be understood that a "common-differential mode" or a "CM-DM mode" in this application is a wire common mode and a wire differential mode that are generated on a same radiator, or is a slot common mode and a slot differential mode that are generated on a same radiator, and may be specifically determined based on a structure of an antenna.

1. Wire (Wire) common mode (common mode, CM) mode

Herein, (a) in FIG. 7 shows that two ends of a radiator of an antenna 40 are open, and a feed circuit (not shown in the figure) is connected at a middle position 41. In an embodiment, the antenna 40 adopts a symmetrical feed (symmetrical feed) form. The feed circuit may be connected at the middle position 41 of the antenna 40 through a feed line 42. It should be understood that symmetrical feed may be understood as that one end of the feed circuit is connected to the radiator and the other end of the feed circuit is coupled to a ground plane for grounding. A connection point (feed point) between the feed circuit and the radiator is located in a center of the radiator. The center of the radiator may be, for example, a midpoint of a geometric structure, or a midpoint of an electrical length (or an area in a specific range near the midpoint).

The middle position 41 of the antenna 40 may be, for example, a geometric center of the antenna, or the midpoint of the electrical length of the radiator. For example, a joint between the feed line 42 and the antenna 40 covers the middle position 41.

Herein, (b) in FIG. 7 shows current and electric field distribution of the antenna 40. As shown in (b) in FIG. 7, currents are reversely distributed, for example, symmetrically distributed, on two sides of the middle position 41. Electric fields are co-directionally distributed on the two sides of the middle position 41. As shown in (b) in FIG. 7, the currents are co-directionally distributed at the feed line 42. Based on co-directional current distribution at the feed line 42, such feed shown in (a) in FIG. 7 may be referred to as wire CM feed. Based on reverse current distribution on two sides of a joint between the radiator and the feed line 42, such an antenna mode shown in (b) in FIG. 7 may be referred to as a wire CM mode (which may also be briefly referred to as a CM mode. For example, for a wire antenna, the CM mode is the wire CM mode). The current and the electric field shown in (b) in FIG. 7 may be respectively referred to as a current and an electric field in the wire CM mode.

The currents are stronger at the middle position 41 of the antenna 40 (a current strong point is located near the middle position 41 of the antenna 40), and are weaker at two ends of the antenna 40, as shown in (b) in FIG. 7. The electric fields are weaker at the middle position 41 of the antenna 40, and are stronger at the two ends of the antenna 40.

2. Wire differential mode (differential mode, DM) mode

As shown in (a) in FIG. 8, a left end and a right end of each of two radiators of an antenna 50 are open ends, and a feed circuit is connected at a middle position 51. In an embodiment, the antenna 50 adopts an anti-symmetrical feed (anti-symmetrical feed) form. One end of the feed circuit is connected to one of the radiators through a feed line 52, and the other end of the feed circuit is connected to the other radiator through a feed line 52. The middle position 51 may be a geometric center of the antenna 50, or a slit formed between the radiators.

It should be understood that, "central anti-symmetrical feed" mentioned in this application may be understood as that a positive electrode and a negative electrode of a feed element are respectively connected to two connection points near a midpoint of the radiators. In an embodiment, signals output from the positive and negative electrodes of the feed element have a same amplitude but opposite phases. For example, a phase difference is $180° \pm 10°$.

Herein, (b) in FIG. 8 shows current and electric field distribution of the antenna 50. As shown in (b) in FIG. 8, currents are co-directionally distributed, for example, anti-symmetrically distributed, on two sides of the middle position 51 of the antenna 50. Electric fields are reversely distributed on the two sides of the middle position 51. As shown in (b) in FIG. 8, the currents are reversely distributed at the feed line 52. Based on reverse current distribution at the feed line 52, such feed shown in (a) in FIG. 8 may be referred to as wire DM feed. Based on co-directional current distribution on two sides of a joint between the radiator and the feed line 52, such an antenna mode shown in (b) in FIG. 8 may be referred to as a wire DM mode (which may also be briefly referred to as a DM mode. For example, for a wire antenna, the DM mode is the wire DM mode). The current and the electric field shown in (b) in FIG. 8 may be respectively referred to as a current and an electric field in the wire DM mode. It should be understood that, based on co-directional current distribution on the two sides of the joint between the radiator and the feed line 52, such an antenna mode shown in (b) in FIG. 8 may also be referred to as a one-half antenna mode or a one-half-wavelength mode, or may be referred to as a one-half mode for short.

In an embodiment, in the wire DM mode or the one-half mode, the currents are stronger at the middle position 51 of the antenna 50 (a current strong point is near the middle position 51 of the antenna 50), and are weaker at two ends of the antenna 50, as shown in (b) in FIG. 8. The electric fields are weaker at the middle position 51 of the antenna 50, and are stronger at the two ends of the wire antenna 50.

It should be understood that the radiator of the antenna may be understood as a metal mechanical part that generates radiation, and there may be one radiator of the antenna, as shown in FIG. 7, or there may be two radiators of the antenna, as shown in FIG. 8, which may be adjusted based on an actual design or production requirement. For example, for the wire CM mode, the two radiators may alternatively be used, as shown in FIG. 8. Two ends of the two radiators are oppositely disposed and are spaced from each other by a slot. A symmetrical feed manner is used at the two ends that are close to each other. For example, effect similar to that of the antenna structure shown in FIG. 7 may also be achieved by separately feeding a same feed signal into the two ends that are of the two radiators and that are close to each other. Correspondingly, for the wire DM mode, one radiator may alternatively be used, as shown in FIG. 7. Two feed points are disposed at a middle position of the radiator, and an anti-symmetrical feed manner is used. For example, effect similar to that of the antenna structure shown in FIG. 8 may also be achieved if signals of a same amplitude but opposite phases are respectively fed at the two symmetrical feed points on the radiator.

3. Wire CM-DM mode

FIG. 7 and FIG. 8 respectively show that when two ends of a radiator are open, a wire CM mode and a wire DM mode are respectively generated in different feed manners.

When an antenna adopts an asymmetric feed form (including a side feed form and an offset feed form, where a feed point deviates from a middle position of the radiator), or a ground point (a position coupled to a ground plane) of the radiator is asymmetric (the ground point deviates from a middle position of the radiator), the antenna may generate both a first resonance and a second resonance, which respectively correspond to the wire CM mode and the wire DM mode. For example, the first resonance corresponds to the wire CM mode, and current and electric field distribution is shown in (b) in FIG. 7. The second resonance corresponds to the wire DM mode, and current and electric field distribution is shown in (b) in FIG. 8.

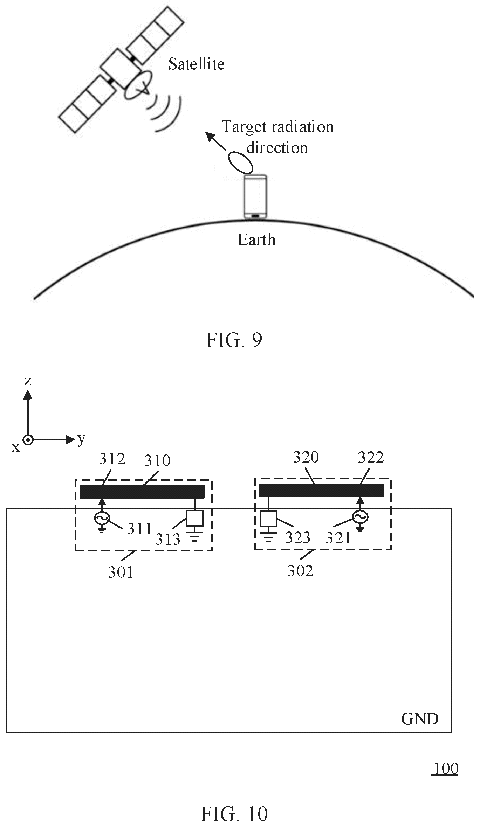

FIG. 9 is a diagram of a use scenario of satellite communication according to an embodiment of this application.

As shown in FIG. 9, when a user performs satellite communication via an electronic device, an area in which an antenna of the electronic device has a good radiation characteristic needs to be pointed to a satellite, to implement satellite alignment (establish a communication connection to the satellite).

During the satellite communication, relative positions of the electronic device and the satellite change (for example, a low-orbit satellite moves), and a posture of holding the electronic device by the user does not change. Therefore, a maximum radiation direction of the antenna deviates from a target radiation direction (for example, a top direction of the electronic device, where the top direction may be understood as a direction from a bottom of the electronic device to a top of the electronic device). In this case, the electronic device and the communication satellite cannot maintain good satellite alignment. Consequently, communication quality is poor or even a disconnection occurs, which greatly affects communication experience of the user.

It should be understood that the target radiation direction of the antenna in this embodiment of this application may be understood as a direction of the communication satellite relative to the electronic device 100, and may be understood as the top direction of the electronic device in this embodiment of this application. When a maximum radiation direction of a direction pattern generated by the antenna is close to the target radiation direction, it is convenient to establish a good communication connection between the electronic device 100 and the communication satellite.

This application provides an electronic device. The electronic device includes a first antenna and a second antenna. An operating frequency band of the first antenna and an operating frequency band of the second antenna include a satellite communication frequency band. The first antenna and the second antenna may generate different maximum radiation directions. The electronic device may switch between the first antenna and the second antenna to perform satellite communication, or perform satellite communication through both the first antenna and the second antenna, so that user experience during satellite communication can be improved.

It should be understood that the antenna and a radiator of the antenna in embodiments of this application may have different communication functions in different use scenarios of the electronic device. For example, in embodiments of this application, an example in which the electronic device performs communication in a first satellite system is used for description. In this use scenario, the antenna and the radiator of the antenna are configured to support a communication function of the first satellite system, for example, may be configured to generate a resonance and a direction pattern that are applicable to communication in the first satellite system. In another scenario, for example, when the electronic device does not perform satellite communication in the first satellite system, the antenna and the radiator of the antenna may be configured to support a communication function of another system. For example, the antenna and the radiator of the antenna may serve as an antenna radiator or a parasitic stub in a cellular system, or may serve as an antenna radiator or a parasitic stub in a wireless network communication technology (Wi-Fi).

FIG. 10 is a diagram of an electronic device 100 according to an embodiment of this application.

As shown in FIG. 10, the electronic device 100 includes a first antenna 301 and a second antenna 302.

The first antenna 301 includes a first radiator 310 and a first feed circuit 311. The first radiator 310 includes a first feed point 312, and the first feed circuit 311 is coupled to the first feed point 312.

The second antenna 302 includes a second radiator 320 and a second feed circuit 321. The second radiator 320 includes a second feed point 322, and the second feed circuit 321 is coupled to the second feed point 322.

An operating frequency band of the first antenna 301 and an operating frequency band of the second antenna 302 each may include at least a part of a frequency band in a satellite communication system. The electronic device 100 may perform satellite communication through the first antenna 301 and/or the second antenna 302.

Satellite communication includes at least one of the following communication services: receiving and/or sending a short message (also referred to as a short packet), making and/or answering a call, and a data service (for example, Internet access).

In an embodiment, a satellite communication frequency band may include a part of a frequency band in a SkyTone satellite system, and may include a transmit frequency band (from 1980 MHz to 2010 MHz) and a receive frequency band (from 2170 MHz to 2200 MHz) in the SkyTone satellite system. In an embodiment, a satellite communication frequency band may include a part of a frequency band in a BeiDou satellite system, and may include a transmit frequency band (from 1610 MHz to 1626.5 MHz) and a receive frequency band (from 2483.5 MHz to 2500 MHz) in the BeiDou satellite system. In an embodiment, a satellite communication frequency band may include a part of a frequency band in a low-orbit satellite system, and may include a transmit frequency band (from 1668 MHz to 1675 MHz) and a receive frequency band (from 1518 MHz to 1525 MHz) in the low-orbit satellite system. Alternatively, application to another satellite communication system may be implemented. This is not limited in embodiments of this application.

In an embodiment, when the first antenna 301 and/or the second antenna 302 operate/operates in the SkyTone satellite system (the operating frequency band of the first antenna 301 and/or the operating frequency band of the second antenna 302 include/includes at least a part of the frequency band in the SkyTone satellite system), the electronic device 100 may perform voice communication through the first antenna 301 and/or the second antenna 302. In an embodiment, when the first antenna 301 and/or the second antenna 302 operate/operates in the BeiDou satellite system (the operating frequency band of the first antenna 301 and/or the operating frequency band of the second antenna 302 include/includes at least a part of the frequency band in the BeiDou satellite system), the electronic device 100 may send or receive a short packet or a picture through the first antenna 301 and/or the second antenna 302. In an embodiment, when the first antenna 301 and/or the second antenna 302 operate/operates in the low-orbit satellite system (the operating frequency band of the first antenna 301 and/or the operating frequency band of the second antenna 302 include/includes at least a part of the frequency band in the low-orbit satellite system), the electronic device 100 may perform functions such as voice communication, short packet or picture sending or receiving, and Internet access through the first antenna 301 and/or the second antenna 302. The low-orbit satellite may further have some functions similar to those of a base station.

In an embodiment, the first feed circuit 311 is configured to transmit a radio frequency signal of the satellite communication frequency band. In an embodiment, the second feed circuit 321 is configured to transmit a radio frequency signal of the satellite communication frequency band.

In an embodiment, the satellite communication frequency band includes a first frequency band and a second frequency band. The first frequency band includes at least one transmit frequency band in the satellite communication frequency band, and the second frequency band includes at least one receive frequency band in the satellite communication frequency band. In an embodiment, the first feed circuit 311 is configured to transmit a radio frequency signal of the first frequency band or a radio frequency signal of the second frequency band. In an embodiment, the second feed circuit 321 is configured to transmit a radio frequency signal of the first frequency band or a radio frequency signal of the second frequency band.

It should be understood that, in this embodiment of this application, the feed circuit may be understood as a radio frequency channel of a radio frequency chip (RF IC) in the electronic device 100, and is configured to generate a radio frequency signal fed into an antenna, or configured to process a radio frequency signal received by the antenna. A matching circuit (for example, including at least one element) may be further disposed between the feed circuit and the feed point of the radiator, and may be configured to adjust impedance between the feed circuit and the feed point of the radiator. In an embodiment, the first feed circuit 311 is configured to generate a radio frequency signal that is of the first frequency band and that is fed into the antenna.

In an embodiment, the first antenna 301 may include a first tuning circuit 313. In an embodiment, the first tuning circuit 313 may be configured to switch a resonance point frequency of a resonance generated by the first antenna 301, so that the operating frequency band of the first antenna 301 includes different communication frequency bands at different time/in different time periods. In an embodiment, the first tuning circuit 313 may be configured to switch the operating frequency band of the first antenna 301 to include the first frequency band or the second frequency band. In an embodiment, the first tuning circuit 313 may be configured to switch an operating mode of the first antenna 301, so that the first antenna 301 can support the first frequency band in the operating frequency band of the first antenna 301 in different operating modes; or the first antenna 301 can support the second frequency band in the operating frequency band of the first antenna 301 in different operating modes. It should be understood that switching the operating mode of the antenna may include switching a grounding state of the radiator at a ground end (for example, the grounding state includes an open-circuit state, a disconnected state, a semi-open-circuit state, or a semi-disconnected state between the radiator and a ground plane), or switching an open state of the radiator at an open end (for example, the open state also includes an open-circuit state, a disconnected state, a semi-open-circuit state, or a semi-disconnected state between the radiator and the ground plane).

In an embodiment, the second antenna 302 may include a second tuning circuit 323. The second tuning circuit 323 may be configured to switch a resonance point frequency of a resonance generated by the second antenna 302, so that the operating frequency band of the second antenna 302 includes different communication frequency bands at different time/in different time periods. In an embodiment, the second tuning circuit 323 may be configured to switch the operating frequency band of the second antenna 302 to include the first frequency band or the second frequency band. In an embodiment, the second tuning circuit 323 may be configured to switch an operating mode of the second antenna 302, so that the second antenna 302 can support the first frequency band in the operating frequency band of the second antenna 302 in different operating modes; or the second antenna 302 can support the second frequency band in the operating frequency band of the second antenna 302 in different operating modes.

In an embodiment, the first frequency band may include at least a part of a frequency band from 1.5 GHz to 4.5 GHz. In an embodiment, the first antenna 301 or the second antenna 302 operates in the SkyTone satellite system, and the first frequency band may include a transmit frequency band (for example, from 1980 MHz to 2010 MHz) in the SkyTone satellite system. In an embodiment, the first antenna 301 or the second antenna 302 operates in the BeiDou satellite system, and the first frequency band may include a transmit frequency band (for example, from 1610 MHz to 1626.5 MHz) in the BeiDou satellite system. In an embodiment, the first antenna 301 or the second antenna 302 operates in the low-orbit satellite system (for example, a satellite network), and the first frequency band may include a transmit frequency band (for example, from 1668 MHz to 1675 MHz) in the low-orbit satellite system.

In an embodiment, the second frequency band may include at least a part of the frequency band from 1.5 GHz to 4.5 GHz. In an embodiment, the first antenna 301 or the second antenna 302 operates in the SkyTone satellite system, and the second frequency band may include a receive frequency band (for example, from 2170 MHz to 2200 MHz) in the SkyTone satellite system. In an embodiment, the first antenna 301 or the second antenna 302 operates in the BeiDou satellite system, and the second frequency band may include a receive frequency band (for example, from 2483.5 MHz to 2500 MHz) in the BeiDou satellite system. In an embodiment, the first antenna 301 or the second antenna 302 operates in the low-orbit satellite system (for example, the satellite network), and the second frequency band may include a receive frequency band (for example, from 1518 MHz to 1525 MHz) in the low-orbit satellite system.

It should be understood that, when the electronic device 100 performs satellite communication, the electronic device 100 may communicate with a communication satellite through one antenna in the electronic device 100. In this case, the antenna may load different elements in different slots to adjust a resonance point frequency of a resonance, so that the antenna can operate on the transmit frequency band and the receive frequency band of the satellite system in different slots.

For brevity of description, in the following embodiments of this application, an example in which the antenna that performs satellite communication in the electronic device 100 operates on the first frequency band is used for description. When the antenna operates on the second frequency band, corresponding understanding may also be provided. Details are not described again.

In an embodiment, at the first feed point 312 on the first radiator 310 (or the second feed point 322 on the second radiator 320), a first radio frequency signal fed by the first feed circuit 311 (or the second feed circuit 321) is received, and the first radio frequency signal corresponds to the transmit frequency band of the satellite system. In this case, the first antenna 301 (or the second antenna 302) operates on the transmit frequency band of the satellite system, and is configured to transmit a signal to the communication satellite.

In an embodiment, at the first feed point 312 on the first radiator 310 (or the second feed point 322 on the second radiator 320), a second radio frequency signal sent by the communication satellite is received, and is transmitted to the first feed circuit 311 (or the second feed circuit 321), and the second radio frequency signal corresponds to the receive frequency band of the satellite system. In this case, the first antenna 301 (or the second antenna 302) operates on the receive frequency band of the satellite system, and is configured to receive a signal of the communication satellite.

In an embodiment, at first time/in a first time period, at the first feed point 312 (or the second feed point 322), the first radio frequency signal is fed, and a resonance frequency band of a resonance generated by the first radiator 310 (or the second radiator 320) includes the first frequency band, and the first frequency band may include at least one transmit frequency band in the satellite communication frequency band.

In an embodiment, at first time/in a first time period, at the first feed point 312 (or the second feed point 322), the second radio frequency signal sent by the communication satellite is received, a resonance frequency band of a resonance generated by the first radiator 310 (or the second radiator 320) includes the second frequency band, and the second frequency band may include at least one receive frequency band in the satellite communication frequency band.

A first direction pattern generated by the first antenna 301 is different from a second direction pattern generated by the second antenna 302.

That the first direction pattern is different from the second direction pattern may be understood as that a maximum radiation direction of the first direction pattern is different from a maximum radiation direction of the second direction pattern. Alternatively, that the first direction pattern is different from the second direction pattern may be understood as that a null of the first direction pattern is different from a null of the second direction pattern.

According to this embodiment of this application, because the first direction pattern generated by the first antenna 301 is different from the second direction pattern generated by the second antenna 302, the electronic device 100 may perform satellite communication through at least one of the first antenna 301 and the second antenna 302. The electronic device 100 may switch the first antenna 301 and/or the second antenna 302 based on relative positions of the communication satellite and the electronic device 100, so that the communication satellite is always located in an area in which the first antenna 301 and/or the second antenna 302 have/has a good radiation characteristic (for example, the maximum radiation direction of the direction pattern generated by the antenna at least partially overlaps a target radiation direction), to maintain satellite alignment with the communication satellite. This effectively improves user experience.

In an embodiment, the electronic device 100 performs satellite communication through a single antenna. At the first time/in the first time period, the electronic device 100 performs satellite communication through the first antenna 301. At the second time/in the second time period, the electronic device 100 performs satellite communication through the second antenna 302. For example, when the communication satellite is located in an area in which the first antenna 301 has a good radiation characteristic, the electronic device 100 communicates with the communication satellite through the first antenna 301. For example, the first antenna 301 sends a signal to the communication satellite on the first frequency band, and the first antenna 301 receives a signal sent by the communication satellite on the second frequency band.

In an embodiment, the electronic device 100 sends a signal to the communication satellite through a single antenna, or separately receives, through a plurality of antennas (for example, the first antenna 301 and the second antenna 302), a signal sent by the communication satellite. At the first time/in the first time period, the electronic device 100 performs satellite communication on the first frequency band through the first antenna 301. At the second time/in the second time period, the electronic device 100 performs satellite communication on the first frequency band through the second antenna 302. At third time/in a third time period, the electronic device 100 performs satellite communication on the second frequency band separately through the first antenna 301 and the second antenna 302. For example, when the communication satellite is always located in an area in which the first antenna 301 has a good radiation characteristic, the electronic device 100 sends a signal to the communication satellite on the first frequency band through the first antenna 301. Alternatively, the first antenna 301 and the second antenna 302 separately receive, on the second frequency band, the signal sent by the communication satellite.

In an embodiment, the electronic device 100 performs satellite communication separately through a plurality of antennas (for example, the first antenna 301 and the second antenna 302). At the first time/in the first time period, the electronic device 100 performs satellite communication on the first frequency band separately through the first antenna 301 and the second antenna 302. At the second time/in the second time period, the electronic device 100 performs satellite communication on the second frequency band separately through the first antenna 301 and the second antenna 302. For example, that the electronic device 100 communicates with the communication satellite separately through a plurality of antennas (for example, the first antenna 301 and the second antenna 302) includes: The plurality of antennas (for example, the first antenna 301 and the second antenna 302) separately send signals to the communication satellite on the first frequency band, and the plurality of antennas (for example, the first antenna 301 and the second antenna 302) separately receive, on the second frequency band, the signal sent by the communication satellite.

It should be understood that, signals that are transmitted by the communication satellite and received by the electronic device 100 through the plurality of antennas (for example, the first antenna 301 and the second antenna 302) on the second frequency band may be superimposed by using an algorithm or the like, to enhance quality of communication between the electronic device 100 and the communication satellite.

In an embodiment, when the electronic device 100 performs satellite communication through a single antenna, the electronic device 100 switches between the first antenna 301 and the second antenna 302 to perform satellite communication, and the first feed circuit 311 and the second feed circuit 321 may be the same. In an embodiment, the first feed circuit 311 and the second feed circuit 321 include a same radio frequency channel in the radio frequency chip. In an embodiment, a circuit part between the radio frequency channel and the first feed point 312 in the first feed circuit 311 and a circuit part between the radio frequency channel and the second feed point 322 in the second feed circuit 321 include at least some same electronic elements, for example, a power amplifier (power amplifier, PA) and a low noise amplifier (low noise amplifier, LNA).

In an embodiment, when the electronic device 100 performs satellite communication through a plurality of antennas, the electronic device 100 performs satellite communication through both the first antenna 301 and the second antenna 302, and the first feed circuit 311 and the second feed circuit 321 are different. In an embodiment, the first feed circuit 311 and the second feed circuit 321 include different radio frequency channels in the radio frequency chip. In an embodiment, a circuit part between the radio frequency channel and the first feed point 312 in the first feed circuit 311 and a circuit part between the radio frequency channel and the second feed point 322 in the second feed circuit 321 include at least some different electronic elements, for example, a PA and an LNA.

It should be understood that, when the electronic device 100 performs satellite communication through a plurality of antennas, different from an antenna array (for example, a phased array antenna) including a plurality of radiators, the first antenna 301 and the second antenna 302 separately serve as independent antennas to perform satellite communication. For example, the first antenna 301 and the second antenna 302 are independently fed, and a shared power division phase-shift circuit does not need to be disposed for the first antenna 301 and the second antenna 302, so that radio frequency signals fed into the first antenna 301 and the second antenna 302 have different phase differences.

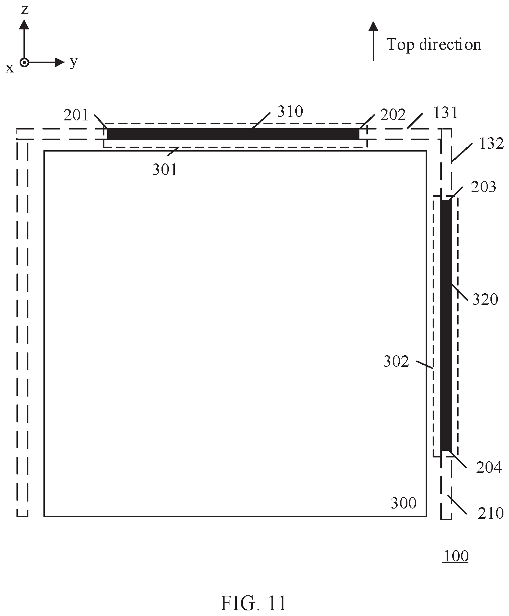

FIG. 11 is a diagram of another electronic device 100 according to an embodiment of this application.

As shown in FIG. 11, the electronic device 100 may include a first side frame 210.

The first side frame 210 includes a first position 201, a second position 202, a third position 203, and a fourth position 204 that are sequentially disposed. At least a part of the first side frame 210 is spaced from a ground plane 300.

The first side frame 210 has an insulation slot or is coupled to a ground plane 300 at the first position 201. The first side frame 210 has an insulation slot or is coupled to the ground plane 300 at the second position 202. The first side frame 210 has an insulation slot or is coupled to the ground plane 300 at the third position 203. The first side frame 210 has an insulation slot or is coupled to the ground plane 300 at the fourth position 204.

The first side frame 210 includes a first edge 131 and a second edge 132 that intersect with the first edge 131 at an angle. A length of the first edge 131 is less than a length of the second edge 132. In an embodiment, the first edge 131 may be understood as a short side of the electronic device 100. In an embodiment, the electronic device 100 may alternatively be a foldable electronic device including a plurality of housings. When the electronic device 100 is folded in an extension direction of the first edge 131, the first edge 131 may be understood as a short side of the electronic device 100 in an unfolded state. When the electronic device 100 is folded in an extension direction of the second edge 132, the first edge 131 may be understood as a short side of the electronic device 100 in a folded state. That the electronic device 100 is folded in the extension direction of the first edge 131 may be understood as that an extension direction of a rotating shaft is basically parallel to the extension direction of the first edge. That the electronic device 100 is folded in the extension direction of the second edge 132 may be understood as that an extension direction of a rotating shaft is basically parallel to the extension direction of the second edge.

It should be understood that the first edge 131 may be a top edge or a bottom edge of the electronic device 100. For brevity of description, only an example in which the first edge 131 is the top edge of the electronic device 100 is used for description. The top edge/bottom edge of the electronic device 100 may be understood as a top/bottom edge in a conventional use state. For example, in a mobile phone, the top edge/bottom edge may be understood as a top/bottom edge under a desktop (desktop) or a user interface (user interface, GUI).

In an embodiment, the first position 201 and the second position 202 are located on the first edge 131. The third position 203 and the fourth position 204 are located on the second edge.

The electronic device 100 includes a first antenna 301 and a second antenna 302.

A first radiator 310 of the first antenna 301 includes a conductive part of the first side frame 210 between the first position 201 and the second position 202. At least a part of the first radiator 310 is spaced from the ground plane 300. The first antenna 301 further includes a first feed circuit 311, the first radiator 310 includes a first feed point 312, and the first feed circuit 311 is coupled to the first feed point 312.

The second radiator 320 of the second antenna 302 includes a conductive part of the first side frame 210 between the third position 203 and the fourth position 204. At least a part of the second radiator 320 is spaced from the ground plane 300. The second antenna 302 further includes a second feed circuit 321, the second radiator 320 includes a second feed point 322, and the second feed circuit 321 is coupled to the second feed point 322.

It should be understood that an operating frequency band of the first antenna 301 and an operating frequency band of the second antenna 302 each may include the first frequency band and/or the second frequency band in the foregoing embodiments. The electronic device 100 may perform satellite communication through the first antenna 301 and/or the second antenna 302.

In an embodiment, a minimum distance between the second radiator 320 and the first radiator 310 in the extension direction (for example, a z direction) of the second edge 132 is greater than or equal to 20 mm and less than or equal to a half of the length of the second edge 132.

It should be understood that the first radiator 310 and/or the second radiator 320 may be located on an upper half part (an area close to a top) of the electronic device 100, which is more conducive to radiation generated by the first antenna 301 and/or the second antenna 302 in a top direction, so that quality of communication between the electronic device 100 and a communication satellite is good.

Because the first radiator 310 is located on a top edge of the electronic device 100, and the second radiator 320 is located on a side edge of the electronic device 100. The first antenna 301 may generate good radiation in the top direction, and has a good radiation characteristic. The second antenna 302 may be configured to improve radiation of the electronic device 100 in an upper hemispherical area. For example, the second antenna 302 may be configured to enhance radiation of the electronic device 100 in the top direction toward a side on which the second radiator 320 is located, and the electronic device 100 may have a good communication characteristic within a larger angle range relative to the top direction.

In this embodiment of this application, the top direction may be understood as a direction that is perpendicular to the first edge 131 and that points from the inside of the electronic device 100 to the first edge 131.

The upper hemispherical area may be understood as an area within an angle less than or equal to 90° relative to the top direction. In a coordinate system, the upper hemispherical area may be understood as an area that faces a positive direction of a z direction and that is on an xoy plane.

In an embodiment, the first radiator 310 may be configured to generate a first resonance, and a resonance frequency band of the first resonance includes the first frequency band and/or the second frequency band.

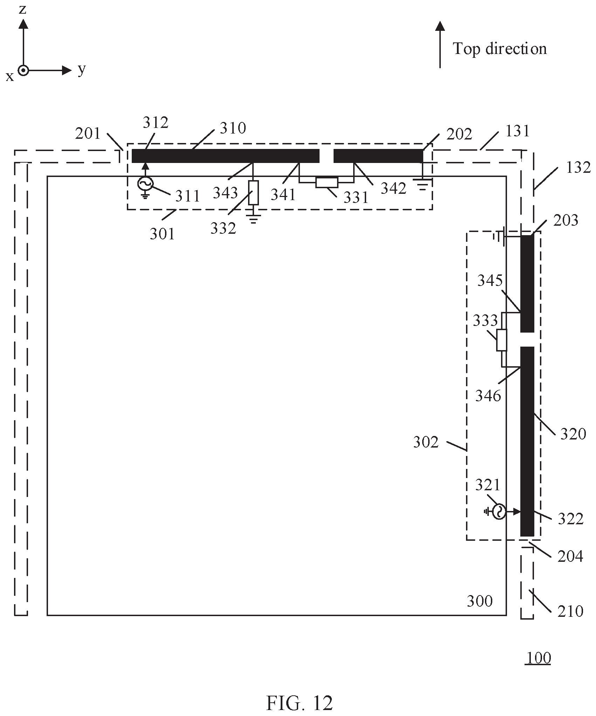

In an embodiment, the first side frame 210 has a first insulation slot at the first position 201, and is coupled to the ground plane 300 at the second position 202, as shown in FIG. 12.

In an embodiment, a width of the first insulation slot is greater than or equal to 0.2 mm and less than or equal to 2 mm. It should be understood that, when a process permits, the width of the first insulation slot may be smaller, or a conductive material may be further disposed inside the first insulation slot, and similar antenna radiation effect may still be achieved. A width of a slot on the side frame in this embodiment of this application may be within the foregoing range. For brevity of description, details are not described again. The "width of the insulation slot" may be simply understood as a size in an extension direction between two sections of conductive materials (for example, two radiator sections).

It should be understood that, in this embodiment of this application, only an example in which the first side frame 210 includes the first position 201, the second position 202, the third position 203, and the fourth position 204 that are sequentially disposed is used for description. In actual production or design, the first position 201, the second position 202, the third position 203, and the fourth position 204 may not be arranged in this sequence. For example, the first position 201 may also be located between the second position 202 and the third position 203. In addition, the first side frame 210 is coupled to the ground plane 300 at the first position 201, has a second insulation slot at the second position 202, and may also form a similar structure (a structure in which one end of the radiator is a ground end and the other end is an open end). For brevity of description, the similar structure is not described again, and may be correspondingly understood in embodiments of this application.

In an embodiment, the first radiator 310 includes a first connection point 341 and a second connection point 342. The first radiator 310 has a fifth insulation slot between the first connection point 341 and the second connection point 342.

In an embodiment, the first antenna 301 may further include a first element 331. The first element 331 is coupled between the first connection point 341 and the second connection point 342.

It should be understood that the first radiator 310 is a structure in which one end is a ground end and the other end is an open end. In addition, the fifth insulation slot of the first radiator 310 may be considered as an equivalent capacitor (for example, a distributed capacitor) disposed on the first radiator 310. The equivalent capacitor may enable the first radiator 310 to form a metamaterial (metamaterial, meta) structure. The first radiator 310 having the metamaterial structure can increase a radiation aperture, and after the fifth insulation slot is provided, electric fields are more dispersed. In an embodiment, a dielectric loss near the first radiator 310 that forms the metamaterial structure is reduced. Therefore, a radiation characteristic (for example, total efficiency and radiation efficiency) of the first antenna 301 can be effectively improved.

In addition, an equivalent capacitance value of the fifth insulation slot may be adjusted through the first element 331 coupled between the first connection point 341 and the second connection point 342, so as to adjust the radiation characteristic (for example, the resonance point frequency of the first resonance generated by the first radiator 310) of the first antenna 301.

In an embodiment, the first radiator 310 is a structure in which one end is a ground end and the other end is an open end. Because an area near the open end has a stronger magnetic field, the first tuning circuit shown in FIG. 10 may be disposed close to the open end (the second position 202) of the first radiator 310, so that a resonance point frequency of a resonance generated by the first antenna 301 has larger adjustment space.

In an embodiment, a length of the first side frame between a connection point between the first tuning circuit and the first radiator 310 and the open end (the second position 202) is less than or equal to 10 mm.

It should be understood that, when the radiators in embodiments of this application have a same structure (the radiator is a structure in which one end is a ground end and the other end is an open end), the tuning circuit may be correspondingly understood. Details are not described again.

In an embodiment, an electrical length of the first radiator 310 is greater than three-eighths of a first wavelength.

It should be understood that the first resonance generated by the first radiator 310 may correspond to a quarter-wavelength mode. By using the fifth insulation slot, the electrical length of the first radiator 310 may be greater than three-eighths of the first wavelength, and currents on the first radiator 310 are co-directional (for example, are not reversed). The electrical length of the first radiator 310 increases from a quarter of the first wavelength to more than three-eighths of the first wavelength, but the first radiator 310 still operates in the quarter-wavelength mode.

In this case, a current density on the first radiator 310 is dispersed, and an electric field density between the first radiator 310 and the ground plane 300 is weakened, thereby reducing a conductor loss and a dielectric loss caused by a conductor and a dielectric disposed around the first radiator 310 and the first radiator 310, and improving a radiation characteristic of the first antenna 301. The first radiator 310 increases a radiation aperture, and effectively improves total efficiency and radiation efficiency of the first antenna 301.

The first wavelength may be understood as a vacuum wavelength corresponding to the resonance point frequency of the first resonance generated by the first radiator 310, or may be understood as a vacuum wavelength corresponding to a center frequency of a resonance frequency band formed by the first resonance generated by the first radiator 310.

It should be understood that the foregoing wavelengths are all vacuum wavelengths. Because there is a specific conversion relationship between a dielectric wavelength and a vacuum wavelength, the foregoing vacuum wavelength may also be converted into the dielectric wavelength.

In an embodiment, a length of the first radiator 310 between a first end (the ground end, one end at the second position 202) of the first radiator 310 and the fifth insulation slot is less than a length of the first radiator 310 between a second end (the open end, one end at the first position 201) of the first radiator 310 and the fifth insulation slot.

It should be understood that the length of the radiator between an end of the first radiator 310 and the fifth insulation slot may be understood as a length of a conductor part between the end and the fifth insulation slot. For brevity of description, the length may be correspondingly understood in this embodiment of this application.

In an embodiment, a length of the first radiator 310 between a first end (the ground end, one end at the second position 202) of the first radiator 310 and the fifth insulation slot is less than three-fifths of a length of the first radiator 310 between a second end (the open end, one end at the first position 201) of the first radiator 310 and the fifth insulation slot.

In an embodiment, a length of the first radiator 310 between a first end (the ground end, one end at the second position 202) of the first radiator 310 and the fifth insulation slot is less than one third of a length of the first radiator 310 between a second end (the open end, one end at the first position 201) of the first radiator 310 and the fifth insulation slot.

In an embodiment, a length of the first radiator 310 between a first end (the ground end, one end at the second position 202) of the first radiator 310 and the fifth insulation slot is less than one seventh of a length of the first radiator 310 between a second end (the open end, one end at the first position 201) of the first radiator 310 and the fifth insulation slot.

It should be understood that the fifth insulation slot may be located in an area in which a current on the first radiator 310 is large. The area with a large current should be understood as corresponding to a first radiator 310 (for example, operating in the quarter-wavelength mode) without a slot. When the fifth insulation slot is provided, electric field strength of the first radiator 310 is weakened, and electric fields are dispersed, so that a radiation characteristic (for example, total efficiency and radiation efficiency) of the first antenna 301 is improved.

In an embodiment, the first element 331 may be a capacitor or an element equivalent to a capacitor.

In an embodiment, an equivalent capacitance value of the first element 331 may be less than or equal to a first threshold. The first threshold may be designed based on the resonance point frequency (or a center frequency of the second frequency band) of the first resonance generated by the first radiator 310. When the resonance point frequency of the first resonance is less than or equal to 1 GHz, the first threshold is 10 pF. When the resonance point frequency of the first resonance is greater than 1 GHz, the first threshold is 2 pF.

In an embodiment, the first element 331 may be an inductor or an element equivalent to an inductor.

In an embodiment, an equivalent inductance value of the first element 331 may be less than or equal to 5 nH.

It should be understood that, the equivalent capacitance value or the equivalent inductance value of the first element 331 is designed based on frequencies of resonance points of different resonances. In this way, a current distribution on the first radiator 310 can be more dispersed, a conductor loss is reduced, and a radiation aperture of the first radiator 310 is increased, so that a radiation characteristic (for example, total efficiency and radiation efficiency) of the first antenna 301 is improved.

In an embodiment, a distance between the first connection point 341 and/or the second connection point 342 and the fifth insulation slot is less than or equal to 5 mm.

The distance between the first connection point 341 and/or the second connection point 342 and the fifth insulation slot may be understood as a minimum distance between the first connection point 341 and/or the second connection point 342 and conductors on two sides of the fifth insulation slot (a length of the first radiator 310 between the first connection point 341 and/or the second connection point 342 and the fifth insulation slot). During an electrical connection to the first connection point 341 and/or the second connection point 342 through a connector (for example, a metal spring), a distance between the first connection point 341 and/or the second connection point 342 and the fifth insulation slot may be understood as a minimum distance between a center of a part that is of the connector and that is in contact with the connection point and each of conductors on two sides of the fifth insulation slot.

In an embodiment, the first radiator 310 may further include a third connection point 343. The first antenna 301 further includes a second element 332, and the second element 332 is coupled between the third connection point 343 and the ground plane 300.

It should be understood that, when the first radiator 310 is electrically connected to the ground plane 300 through the second element 332 at the third connection point 343, a current on the first radiator 310 may be shunted in an area near the third connection point 343 when the first radiator 310 generates the first resonance. Because shunt occurs in the area near the third connection point 343, current density on the first radiator 310 can be reduced. In an embodiment, current distribution on the first radiator 310 is more dispersed, to reduce a conductor loss of the first radiator 310. In an embodiment, current distribution on the first radiator 310 is more dispersed, so that a radiation aperture of the first radiator 310 can be increased. Because the conductor loss of the first radiator 310 is reduced and the radiation aperture is increased, the radiation characteristic (for example, total efficiency and radiation efficiency) of the first antenna 301 can be improved.

In an embodiment, a distance (for example, a length of the first radiator 310 between the third connection point 343 and the first connection point 341 and/or the second connection point 342) between the third connection point 343 and the first connection point 341 and/or the second connection point 342 is greater than or equal to 0 mm and less than or equal to 5 mm.

It should be understood that, when the distance between the third connection point 343 and the first connection point 341 and/or the second connection point 342 is equal to 0 mm, the third connection point 343 coincides with the first connection point 341 and/or the second connection point 342.

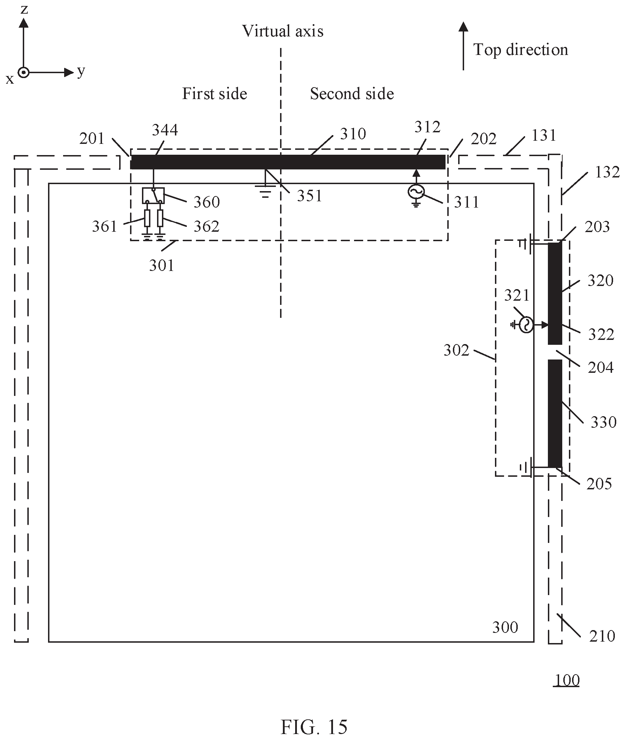

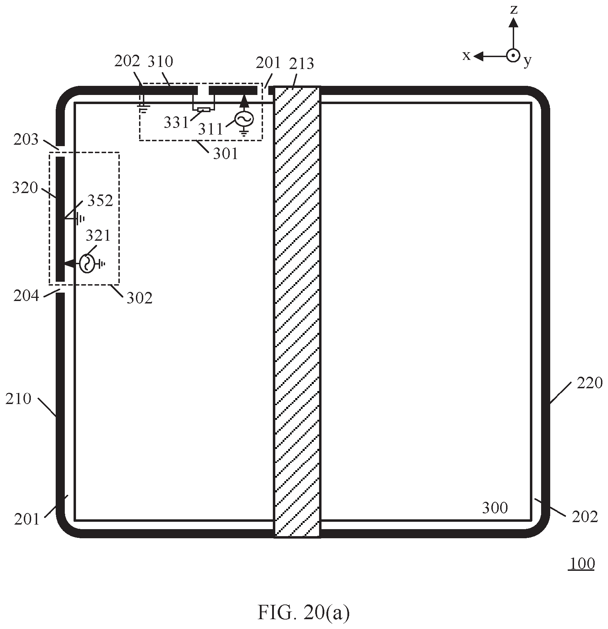

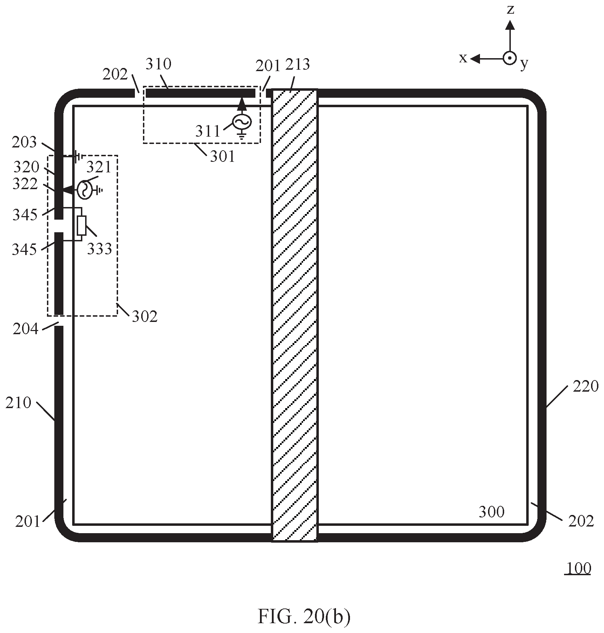

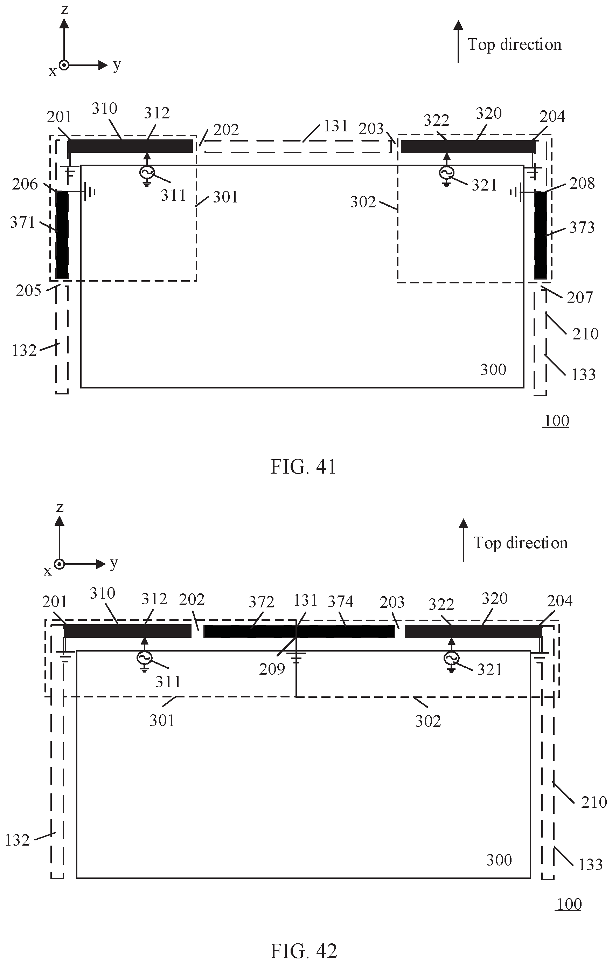

In the antenna in this embodiment of this application, when an operating mode of the antenna includes a quarter-wavelength mode (one end of the antenna is an open end, and the other end is a ground end), the antenna may have a better radiation characteristic (for example, radiation efficiency) through a structure similar to the first antenna 301 shown in FIG. 12. For example, for a second antenna 302 shown in FIG. 12, a second antenna 302 shown in FIG. 15, a first antenna 301 shown in FIG. 20(a), a second antenna 302 shown in FIG. 20(b), a first antenna 301 and a second antenna 302 shown in FIG. 41, a first antenna 301 and a second antenna 302 shown in FIG. 42, and the like, for brevity of description, details are not described again.

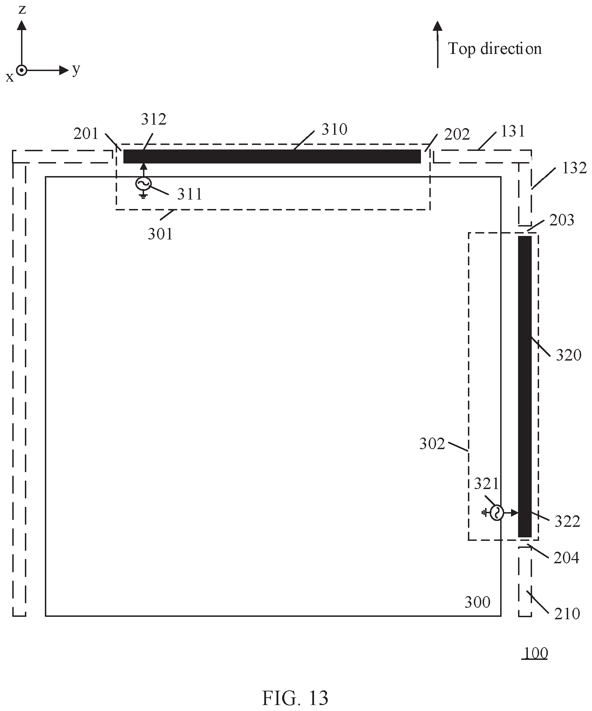

In an embodiment, the first side frame 210 has a first insulation slot and a second insulation slot respectively at the first position 201 and the second position 202, as shown in FIG. 13.

In an embodiment, a distance between the first feed point 312 and the first position 201 (a length of the first side frame 210 between the first feed point 312 and the first position 201) is different from a distance between the first feed point 312 and the second position 202 (a length of the first side frame 210 between the first feed point 312 and the second position 202).

It should be understood that the first resonance generated by the first radiator 310 is generated in the wire DM mode in the foregoing embodiments. For a direction pattern generated in the wire DM mode, because there is no strong current flowing to the ground plane 300, a small quantity of currents are excited on the ground plane 300, and impact of the ground plane 300 on the direction pattern generated in the wire DM mode is similar to that of a reflector. In this way, the direction pattern generated in the wire DM mode mainly faces the top direction of the electronic device 100 (a direction in which the first radiator 310 is away from the ground plane, for example, the z direction). However, for a direction pattern generated in a wire CM mode, because a current flowing to the ground plane 300 in the wire CM mode is strong, a large quantity of currents are excited on the ground plane 300, and the ground plane 300 has large impact on a direction pattern generated by an antenna. In this way, the direction pattern generated in the wire CM mode does not mainly face the top direction of the electronic device 100 (the direction in which the first radiator 310 is away from the ground plane, for example, the z direction).

In addition, in the satellite communication frequency band, efficiency (for example, radiation efficiency) of an antenna that generates a resonance in the wire DM mode may meet a satellite communication requirement. For example, when the first radiator 310 extends in a straight line, under an action of a co-directional current, both a conductor loss and a dielectric loss are smaller. In this case, efficiency (for example, radiation efficiency) of the first antenna 301 is higher. However, because currents on the radiator are reverse in direction in the wire CM mode, the loss is greater, and efficiency (for example, radiation efficiency) of the antenna that generates a resonance in the wire CM mode is lower.

In an embodiment, because the area near the open end has a stronger magnetic field, the tuning circuit shown in FIG. 10 may be disposed near the open end (the first position 201 or the second position 202) on one side of the first radiator 310, so that the resonance point frequency of the resonance generated by the first antenna 301 has larger adjustment space. Both ends of the first radiator 310 are open ends, and connection points between the first feed point 312 and the tuning circuit and the radiator are respectively located on two sides of a virtual axis of the first radiator 310.

A center of the first radiator 310 may be located on the virtual axis, and lengths of first radiator 310 on two sides of the virtual axis are the same. It should be understood that the two sides of the virtual axis in this embodiment of this application may be understood as two sides of a plane formed by the virtual axis and a thickness direction (for example, a direction perpendicular to the display) (for example, an x direction) of the electronic device 100. In addition, because of a requirement in production design, an edge that is of the side frame 11 and that faces the ground plane 300 (faces the inside of the electronic device 100) is not flat. Therefore, in this embodiment of this application, the virtual axis of the first radiator 310 may be understood as a straight line that passes through the center of the first radiator 310 or the first ground point 351 and is perpendicular to an extension direction of the first radiator 310.

In an embodiment, a length of a side frame between the connection point between the tuning circuit and the first radiator 310 and the open end (the first position 201 or the second position 202) is less than or equal to 10 mm.

It should be understood that, when the radiators in embodiments of this application have a same structure (both ends of the radiator are open ends), the investment of the tuning circuit may be correspondingly understood. Details are not described again.

In an embodiment, two ends of the first radiator 310 are open ends, and the first radiator 310 may operate in a one-half-wavelength mode. An electrical length of the first radiator 310 is a half of a first wavelength.

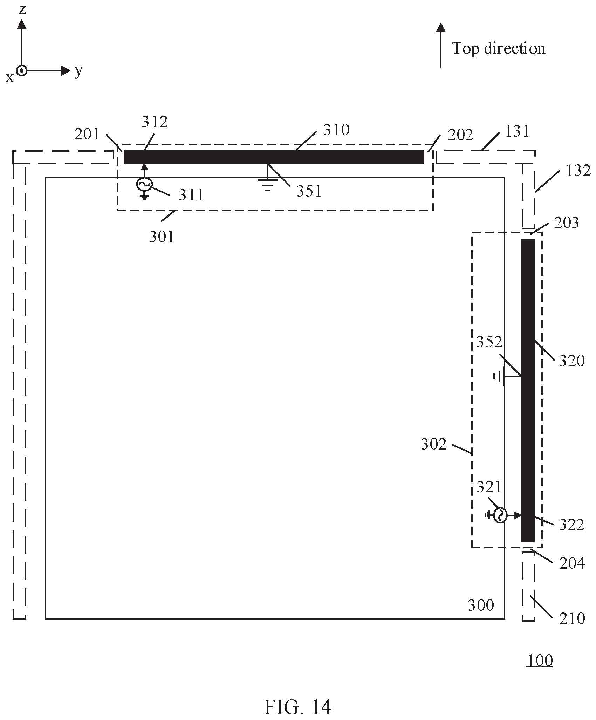

In an embodiment, the first radiator 310 may further include a first ground point 351, as shown in FIG. 14. The first radiator 310 is coupled to the ground plane 300 at the first ground point 351.

In an embodiment, the first ground point 351 may be located in a central area of the first radiator 310. The central area may be understood as an area within 5 mm from a center of the first radiator 310, and lengths of first radiator 310 on two sides of the center are the same.

It should be understood that increasing structural symmetry of the first antenna 301 allows the first antenna 301 to have better communication performance.

In an embodiment, grounding may be implemented at the first ground point 351 through a ground member. A width of a joint between the ground member and the first side frame 210 is greater than or equal to 1 mm and less than or equal to 20 mm.

In an embodiment, when the ground member includes at least a part of the central area of the first radiator 310, it may be considered that the first ground point 351 is located in the central area of the first radiator 310.

It should be understood that, when the first radiator 310 is coupled to the ground plane 300 at the first ground point 351, the first radiator 310 may further generate a second resonance in the wire CM mode, and the second resonance may be used to improve a radiation characteristic (for example, radiation efficiency) of the first antenna 301 on the first frequency band and/or the second frequency band.

In an embodiment, a length of the first radiator 310 between the first ground point 351 and the first position 201 is greater than or equal to one quarter of the length of the first radiator 310, and a length of the first radiator 310 between the first ground point 351 and the second position 202 is greater than or equal to one quarter of the length of the first radiator 310.

It should be understood that the first ground point 351 may be disposed in an area close to the center of the first radiator 310, to better excite the first radiator 310 to generate the wire CM mode and the wire DM mode. In addition, when the first ground point 351 may be disposed in the area close to the center of the first radiator 310, it is more convenient to adjust a frequency difference between resonances generated in the wire CM mode and the wire DM mode, so that the first antenna 301 has a better radiation characteristic. For brevity of description, the ground point on the radiator in this embodiment of this application may be correspondingly understood. Details are not described again.

In an embodiment, a resonance point frequency of the first resonance may be higher than a resonance point frequency of the second resonance. A ratio of the resonance point frequency of the first resonance to the resonance point frequency of the second resonance may be greater than or equal to 1.1 and less than or equal to 1.5. In an embodiment, a ratio of the resonance point frequency of the first resonance to the resonance point frequency of the second resonance may be greater than or equal to 1.3 and less than or equal to 1.5.

In an embodiment, a frequency difference between the resonance point frequency of the first resonance and the resonance point frequency of the second resonance may be greater than or equal to 100 MHz and less than or equal to 500 MHz.

It should be understood that, on the first frequency band (or the second frequency band), the first antenna 301 may operate in the wire DM mode. The second resonance may be used to improve a radiation characteristic (for example, radiation efficiency) of the first antenna 301 on the resonance frequency band of the first resonance.

In an embodiment, the resonance point frequency of the first resonance may be higher than the resonance point frequency of the second resonance. A ratio of the resonance point frequency of the first resonance to the resonance point frequency of the second resonance may be less than or equal to 1.3. In an embodiment, a center frequency of the first frequency band is greater than the resonance point frequency of the second resonance, and is less than the resonance point frequency of the first resonance.

It should be understood that, on the first frequency band (or the second frequency band), the first antenna 301 may operate in a hybrid mode of the wire CM mode and the wire DM mode, and radiation is jointly generated in the wire CM mode and the wire DM mode. The first antenna 301 has both a part of radiation characteristics of the wire CM mode and a part of radiation characteristics of the wire DM mode.

In an embodiment, a ratio of the resonance point frequency of the first resonance to the resonance point frequency of the second resonance is less than or equal to 1.2. In an embodiment, a frequency difference between the resonance point frequency of the first resonance and the resonance point frequency of the second resonance is less than or equal to 300 MHz.

In an embodiment, the first antenna 301 includes a first switch branch 361, a second switch branch 362, and a first switch 360, as shown in FIG. 15.

The first radiator 310 includes a fourth connection point 344. The first switch branch 361 and the second switch branch 362 are coupled to the fourth connection point 344 and the ground plane 300 through the first switch 360. In an embodiment, a first connection port of the first switch 360 is coupled to the first switch branch 361, and a second connection port of the first switch 360 is coupled to the second switch branch 362.

For ease of understanding, the first switch branch 361 and the second switch branch 362 may be considered as being disposed in parallel. In an embodiment, the first switch branch 361 and the second switch branch 362 are connected in parallel between the ground plane 300 and the fourth connection point 344. In an embodiment, both the first switch branch 361 and the second switch branch 362 are connected in parallel between the ground plane 300 and the fourth connection point 344 through the first switch 360.

It should be understood that the switch in this application, for example, the "first switch" may include one or more switch devices. The connection point in this application, for example, the "fourth connection point" may include one or more connection points. In an embodiment, the first switch branch 361 may be coupled between the ground plane 300 and the first radiator 310 through one switch device in the first switch and one connection point in the fourth connection point 344. The second switch branch 362 may be coupled between the ground plane 300 and the first radiator 310 through another switch device in the first switch and another connection point in the fourth connection point 344. In this embodiment of this application, the switch is used only as a switch that is switched to a different switch branch coupled to the radiator/parasitic stub, and a specific position and a specific form of the switch are not limited.

It should be understood that, in this embodiment of this application, the switch branch may be understood as a circuit between the switch and the connection point (for example, the fourth connection point 344) or the ground plane 300. The switch may be switched to different switch branches, so that an equivalent capacitor, an equivalent resistor, an equivalent inductor, or the like coupled to the connection point is different.

In an embodiment, the first tuning circuit in the foregoing embodiments may include a first switch branch 361, a second switch branch 362, and a first switch 360. The first tuning circuit may be further configured to adjust current distribution on the first radiator 310 and the ground plane 300. In an embodiment, the first antenna 301 may further include a third switch branch, and the third switch branch may be configured to adjust the resonance point frequency of the resonance generated by the first antenna 301, so that the first antenna 301 operate on different satellite communication frequency bands. For example, when the fourth connection point 344 is coupled to the first switch branch 361 or the second switch branch 362 through the first switch 360, a resonance frequency band of a resonance generated by the first radiator 310 includes the first frequency band; or when the fourth connection point 344 is coupled to the third switch branch through the first switch 360, the resonance frequency band of the resonance generated by the first radiator 310 includes the second frequency band.

In an embodiment, the switch branch may include one or more elements, and the plurality of elements may be connected in series or in parallel to implement different equivalent capacitance values and/or equivalent inductance values and/or equivalent resistance values. In an embodiment, the switch branch may also include a switch, and an equivalent capacitance value and/or an equivalent inductance value and/or an equivalent resistance value of the switch branch in different states may be switched through the switch.

In an embodiment, the switch branch may not include an element. The switch branch may be configured to determine a boundary condition at the fourth connection point. For example, the switch branch is in an open-circuit state. When a common port of the switch is connected to the switch branch, the fourth connection point 344 is in an open-circuit state (not coupled to the ground plane 300 through a component). Alternatively, the switch branch is in a short-circuit state. When a common port of the switch is connected to the switch branch, the fourth connection point 344 is in a short-circuit state (electrically connected to the ground plane 300 directly, and no other element is disposed). For brevity of description, in the electronic device 100 shown in FIG. 14, only an example in which the first switch branch 361 includes an equivalent element and the second switch branch 362 includes an equivalent element is used for description.

In an embodiment, the first feed point 312 and the fourth connection point 344 are respectively located on the two sides of the virtual axis of the first radiator 310. In this case, the first radiator 310 may include or may not include the first ground point 351.

The fourth connection point 344 is coupled to the first switch branch 361. For example, a common port of the first switch 360 is coupled to the first connection port of the first switch 360, and the first switch branch 361 is coupled to the fourth connection point 344. The resonance frequency band of the resonance generated by the first radiator 310 includes the first frequency band (or the second frequency band).

The fourth connection point 344 is coupled to the second switch branch 362. For example, a common port of the first switch 360 is coupled to the second connection port of the first switch 360, and the second switch branch 362 is coupled to the fourth connection point 344. The resonance frequency band of the resonance generated by the first radiator 310 includes the first frequency band (or the second frequency band).

It should be understood that, when the fourth connection point 344 is coupled to the first switch branch 361 or the second switch branch 362 through the first switch 360, the resonance frequency band of the resonance generated by the first radiator 310 may include the first frequency band.

In this embodiment of this application (for example, the electronic device 100 shown in FIG. 14), an example in which the first antenna 301 is in a same operating state is used for description. It may be understood that a same operating state may be understood as that an operating frequency band of the first antenna 301 includes either the first frequency band or the second frequency band, and the first antenna 301 can communicate on the corresponding frequency band when the first switch 360 is coupled to the first switch branch 361 or the second switch branch 362.

In an embodiment, the first switch branch 361 and the second switch branch 362 may be configured to adjust current distribution on the first radiator 310 and the ground plane 300.

In an embodiment, the fourth connection point 344 is located on a first side of the virtual axis, and the first feed point 312 is located on a second side of the virtual axis.

It should be understood that, for brevity of description, in this embodiment of this application, only an example in which the fourth connection point 344 is located on the first side of the virtual axis and the first feed point 312 is located on the second side of the virtual axis is used for description. In actual production or application, the fourth connection point 344 may also be located on the second side of the virtual axis, and the first feed point 312 may also be located on the first side of the virtual axis. Similarly, corresponding understanding may also be made.

In an embodiment, the first switch branch 361 is coupled to the fourth connection point 344, the first antenna 301 operates on the first frequency band or the second frequency band, and a current (for example, a current intensity and a current density) on the ground plane 300 on the first side of the virtual axis is greater than a current on the ground plane 300 on the second side of the virtual axis.

In an embodiment, the first switch branch 361 is coupled to the fourth connection point 344, the first antenna 301 operates on the first frequency band or the second frequency band, and a current (for example, a current intensity and a current density) on the first radiator 310 on the first side of the virtual axis is greater than a current on the first radiator 310 on the second side of the virtual axis.

In an embodiment, the second switch branch 362 is coupled to the fourth connection point 344, the first antenna 301 operates on the first frequency band or the second frequency band, and a current (for example, a current intensity and a current density) on the ground plane 300 on the first side of the virtual axis is less than a current on the ground plane 300 on the second side of the virtual axis.

In an embodiment, the second switch branch 362 is coupled to the fourth connection point 344, the first antenna 301 operates on the first frequency band or the second frequency band, and a current (for example, a current intensity and a current density) on the first radiator 310 on the first side of the virtual axis is less than a current on the first radiator 310 on the second side of the virtual axis.

It should be understood that the current on the ground plane 300 in embodiments of this application may be understood as a current near an edge of the ground plane 300 close to the radiator/parasitic stub, for example, a current within a distance of 30 mm from the edge.

It should be understood that when a current (for example, a current intensity and a current density) on the ground plane 300 on the first side of the virtual axis is greater than a current on the ground plane 300 on the second side of the virtual axis, a first direction pattern generated by the first antenna 301 is deflected toward the second side. When a current (for example, a current intensity and a current density) on the ground plane 300 on the first side of the virtual axis is less than the current on the ground plane 300 on the second side of the virtual axis, a first direction pattern generated by the first antenna 301 is deflected toward the first side.

Therefore, a maximum radiation direction of the first direction pattern generated by the first antenna 301 may be deflected by switching the switch branch coupled to the fourth connection point 344, so that the first antenna 301 has a good radiation characteristic in a larger area.

In an embodiment, both the first switch branch 361 and the second switch branch 362 may be capacitive. An equivalent capacitance value of the first switch branch 361 and an equivalent capacitance value of the second switch branch 362 may be less than or equal to 2 pF.

It should be understood that, when the first switch branch 361 and the second switch branch 362 are capacitive, the equivalent capacitance value of the first switch branch 361 is less than the equivalent capacitance value of the second switch branch 362.

Compared with a case in which the first switch branch 361 is coupled to the fourth connection point 344, in a case in which the second switch branch 362 is coupled to the fourth connection point 344, the current on the ground plane 300 on the first side of the virtual axis is weakened, and the current on the ground plane 300 on the second side of the virtual axis is enhanced.

Compared with a case in which the second switch branch 362 is coupled to the fourth connection point 344, in a case in which the first switch branch 361 is coupled to the fourth connection point 344, the current on the ground plane 300 on the first side of the virtual axis is enhanced, and the current on the ground plane 300 on the second side of the virtual axis is weakened.

In an embodiment, both the first switch branch 361 and the second switch branch 362 may be inductive. An equivalent inductance value of the first switch branch 361 and an equivalent inductance value of the second switch branch 362 may be greater than or equal to 5 nH, and less than or equal to 100 nH.

It should be understood that, when the first switch branch 361 and the second switch branch 362 are inductive, the equivalent inductance value of the first switch branch 361 is less than the equivalent inductance value of the second switch branch 362.

Compared with a case in which the first switch branch 361 is coupled to the fourth connection point 344, in a case in which the second switch branch 362 is coupled to the fourth connection point 344, the current on the ground plane 300 on the first side of the virtual axis is weakened, and the current on the ground plane 300 on the second side of the virtual axis is enhanced.

Compared with a case in which the second switch branch 362 is coupled to the fourth connection point 344, in a case in which the first switch branch 361 is coupled to the fourth connection point 344, the current on the ground plane 300 on the first side of the virtual axis is enhanced, and the current on the ground plane 300 on the second side of the virtual axis is weakened.

In an embodiment, the first switch branch 361 may be capacitive, and the second switch branch 362 may be inductive.

Compared with a case in which the first switch branch 361 is coupled to the fourth connection point 344, in a case in which the second switch branch 362 is coupled to the fourth connection point 344, the current on the ground plane 300 on the first side of the virtual axis is weakened, and the current on the ground plane 300 on the second side of the virtual axis is enhanced.

Compared with a case in which the second switch branch 362 is coupled to the fourth connection point 344, in a case in which the first switch branch 361 is coupled to the fourth connection point 344, the current on the ground plane 300 on the first side of the virtual axis is enhanced, and the current on the ground plane 300 on the second side of the virtual axis is weakened.

In an embodiment, when the first switch branch 361 is coupled to the fourth connection point 344, the frequency difference between the resonance point frequency of the first resonance generated by the first antenna 301 and the resonance point frequency of the second resonance is a first frequency difference. When the second switch branch 362 is coupled to the fourth connection point 344, the frequency difference between the resonance point frequency of the first resonance generated by the first antenna 301 and the resonance point frequency of the second resonance is a second frequency difference. The first frequency difference is less than the second frequency difference.

In an embodiment, the first frequency difference is less than a first threshold, and the second frequency difference is greater than the first threshold. In an embodiment, the first threshold is 300 MHz. In an embodiment, the first threshold is 250 MHz. In an embodiment, the first threshold is 200 MHz. In an embodiment, the first threshold is 150 MHz.

It should be understood that the first switch branch 361 and the second switch branch 362 may be further configured to adjust a frequency difference between a resonance point frequency of a resonance generated in the wire CM mode and a resonance point frequency of a resonance generated in the wire DM mode.

Compared with the case in which the first switch branch 361 coupled to the fourth connection point 344, in the case in which the second switch branch 362 is coupled to the fourth connection point 344, the frequency difference between the resonance point frequency of the resonance generated in the wire CM mode and the resonance point frequency of the resonance generated in the wire DM mode is increased, the current on the ground plane 300 on the first side of the virtual axis is weakened, and the current on the ground plane 300 on the second side of the virtual axis is enhanced. Compared with the case in which the second switch branch 362 coupled to the fourth connection point 344, in the case in which the first switch branch 361 is coupled to the fourth connection point 344, the frequency difference between the resonance point frequency of the resonance generated in the wire CM mode and the resonance point frequency of the resonance generated in the wire DM mode is reduced, the current on the ground plane 300 on the first side of the virtual axis is enhanced, and the current on the ground plane 300 on the second side of the virtual axis is weakened.

In an embodiment, the first frequency difference is less than the second frequency difference. In an embodiment, a difference between the first frequency difference and the second frequency difference is greater than or equal to 100 MHz. In an embodiment, a difference between the first frequency difference and the second frequency difference is greater than or equal to 50 MHz.

It should be understood that, when the difference between the first frequency difference and the second frequency difference is within the foregoing range, and the fourth connection point 344 is separately coupled to the first switch branch 361 or the second switch branch 362, a difference between the current on the ground plane 300 on the first side of the virtual axis and the current on the ground plane 300 on the second side of the virtual axis is greater, so that a difference between the first direction pattern and the second direction pattern is greater (for example, an angle between maximum radiation directions increases), and a width of a radiation beam of the first antenna 301 can be further increased. The first antenna 301 has a wider beam width, so that the first antenna 301 has a better communication characteristic in a wider angle (an angle with a top direction) range.

In an embodiment, a length of the first side frame 210 between the first feed point 312 and the third position 203 is less than a length of the first side frame 210 between the fourth connection point 344 and the third position 203.

It should be understood that the first feed point 312 may be located on a side close to the second antenna 302. In an embodiment, the first feed circuit 311 and the second feed circuit 321 may be generated by different radio frequency channels of a same radio frequency chip. When the first feed point 312 is close to the second feed point 322, a current transmission path from the radio frequency chip to the first feed point 312 and the second feed point 322 is short, so that a loss caused by line transmission can be reduced, and a radiation characteristic of the antenna can be improved.

In addition, because an area near a feed point usually has a strong current, when the first feed point 312 may be located on a side close to the second antenna 302, a current on the ground plane 300 on the second side of the virtual axis may be more easily enhanced. In this way, a maximum radiation direction of a direction pattern generated by the first antenna 301 is deflected toward a side away from the second antenna 302, so that a difference between the direction patterns generated by the first antenna 301 and the second antenna 302 is larger. In this way, the electronic device 100 has a good communication characteristic in a wider angle (an angle with the top direction) range.

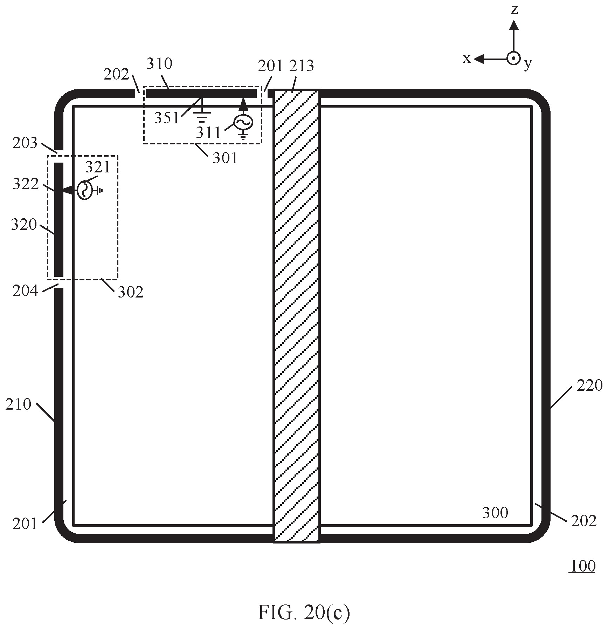

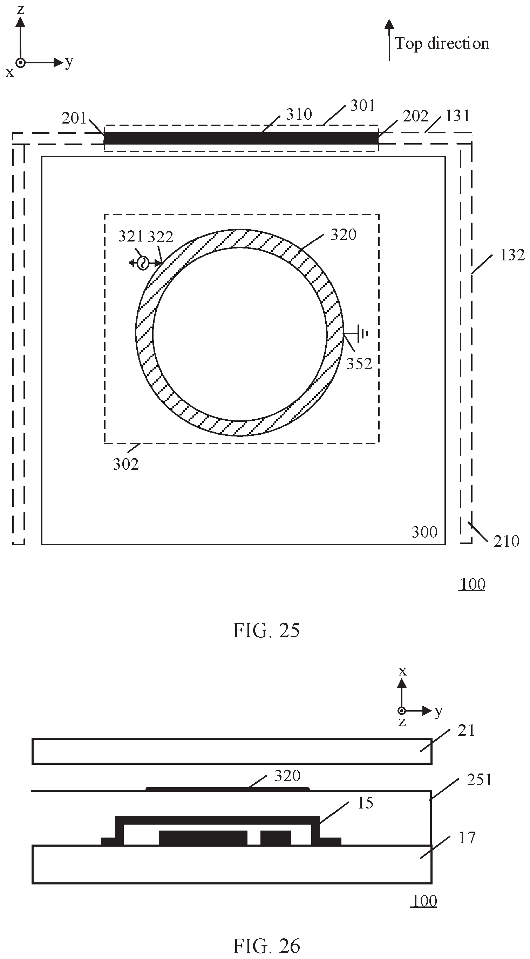

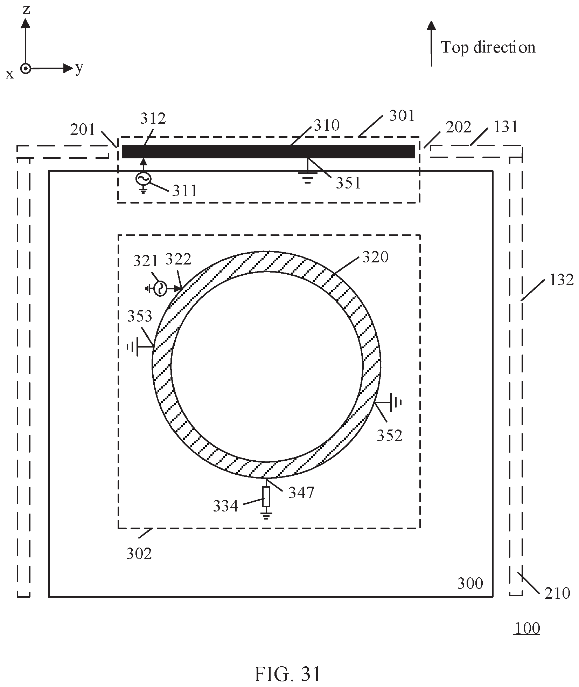

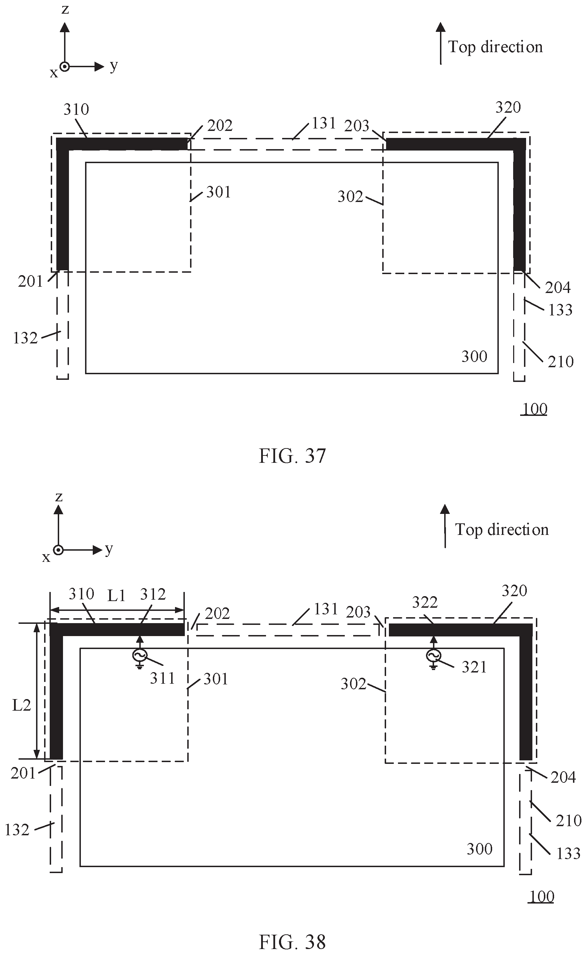

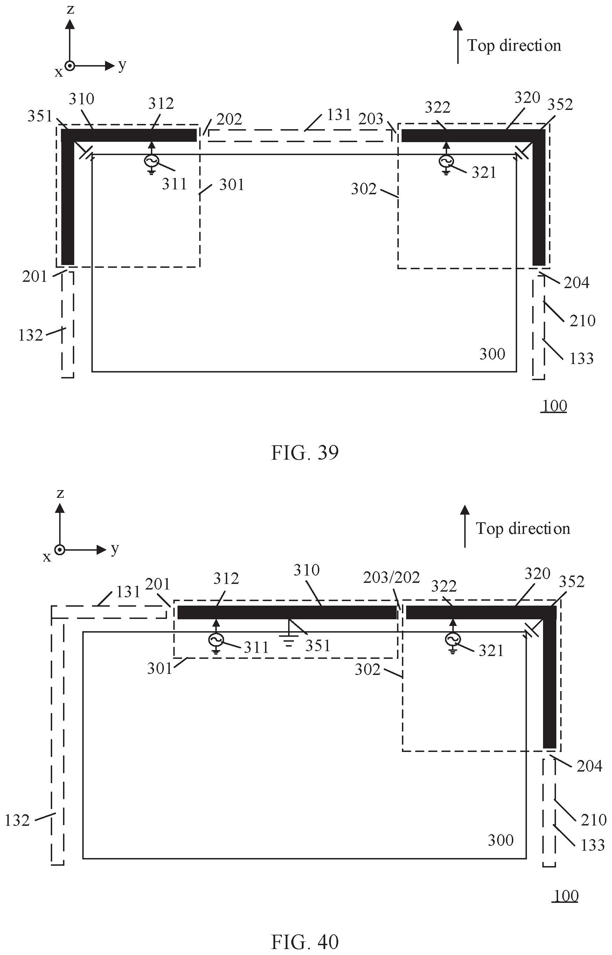

It should be understood that, when the operating mode of the antenna in this embodiment of this application includes the wire DM mode (two ends of the antenna are open ends), switching between the first direction pattern and the second direction pattern may be implemented through a structure similar to the first antenna 301 shown in FIG. 15. For example, for a first antenna 301 and a second antenna 302 shown in FIG. 13, a first antenna 301 and a second antenna 302 shown in FIG. 14, a second antenna 302 shown in FIG. 20(a), a first antenna 301 shown in FIG. 20(b) and FIG. 20(c), a first antenna 301 shown in FIG. 25, a first antenna 301 shown in FIG. 31, a first antenna 301 and a second antenna 302 shown in FIG. 38, a first antenna 301 and a second antenna 302 shown in FIG. 39, and the like, for brevity of description, details are not described again.

In an embodiment, the second radiator 320 may be configured to generate a third resonance, and a resonance frequency band of the third resonance includes the first frequency band and/or the second frequency band.

In an embodiment, the first side frame 210 is coupled to the ground plane 300 at the third position 203, and has a fourth insulation slot at the fourth position 204, as shown in FIG. 15.

It should be understood that one end of the second radiator 320 is a ground end, and the other end is an open end, to form a structure similar to an inverted F antenna or a left-handed antenna. The left-handed antenna may be, for example, an antenna that conforms to a composite right and left hand (composite right and left hand, CRLH) transmission line structure.

When the second radiator 320 forms the structure similar to the inverted F antenna, the second feed point 322 is close to the ground end, and a distance between the second feed point 322 and the ground end (a length of the second radiator 320 between the second feed point 322 and the third position 203) is less than or equal to a half of a length of the second radiator 320.

When the second radiator 320 forms the structure similar to the left-handed antenna, the second feed point 322 is close to the open end, and a distance between the second feed point 322 and the ground end (a length of the second radiator 320 between the second feed point 322 and the third position 203) is greater than or equal to a half of a length of the second radiator 320. When the second feed point 322 is close to the open end, miniaturization of the second radiator 320 is facilitated. A capacitor is coupled between the second feed circuit 321 and the second feed point 322, to better excite the second radiator 320.

For brevity of description, formation of the structure similar to the inverted F antenna or the left-handed antenna may be correspondingly understood in embodiments of this application. Details are not described again.

In an embodiment, the third resonance generated by the second radiator 320 may correspond to the quarter-wavelength mode. An electrical length of the second radiator 320 may be a quarter of a second wavelength, and the second wavelength is a wavelength corresponding to the third resonance.

In an embodiment, the first side frame 210 further includes a fifth position 205, and the fourth position 204 is located between the third position 203 and the fifth position 205. The first side frame 210 is coupled to the ground plane 300 at the fifth position 205.

In an embodiment, the second antenna 302 further includes a first parasitic stub 330. The first parasitic stub 330 includes a conductive part of the first side frame 210 between the fifth position 205 and the fourth position 204.

It should be understood that the first parasitic stub 330 may be configured to improve a radiation characteristic of the second antenna 302 on the first frequency band and/or the second frequency band.

In an embodiment, when the first parasitic stub 330 generates a parasitic resonance close to the second resonance generated by the second radiator 320 (a frequency difference between a resonance point of the parasitic resonance and a resonance point of the second resonance is less than or equal to 300 MHz and greater than or equal to 100 MHz), the first parasitic resonance 330 may be used to improve radiation efficiency of the second antenna 302 on the first frequency band and/or the second frequency band.

In an embodiment, when the first parasitic stub 330 generates a parasitic resonance far away from the second resonance generated by the second radiator 320 (a frequency difference between a resonance point of the parasitic resonance and a resonance point of the second resonance is greater than or equal to 300 MHz), the first parasitic resonance 330 may be configured to improve a beam width of the second antenna 302 on the first frequency band and/or the second frequency band. A current on the first parasitic stub 330 and a current on the second radiator 320 are co-directional, so that the second antenna 302 has a better communication characteristic within a larger angle range relative to the top direction on one side of the first parasitic stub 330.

In an embodiment, the third position 203 is located between the fourth position 204 and the fifth position 205. The first side frame 210 has an insulation slot at the fifth position 205.

It should be understood that, in the foregoing embodiments, the first parasitic stub 330 and the second radiator 320 are opposite to each other through the fourth insulation slot and do not contact each other (open ends are close to each other). In actual production or design, the first parasitic stub 330 and the second radiator 320 may alternatively be connected through the third position 203 (ground ends are close to each other).

It should be understood that the antenna in this application may include a parasitic stub. The parasitic stub may be configured to improve a radiation characteristic (for example, a beam width or radiation efficiency) of the antenna. For brevity of description, details are not described again.

In an embodiment, the first side frame 210 is coupled to the ground plane 300 at the third position 203, and has a fourth insulation slot at the fourth position 204. The second radiator 320 includes a fifth connection point 345 and a sixth connection point 346. The second radiator 320 has a sixth insulation slot between the fifth connection point 345 and the sixth connection point 346, as shown in FIG. 12.

In an embodiment, the second antenna 302 further includes a third element 333. The third element 333 is coupled between the fifth connection point 345 and the sixth connection point 346.

It should be understood that the second radiator 320 is a structure in which one end is a ground end and the other end is an open end. Similarly, in the electronic device 100 shown in FIG. 12, the second radiator 320 may also form a metamaterial structure. For brevity of description, details are not described again. Refer to the metamaterial structure in the foregoing embodiments for corresponding understanding.

In an embodiment, the first side frame 210 has a third insulation slot and a fourth insulation slot respectively at the third position 203 and the fourth position 204, as shown in FIG. 13.

In an embodiment, a distance between the second feed point 322 and the third position 203 (a length of the first side frame 210 between the second feed point 322 and the third position 203) is different from a distance between the second feed point 322 and the fourth position 204 (a length of the first side frame 210 between the second feed point 322 and the fourth position 204).

It should be understood that the third resonance generated by the second radiator 320 is generated in the wire DM mode in the foregoing embodiments. Similarly, for understanding, refer to the corresponding descriptions in the foregoing embodiments.

In an embodiment, two ends of the second radiator 320 are open ends, and the second radiator 320 may operate in the one-half-wavelength mode. An electrical length of the second radiator 320 is a half of a second wavelength.

In an embodiment, the second radiator 320 may further include a second ground point 352, as shown in FIG. 14. The second radiator 320 is coupled to the ground plane 300 at the second ground point 352.

In an embodiment, the second ground point 352 may be located in a central area of the second radiator 320. The central area may be understood as an area within 5 mm from the center of the second radiator 320, and lengths of second radiator 320 on two sides of the center are the same.

It should be understood that increasing structural symmetry of the second antenna 302 allows the second antenna 302 to have better communication performance.

In an embodiment, grounding may be implemented at the second ground point 352 through a ground member. A width of a joint between the ground member and the first side frame 210 is greater than or equal to 1 mm and less than or equal to 20 mm.

In an embodiment, when the ground member includes at least a part of the central area of the second radiator 320, it may be considered that the second ground point 352 is located in the central area of the second radiator 320.

It should be understood that, when the second radiator 320 is coupled to the ground plane 300 at the second ground point 352, the second radiator 320 may further generate a fourth resonance in the wire CM mode, and the fourth resonance may be used to improve a radiation characteristic (for example, radiation efficiency) of the second antenna 302 on the first frequency band and/or the second frequency band.

In an embodiment, a resonance point frequency of the third resonance may be higher than a resonance point frequency of the fourth resonance. A ratio of the resonance point frequency of the third resonance to the resonance point frequency of the fourth resonance may be greater than or equal to 1.1 and less than or equal to 1.5. In an embodiment, a ratio of the resonance point frequency of the third resonance to the resonance point frequency of the fourth resonance may be greater than or equal to 1.3 and less than or equal to 1.5.

In an embodiment, a frequency difference between the resonance point frequency of the third resonance and the resonance point frequency of the fourth resonance may be greater than or equal to 100 MHz and less than or equal to 500 MHz.

It should be understood that, on the first frequency band (or the second frequency band), the second antenna 302 may operate in the wire DM mode. The fourth resonance may be used to improve a radiation characteristic (for example, radiation efficiency) of the second antenna 302 on a resonance frequency band of the third resonance.

In an embodiment, a resonance point frequency of the third resonance may be higher than a resonance point frequency of the fourth resonance. A ratio of the resonance point frequency of the third resonance to the resonance point frequency of the fourth resonance may be less than or equal to 1.3. In an embodiment, the center frequency of the first frequency band is greater than the resonance point frequency of the fourth resonance and less than the resonance point frequency of the third resonance.

It should be understood that, on the first frequency band (or the second frequency band), the second antenna 302 may operate in a hybrid mode of the wire CM mode and the wire DM mode, and radiation is jointly generated in the wire CM mode and the wire DM mode. The second antenna 302 has both a part of radiation characteristics of the wire CM mode and a part of radiation characteristics of the wire DM mode.

In an embodiment, a ratio of the resonance point frequency of the third resonance to the resonance point frequency of the fourth resonance is less than or equal to 1.2. In an embodiment, a frequency difference between the resonance point frequency of the first resonance and the resonance point frequency of the second resonance is less than or equal to 300 MHz.

In an embodiment, the first antenna 301 and the second antenna 302 that are included in the electronic device 100 may be any first antenna 301 shown in FIG. 12 to FIG. 15, any second antenna 302, or any combination of the first antenna 301 and the second antenna 302.

It should be understood that, when a difference between the first direction pattern generated by the first antenna 301 and the second direction pattern generated by the second antenna 302 is large, the electronic device 100 switches between the first antenna 301 and the second antenna 302 to perform satellite communication, or performs satellite communication through both the first antenna 301 and the second antenna 302, so that good communication quality can be achieved in a larger area.

For example, when the first antenna 301 and the second antenna 302 are the first antenna 301 and the second antenna 302 shown in FIG. 13 or FIG. 14 (the radiator does not include a ground point as shown in FIG. 14 or the radiator includes a ground point as shown in FIG. 14), an operating mode of a first antenna 301 located at the top is the wire DM mode, and an electrical length of the entire stub is approximately a half wavelength. The first radiator 310 is fed at one end, and the other end of the first radiator 310 is tuned through a capacitor or an inductive device. A middle area of the first radiator 310 may be grounded or may not be grounded. When the middle area of the first radiator 310 is grounded, a resonance generated in the wire CM mode is adjusted before a resonance generated in the wire DM mode, so that a resonance generated when the first antenna operates is exactly in the wire DM mode, and the first antenna 301 has optimal radiation efficiency and a radiation pattern in the top direction. Similarly, a second antenna 302 located at the waist is also fed at one end of the second radiator 320, and the other end of the second radiator 320 is tuned through a capacitor or an inductive device. A middle area of the second radiator 320 may be grounded or may not be grounded. When the middle area of the second radiator 320 is grounded, a resonance generated in the wire CM mode is adjusted before a resonance generated in the wire DM mode, so that a resonance generated when the second antenna operates is exactly in the wire DM mode, and a radiation pattern toward one side is implemented. Because both the first antenna 301 and the second antenna 302 can implement upper hemispherical (an upper hemispherical area) coverage and have a specific direction pattern complementarity, wide beam coverage can be implemented by combining the two antennas.

When the first antenna 301 and the second antenna 302 are the first antenna 301 and the second antenna 302 shown in FIG. 14, there is a coverage null on a left side of a composite direction pattern of the first antenna 301 and the second antenna 302. To enhance the coverage on the left side, an unbalanced wire DM mode (the first antenna 301 shown in FIG. 15) is introduced in the design of the first antenna 301 located at the top. To be specific, the resonance generated in the wire CM mode is adjusted to a position before the resonance generated in the wire DM mode, so that currents generated in the wire DM mode are deflected to the right side, a current mode is in a distribution of being strong on the right and weak on the left, and a corresponding direction pattern is deflected to the left. Therefore, the direction pattern is combined with the second antenna 302 located on the waist, to obtain a direction pattern that covers a top side (a top direction), a left side (a left side of the top direction), and a right side a right side of the top direction). Therefore, the two antennas can be combined to implement better wide beam coverage.

In an embodiment, a structure of the first radiator 310 is the same as a structure of the second radiator 320.

The same structure may be understood as a same boundary condition. For example, one end is a ground end, and the other end is an open end, or both ends are open ends.

It should be understood that, when the first antenna 301 and the second antenna 302 have good symmetry, the electronic device 100 switches between the first antenna 301 and the second antenna 302 to perform satellite communication, or performs satellite communication through both the first antenna 301 and the second antenna 302, so that good communication quality can be achieved in a larger area.

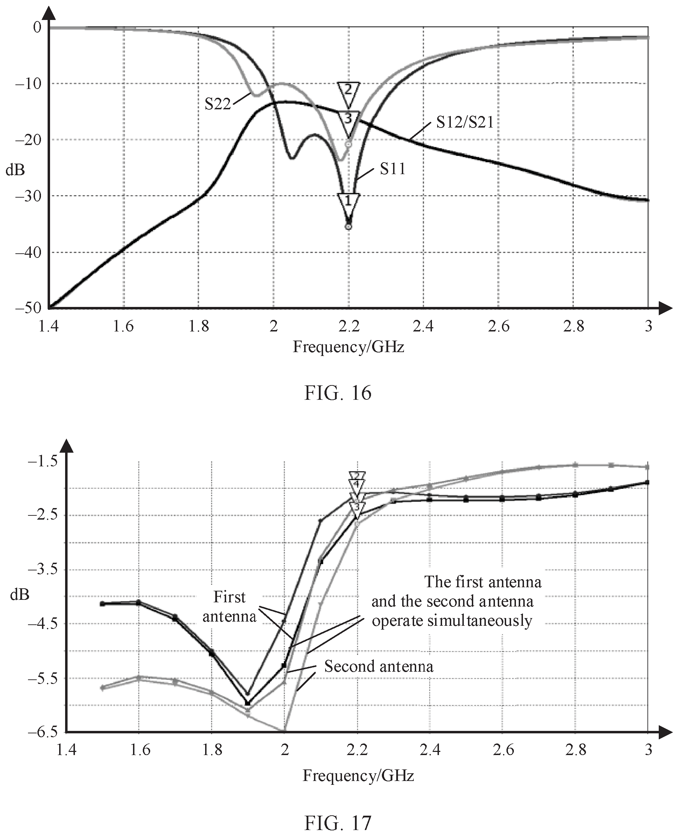

FIG. 16 and FIG. 17 show simulation results of the first antenna 301 and the second antenna 302 in the electronic device 100 shown in FIG. 14. FIG. 16 shows simulation results of S parameters of the first antenna 301 and the second antenna 302 in the electronic device 100 shown in FIG. 14. FIG. 17 shows simulation results of radiation efficiency of the first antenna 301 and the second antenna 302 in the electronic device 100 shown in FIG. 14.

It should be understood that, for brevity of description, only an example in which the first antenna 301 and the second antenna 302 in the electronic device 100 are the combination shown in FIG. 12 to FIG. 15 is used for description. In actual production or design, the first antenna 301 in the combination may be any first antenna shown in FIG. 12 to FIG. 15, and the second antenna 302 in the combination may be any second antenna shown in FIG. 12 to FIG. 15. For brevity of description, details are not described again.

As shown in FIG. 16, the first antenna (S11) may generate a resonance near 2.05 GHz and a resonance near 2.2 GHz. The resonance generated near 2.05 GHz may correspond to the second resonance in the foregoing embodiments, and the resonance generated near 2.2 GHz may correspond to the first resonance in the foregoing embodiments. A resonance frequency band of the first resonance may include the second frequency band.

The second antenna (S22) may generate a resonance near 1.95 GHz and a resonance near 2.15 GHz. The resonance generated near 1.95 GHz may correspond to the fourth resonance in the foregoing embodiments, and the resonance generated near 2.15 GHz may correspond to the third resonance in the foregoing embodiments. A resonance frequency band of the third resonance may include the second frequency band.

On the second frequency band (for example, from 2170 MHz to 2200 MHz), isolation (S12/S21) between the first antenna and the second antenna is greater than 15 dB, and the first antenna and the second antenna have good isolation.

As shown in FIG. 17, when only the first antenna in the electronic device operates, on the second frequency band (for example, from 2170 MHz to 2200 MHz), radiation efficiency of the first antenna is approximately -2.1 dB.

When only the second antenna in the electronic device operates, on the second frequency band (for example, from 2170 MHz to 2200 MHz), radiation efficiency of the second antenna is approximately -2.2 dB.

When the first antenna and the second antenna in the electronic device operate simultaneously, on the second frequency band (for example, from 2170 MHz to 2200 MHz), radiation efficiency of the first antenna decreases by approximately 0.4 dB, and radiation efficiency of the second antenna decreases by approximately 0.4 dB.

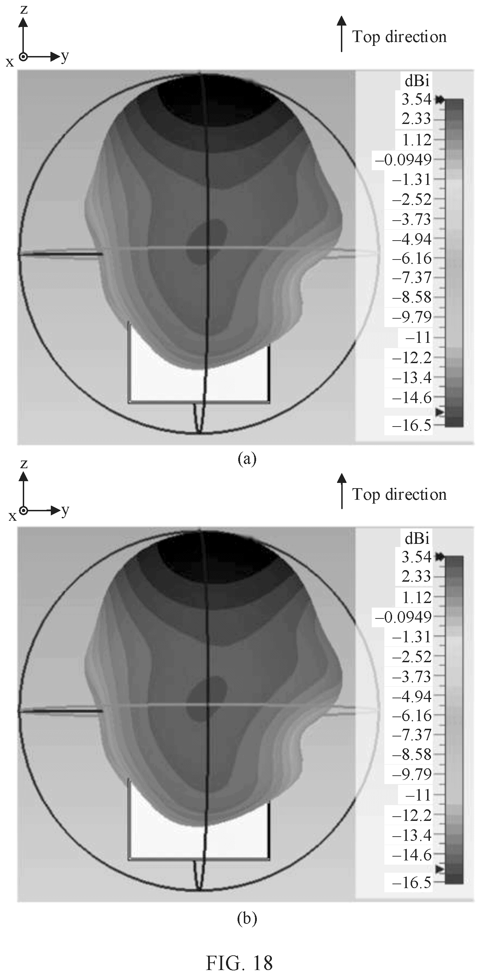

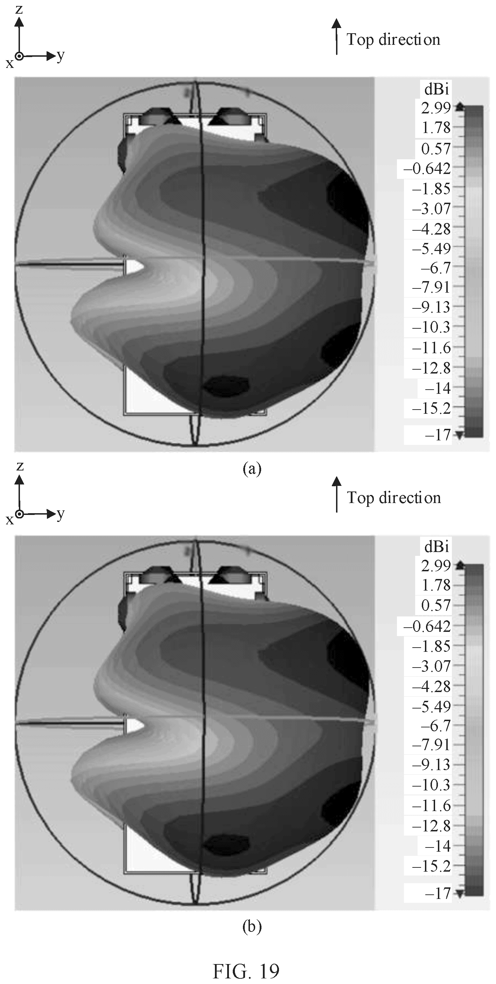

FIG. 18 and FIG. 19 are direction patterns generated by the first antenna 301 and the second antenna 302 in the electronic device 100 shown in FIG. 14. FIG. 18 is a first direction pattern generated by the first antenna 301 in the electronic device 100 shown in FIG. 14. FIG. 19 is a second direction pattern generated by a second antenna 302 in the electronic device 100 shown in FIG. 14.

As shown in FIG. 18, a maximum radiation direction of the first direction pattern generated by the first antenna faces the top direction (for example, the z direction) of the electronic device.

As shown in FIG. 19, a maximum radiation direction of the second direction pattern generated by the second antenna faces a side edge direction (a direction perpendicular to the second edge, for example, a y direction) of the electronic device.

It should be understood that an angle between the maximum radiation direction of the first direction pattern generated by the first antenna and the maximum radiation direction of the second direction pattern generated by the second antenna is large, and the electronic device may switch the first antenna or the second antenna (or the first antenna and the second antenna operate simultaneously), so that the communication satellite is always in an area in which the electronic device has a good radiation characteristic.

FIG. 20(a) to FIG. 20(c) are a diagram of another electronic device 100 according to an embodiment of this application.

As shown in FIG. 20(a) to FIG. 20(c), the electronic device 100 may include a first housing 211, a second housing 212, and a first rotating shaft 213.

The first housing 211 includes a first side frame 210, and at least a part of the first side frame 210 is spaced from the ground plane 300. The second housing 212 includes a second side frame 220, and at least a part of the second side frame 220 is spaced from the ground plane 300.

The first rotating shaft 213 is located between the first housing 211 and the second housing 212, and the first rotating shaft 213 is rotatably connected to the first housing 211 and the second housing 212 separately, so that the first housing 211 and the second housing 212 can rotate relative to each other.

It should be understood that, in the electronic device 100 shown in FIG. 20(a) to FIG. 20(c), the electronic device 100 is a foldable electronic device, and the first rotating shaft 213 is directly connected to the first housing 211 and the second housing 212 separately, so that the first housing 211 and the second housing 212 can rotate relative to each other. In addition, "the first rotating shaft 213 is rotatably connected to the first housing 211 and the second housing 212 separately" includes that the first rotating shaft 213 may be rotatably connected to the first housing or the second housing through one or more second rotating shafts and one or more intermediate housings. For example, in an embodiment, the electronic device 100 may further include a first rotating shaft, a second rotating shaft, and one or more intermediate housings located between the first rotating shaft and the second rotating shaft. The first rotating shaft is located between the first housing 211 and the intermediate housing, and the first rotating shaft is rotatably connected to the first housing 211 and the intermediate housing separately, so that the first housing 211 and the intermediate housing can rotate relative to each other. The second rotating shaft is located between the intermediate housing and the second housing 212, and the first rotating shaft 213 is rotatably connected to the intermediate housing and the second housing 212 separately, so that the intermediate housing and the second housing 212 can rotate relative to each other.

It should be understood that a difference between the electronic device 100 shown in FIG. 20(a) to FIG. 20(c) and the electronic device 100 shown in FIG. 11 to FIG. 15 lies only in whether the electronic device 100 can be folded.

As shown in FIG. 20(a) to FIG. 20(c), the electronic device 100 includes a first antenna 301 and a second antenna 302.

The first antenna 301 may be any first antenna shown in FIG. 12 to FIG. 15. The second antenna 302 may be any second antenna shown in FIG. 12 to FIG. 15.

In an embodiment, the first antenna 301 may be of a metamaterial structure (for example, the first antenna 301 shown in FIG. 12), and the second antenna 302 may be of a structure in which two ends are open ends and that includes a second ground point 352 (for example, the second antenna 302 shown in FIG. 14), as shown in FIG. 20(a).

In an embodiment, the first antenna 301 may be of a structure in which two ends are open ends and that does not include a first ground point 351 (for example, the first antenna 301 shown in FIG. 13), and the second antenna 302 may be of a metamaterial structure (for example, the second antenna 302 shown in FIG. 12), as shown in FIG. 20(b).

In an embodiment, the first antenna 301 may be of a structure in which two ends are open ends and that includes a first ground point 351 (for example, the first antenna 301 shown in FIG. 14), and the second antenna 302 may be a structure in which two ends are open ends and that does not include a second ground point 352 (for example, the second antenna 302 shown in FIG. 13), as shown in FIG. 20(c).

It should be understood that, for brevity of description, in the electronic device 100 shown in FIG. 20(a) to FIG. 20(c), only an example in which the first antenna 301 is the first antenna 301 shown in any one of FIG. 12 to FIG. 15 and the second antenna 302 is the second antenna 302 shown in any one of FIG. 12 to FIG. 15 is used for description.

For brevity of description, similar parts between the first antenna 301 and the second antenna 302 shown in FIG. 12 to FIG. 15 and the first antenna 301 and the second antenna 302 shown in FIG. 20(a) to FIG. 20(c) are not described again one by one. For example, the similar parts include: a position and a structure of the first radiator 310; a resonance generated by the first radiator 310; a position and a structure of the second radiator 320; a resonance generated by the second radiator 320; a position of the first feed point 312; a position of the second feed point 322; a relationship between a first frequency band and a second frequency band; an equivalent inductance or equivalent capacitance value of a corresponding element when the first radiator 310 and the second radiator 320 are of a metamaterial structure; a position of a connection point on the radiator; and the like.

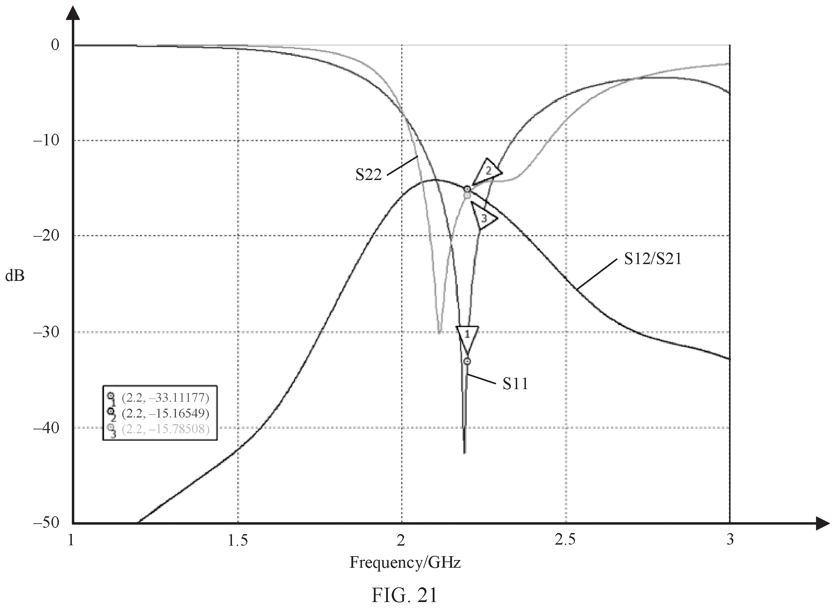

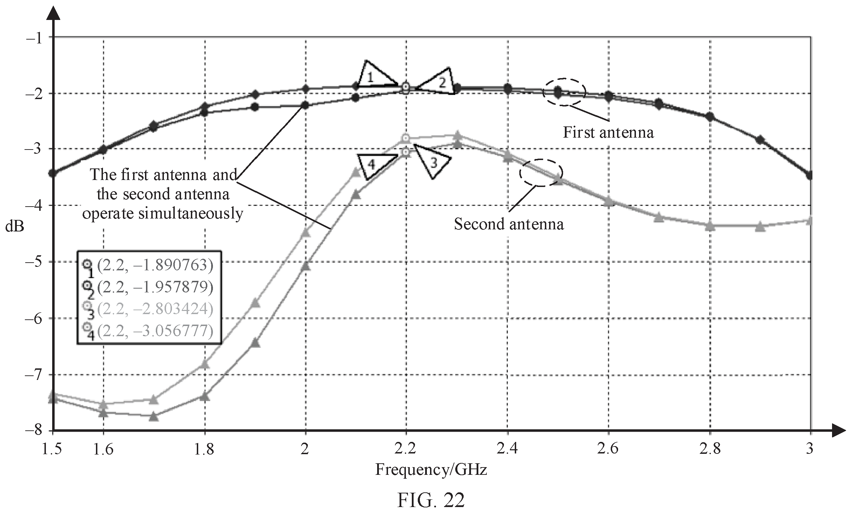

FIG. 21 and FIG. 22 show simulation results of the first antenna 301 and the second antenna 302 in the electronic device 100 shown in FIG. 20(a). FIG. 21 shows simulation results of S parameters of the first antenna 301 and the second antenna 302 in the electronic device 100 shown in FIG. 20(a). FIG. 22 shows simulation results of radiation efficiency of the first antenna 301 and the second antenna 302 in the electronic device 100 shown in FIG. 20(a).

As shown in FIG. 21, the first antenna (S11) may generate a resonance near 2.15 GHz, and the resonance generated near 2.15 GHz may correspond to the first resonance in the foregoing embodiments.

The second antenna (S22) may generate a resonance near 2.1 GHz and a resonance near 2.3 GHz. The resonance generated near 2.1 GHz may correspond to the fourth resonance in the foregoing embodiments, and the resonance generated near 2.3 GHz may correspond to the third resonance in the foregoing embodiments. A center frequency of the second frequency band is greater than a resonance point frequency of the fourth resonance, and is less than a resonance point frequency of the third resonance. On the second frequency band, the second antenna generates radiation in a wire CM mode and a wire DM mode.

On the second frequency band (for example, from 2170 MHz to 2200 MHz), isolation (S12/S21) between the first antenna and the second antenna is greater than 15 dB, and the first antenna and the second antenna have good isolation.

It should be understood that, in the diagram of the simulation results shown in FIG. 21, S parameters at a same frequency (for example, 2.2 GHz) are shown, and the frequency is located on the second frequency band (for example, from 2170 MHz to 2200 MHz). In an actual simulation and debugging result, depths in the S parameters may be different. Generally, it is considered that a communication function can be provided when the depth is greater than 3 dB.

As shown in FIG. 22, when only the first antenna in the electronic device operates, on the second frequency band (for example, from 2170 MHz to 2200 MHz), radiation efficiency of the first antenna is approximately -1.89 dB.

When only the second antenna in the electronic device operates, on the second frequency band (for example, from 2170 MHz to 2200 MHz), radiation efficiency of the second antenna is approximately -2.8 dB.

When the first antenna and the second antenna in the electronic device operate simultaneously, on the second frequency band (for example, from 2170 MHz to 2200 MHz), radiation efficiency of the first antenna decreases by approximately 0.1 dB, and radiation efficiency of the second antenna decreases by approximately 0.2 dB.

It should be understood that, in the diagram of the simulation results shown in FIG. 22, radiation efficiency at a same frequency (2.2 GHz) is shown, and the frequency is located on the second frequency band (for example, from 2170 MHz to 2200 MHz). In an actual simulation and debugging result, radiation efficiency in a radiation efficiency curve may be different. Generally, it is considered that a communication function can be provided when the radiation efficiency is greater than -8 dB.

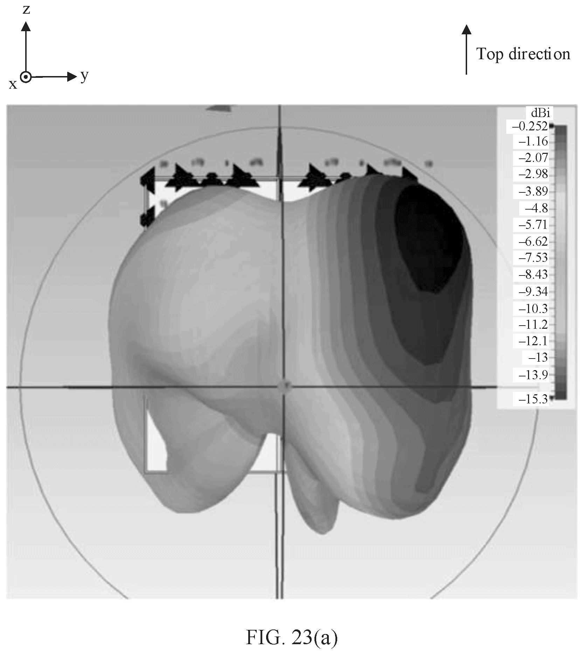

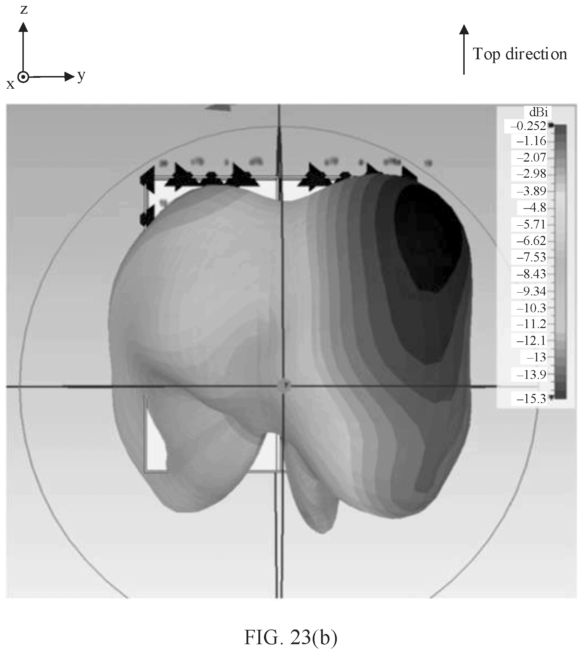

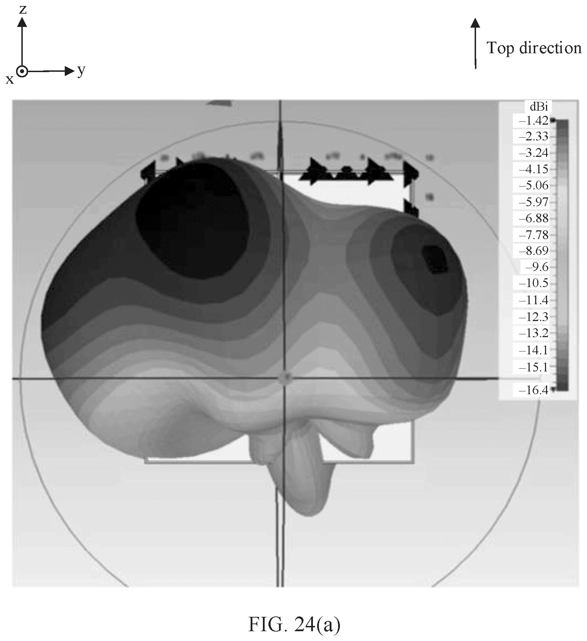

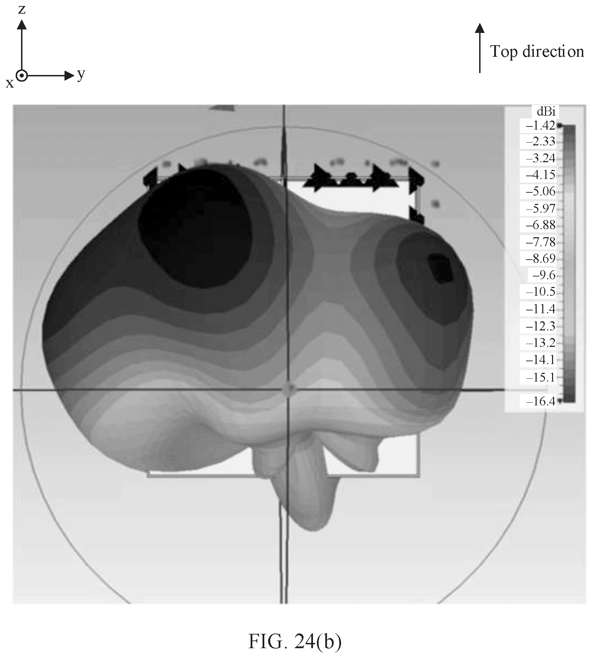

FIG. 23(a) and FIG. 23(b) and FIG. 24(a) and FIG. 24(b) are direction patterns generated by the first antenna 301 and the second antenna 302 in the electronic device 100 shown in FIG. 20(a). FIG. 23(a) and FIG. 23(b) are a first direction pattern generated by the first antenna 301 in the electronic device 100 shown in FIG. 20(a). FIG. 24(a) and FIG. 24(b) are a second direction pattern generated by the second antenna 302 in the electronic device 100 shown in FIG. 20(a).

As shown in FIG. 23(a) and FIG. 23(b), in the electronic device 100 shown in FIG. 20(a) to FIG. 20(c), a size of the ground plane is large, and due to traction of a current generated on the ground plane, a maximum radiation direction of the first direction pattern generated by the first antenna faces a top direction (for example, a z direction) of the electronic device and is deflected toward a housing on a side on which the first antenna is not disposed (deflected toward a side on which the second housing is located).

As shown in FIG. 24(a) and FIG. 24(b), a maximum radiation direction of the second direction pattern generated by the second antenna faces the top direction (for example, the z direction) of the electronic device, and has good radiation on both sides of the top direction.

It should be understood that an angle between the maximum radiation direction of the first direction pattern generated by the first antenna and the maximum radiation direction of the second direction pattern generated by the second antenna is large, and the electronic device may switch the first antenna or the second antenna (or the first antenna and the second antenna operate simultaneously), so that the communication satellite is always in an area in which the electronic device has a good radiation characteristic.

FIG. 25 is a diagram of another electronic device 100 according to an embodiment of this application.

As shown in FIG. 25, a second radiator 320 includes a second ground point 352, and the second ground point 352 is coupled to a ground plane 300. The second radiator 320 is attached to a rear cover 21 of the electronic device 100.

It should be understood that, that the second radiator 320 is attached to the rear cover 21 of the electronic device 100 may be understood as that the second radiator 320 is located on a surface of the rear cover 21, or is disposed on the surface of the rear cover 21 through another mechanical part. Alternatively, that the second radiator 320 is attached to the rear cover 21 of the electronic device 100 may be understood as that, in the electronic device 100, the second radiator 320 is disposed adjacent to the rear cover 21. The "adjacent" may be understood as, for example, a distance between the second radiator 320 and the rear cover 21 is within 5 mm, or a distance between the second radiator and the rear cover 21 is within 3 mm. In an embodiment, the second radiator 320 may be located on a side of a plane on which the rear cover 21 is located.

In an embodiment, the second radiator 320 may be located on an inner side (a side close to a PCB 17) of the rear cover 21, as shown in FIG. 26. In an embodiment, the second radiator 320 may be located between the rear cover 21 and the PCB 17. In an embodiment, the electronic device 100 may further include a bracket 251, and the second radiator 320 is located on a surface of the bracket 251. In an embodiment, a shielding case 15 may be disposed between the bracket 251 and the PCB 17. In an embodiment, an electronic element may be disposed in the shielding case 15, so that mutual interference between the electronic element and the second radiator 320 can be avoided.

It should be understood that, when the second radiator 320 is located on an inner side of the electronic device 100, because the second radiator 320 is not located on an appearance surface of the electronic device 100, the second radiator 320 can be flexibly disposed.

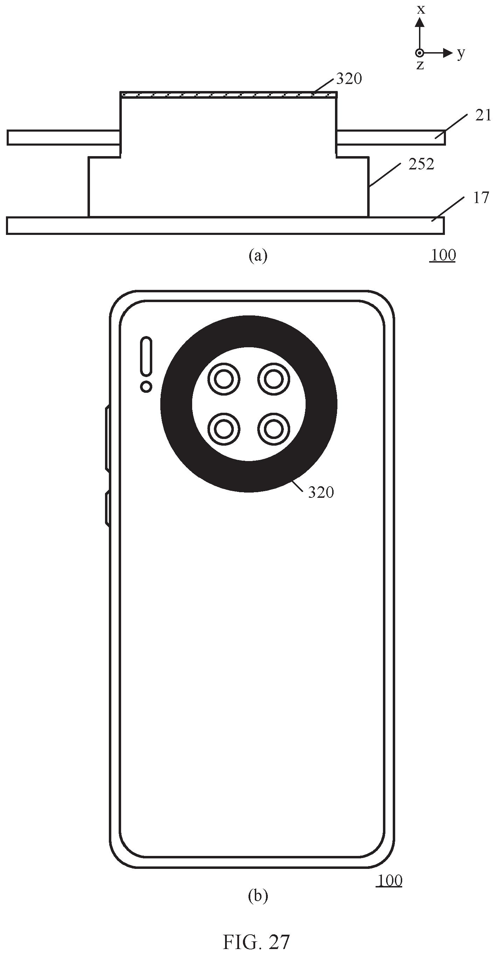

In an embodiment, the second radiator 320 may be located on an outer side (a side away from the PCB 17) of the rear cover 21, as shown in FIG. 27. In an embodiment, the second radiator 320 may be a deco (deco) of a camera module 252 of the electronic device 100. The deco may be located on an outer surface of the camera module 252 and surrounds the camera module 252.

It should be understood that, when the second radiator 320 is disposed on the outer side of the electronic device 100, a radiation environment of the second antenna 302 is better (for example, a clearance is greater, and a distance from an electronic element disposed on the PCB 17 is longer), and the second antenna 302 has a better radiation characteristic (for example, radiation efficiency).

In an embodiment, a distance (for example, a maximum distance) between the first radiator 310 and the second radiator 320 in an extension direction (for example, a z direction) of a second edge 132 is less than or equal to a half of a length of the second edge 132.

It should be understood that the first radiator 310 and/or the second radiator 320 may be located on an upper half part (an area close to a top) of the electronic device 100, which is more conducive to radiation generated by the first antenna 301 and/or the second antenna 302 in a top direction, so that quality of communication between the electronic device 100 and a communication satellite is good.

It should be understood that a difference between the electronic device 100 shown in FIG. 25 and the electronic device 100 shown in FIG. 11 to FIG. 15 and FIG. 20(a) to FIG. 20(c) lies only in a structure and a position of the second radiator 320. In the foregoing embodiments, the second radiator 320 includes a conductor part of a first side frame 210 between a third position 203 and a fourth position 204, and the third position 203 and the fourth position 204 are located on the second edge 132. However, in the electronic device 100 shown in FIG. 25, the second radiator 320 is a conductor disposed on a side of the rear cover 21. The first antenna 301 in the electronic device 100 shown in FIG. 25 may be any first antenna 301 in the electronic device 100 shown in FIG. 11 to FIG. 15. For brevity of description, in this embodiment of this application, only the first antenna 301 being the first antenna 301 shown in FIG. 14 is used for description, and details are not described again.

Because the first radiator 310 is located on a top edge of the electronic device 100, and the second radiator 320 is located on a side edge of the electronic device 100, the first antenna 301 may generate good radiation in the top direction, and has a good radiation characteristic. The second antenna 302 may be configured to improve radiation of the electronic device 100 in an upper hemispherical area. For example, the second antenna 302 may be configured to enhance radiation of the electronic device 100 in the top direction toward a side on which the second radiator 320 is located, and the electronic device 100 may have a good communication characteristic within a larger angle range relative to the top direction.

The upper hemispherical area may be understood as an area within an angle less than or equal to 90° relative to the top direction. In a coordinate system, the upper hemispherical area may be understood as an area that faces a positive direction of the z direction and that is on an xoy plane.

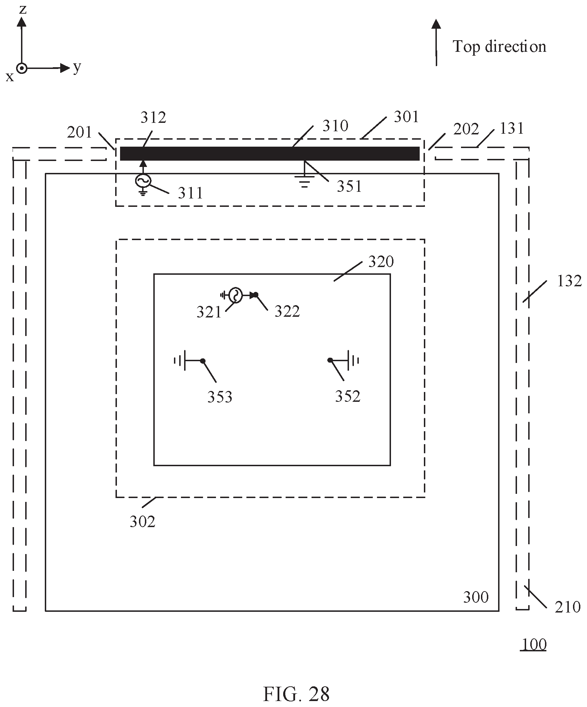

In an embodiment, the second radiator 320 may be in any shape. In an embodiment, the second radiator 320 may be in a ring shape, as shown in FIG. 25. For example, the second radiator 320 may be a deco of the camera module 252 of the electronic device 100. In an embodiment, the second radiator 320 may be in a sheet shape, as shown in FIG. 28.

It should be understood that the second radiator 320 may be in a bar shape (for example, a ratio of a length to a width is greater than or equal to 3), a circular shape, a trapezoidal shape, a triangular shape, or the like. A shape of the second radiator 320 is not limited in embodiments of this application, and may be determined based on actual production or design. Details are not described again.

In an embodiment, the second radiator 320 may form a structure similar to a patch (patch) antenna.

It should be understood that the patch antenna may be understood as that the radiator has a specific width (for example, a ratio of a length of the radiator to the width of the radiator is less than or equal to 10), and the radiator and the ground plane are disposed face to face (face to face) (for example, a plane on which the radiator is located is approximately parallel to a plane on which the ground plane is located).

In an embodiment, the second radiator 320 may be configured to generate a third resonance and a fourth resonance. A resonance point frequency of the third resonance is higher than a resonance point frequency of the fourth resonance, and a ratio of the resonance point frequency of the third resonance to the resonance point frequency of the fourth resonance is less than or equal to 1.3. In an embodiment, a center frequency of a first frequency band (or a second frequency band) is greater than the resonance point frequency of the fourth resonance, and is less than the resonance point frequency of the third resonance.

In an embodiment, the second radiator 320 further includes a third ground point 353, and the second radiator 320 is coupled to the ground plane 300 at the third ground point 353.

In an embodiment, the second radiator 320 includes a first center line, and the second feed point 322 and a center (for example, a geometric center) of the second radiator 320 are located on the first center line, the first center line divides the second radiator 320 into a first part and a second part, the second ground point 352 is located in the first part, and the third ground point 353 is located in the second part. It should be understood that, when the second radiator 320 is in a circular ring shape or a circular shape, the center may be understood as a circle center. When the second radiator 320 is in a quadrilateral shape, the center may be understood as an intersection point of diagonals. When the second radiator 320 is in another irregular shape, the center may be understood as a gravity center.

It should be understood that the fourth resonance may be generated in a CM mode of the patch antenna, and the third resonance may be generated in a DM mode of the patch antenna.

In the foregoing embodiments, a wire CM mode or a wire DM mode may be understood as that a wire antenna mainly generates radiation by using a current. However, the CM mode of the patch antenna or the DM mode of the patch antenna may be understood as that the patch antenna mainly generates radiation by using a magnetic flow (for example, a magnetic field between the radiator and the ground plane).

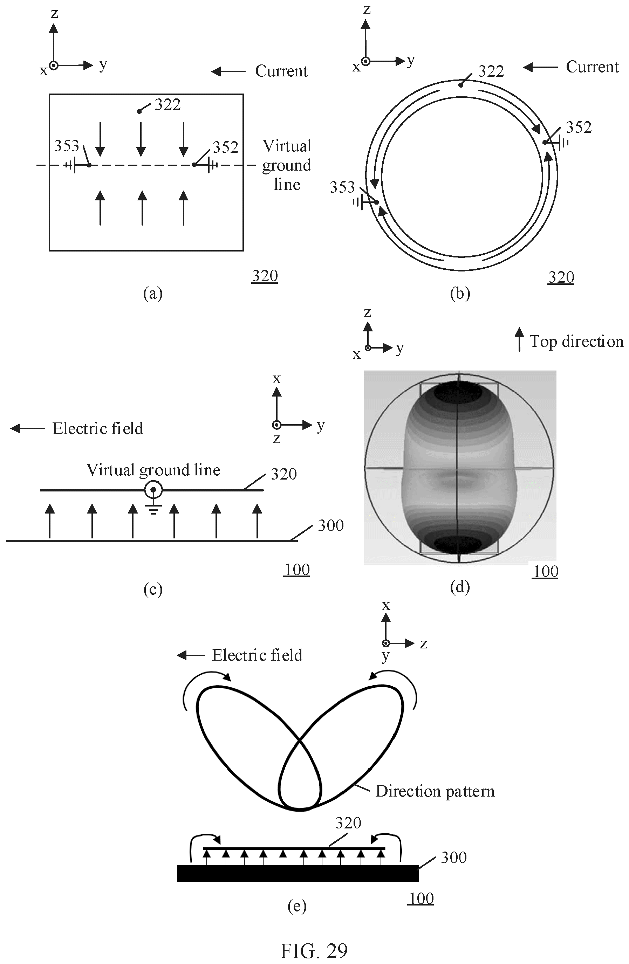

As shown in (a) in FIG. 29, in the CM mode of the patch antenna, currents on the second radiator 320 on two sides (which may be understood as a side on which the ground point is close to the second feed point 322 and a side on which the ground point is far away from the second feed point 322 when the second radiator 320 includes only one ground point) of a virtual ground line (the second ground point 352 and the third ground point 353 are located on the virtual ground line) are reverse in direction.

As shown in (b) in FIG. 29, when the second radiator is in a ring shape, in the CM mode, currents on the second radiator 320 on two sides of the second ground point 352 are reverse in direction, currents on the second radiator 320 on two sides of the third ground point 353 are reverse in direction, and currents on the second radiator 320 between the second ground point 352 and the third ground point 353 are reverse in direction.

As shown in (c) in FIG. 29, in the CM mode of the patch antenna, electric fields between the second radiator 320 and the ground plane 300 on two sides of the virtual ground line are co-directional.

As shown in (d) in FIG. 29, in the CM mode of the patch antenna, radiation generated by the second antenna has two stronger areas, and the two stronger radiation areas of the second antenna are respectively deflected toward the top direction (a direction from a bottom edge to a top edge, for example, the positive direction of the z direction) of the electronic device 100 and a bottom direction (a direction from the top edge to the bottom edge, for example, a negative direction of the z direction) of the electronic device 100. The second antenna generates weak radiation (with a null in a direction pattern, for example, in an area in which a gain is small and is 2%) in a thickness direction (for example, an x direction) of the electronic device 100.

In the CM mode of the patch antenna, electric fields between the second radiator 320 and the ground plane 300 on two sides of the virtual ground line are co-directional, but are partially reverse in direction in far fields of the second radiator 320 (for example, it may be understood that circumferential electric fields shown by curve arrows are partially reverse in direction), as shown in (e) in FIG. 29. Therefore, it may be set that an electric field in a first stronger radiation area in a direction pattern generated by the second antenna is deflected toward the top direction of the electronic device 29 (the direction from the bottom edge to the top edge, for example, the positive direction of the z direction), and an electric field in a second stronger radiation area is deflected toward the bottom direction of the electronic device 29 (the direction from the top edge to the bottom edge, for example, the negative direction of the z direction). There are at least a part of reverse electric field components in far fields of the first and second stronger radiation areas (for example, there is a reverse electric field component in the z direction).

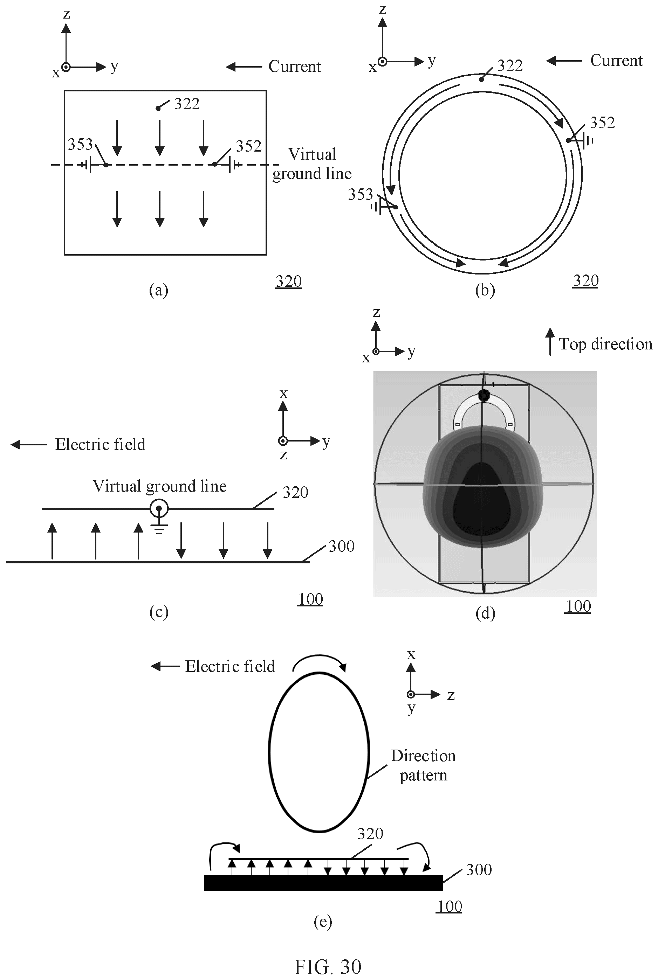

As shown in (a) in FIG. 30, in the DM mode of the patch antenna, currents on the second radiator 320 on two sides of the virtual ground line are co-directional.

As shown in (b) in FIG. 30, when the second radiator is in a ring shape, in the DM mode, currents on the second radiator 320 on two sides of the second ground point 352 are co-directional, currents on the second radiator 320 on two sides of the third ground point 353 are co-directional, and currents on the second radiator 320 between the second ground point 352 and the third ground point 353 are reverse in direction.

As shown in (c) in FIG. 30, in the DM mode of the patch antenna, electric fields between the second radiator 320 and the ground plane 300 on two sides of the virtual ground line are reverse in direction.

As shown in (d) in FIG. 30, in the DM mode of the patch antenna, radiation generated by the second antenna is strong in a thickness direction (for example, the x direction) of the electronic device 100. Radiation generated by the second antenna in the top direction (the direction from the bottom edge to the top edge, for example, the positive direction of the z direction) of the electronic device 100 and the bottom direction (the direction from the top edge to the bottom edge, for example, the negative direction of the z direction) of the electronic device 100 is weak (with a null in a direction pattern, for example, in an area in which a gain is small and is 2%).

In the DM mode of the patch antenna, electric fields between the second radiator 320 and the ground plane 300 on two sides of the virtual ground line are reverse in direction, but are co-directional in far fields of the second radiator 320 (for example, it may be understood that circumferential electric fields shown by curve arrows are basically co-directional), as shown in (e) in FIG. 30. Therefore, a direction pattern generated by the second antenna has co-directional electric fields in the far fields.

It should be understood that, when the second antenna 302 operates in the CM mode of the patch antenna, a generated maximum radiation direction is deflected toward the top direction (for example, the positive direction of the z direction) and the bottom direction (for example, the positive direction of the z direction). When the second antenna 302 operates in the DM mode of the patch antenna, a generated maximum radiation direction is deflected toward the thickness direction (for example, the x direction). In an embodiment, a center frequency of a first frequency band (or a second frequency band) is greater than the resonance point frequency of the fourth resonance, and is less than the resonance point frequency of the third resonance. On the first frequency band, the second antenna 302 generates radiation in both the CM mode and the DM mode of the patch antenna.

However, a direction pattern generated in the CM mode of the patch antenna has at least a part of reverse electric field components in electric fields of two stronger radiation areas, and a direction pattern generated in the DM mode of the patch antenna has co-directional electric fields in a stronger radiation area. Therefore, in a direction pattern generated in both the CM mode and the DM mode of the patch antenna, the direction pattern generated in the DM mode of the patch antenna can enhance one of two stronger radiation areas generated in the CM mode of the patch antenna, and weaken the other radiation area.

The second antenna 302 generates radiation in both the CM mode and the DM mode of the patch antenna, so that radiation of the direction pattern generated by the second antenna 302 is enhanced in the top direction (for example, the positive direction of the z direction), and radiation in the bottom direction (for example, the positive direction of the z direction) is weakened. Therefore, the second antenna 302 has a better radiation characteristic in the top direction, so that the electronic device 100 has better communication performance.

In an embodiment, when the second radiator 320 is in a ring shape, a difference between lengths of the second radiator 320 on two sides of the virtual ground line (the virtual ground line is a connection line between the second ground point 352 and the third ground point 353) is less than 20%.

It should be understood that, as symmetry increases, the second antenna 302 has a better radiation characteristic.

In an embodiment, a ratio of the resonance point frequency of the third resonance to the resonance point frequency of the fourth resonance is less than or equal to 1.2. In an embodiment, a frequency difference between the resonance point frequency of the fourth resonance and the resonance point frequency of the third resonance is less than or equal to 300 MHz.

It should be understood that, when the resonance point of the third resonance is close to the resonance point of the fourth resonance, the second antenna 302 has a better radiation characteristic (for example, a proportion of the direction pattern toward the top increases) on the first frequency band (or the second frequency band).

In an embodiment, a minimum distance between the first radiator 310 and the second radiator 320 is less than or equal to 20 mm. In an embodiment, a distance between the first radiator 310 and the second radiator 320 is less than or equal to 10 mm.

In an embodiment, a distance between the first feed point 312 and the second feed point 322 is less than or equal to 20 mm. In an embodiment, a distance between the first feed point 312 and the second feed point 322 is less than or equal to 10 mm.

It should be understood that, when both the first radiator and the second radiator are electrically connected for feeding, the distance between the first feed point 312 and the second feed point 322 may be understood as a distance between a center of a contact area between a first metal member configured to feed the first antenna 301 and the first radiator 310 and a center of a contact area between a second metal member configured to feed the second antenna 302 and the second radiator 320.

When both the first radiator and the second radiator perform feeding through indirect coupling, the distance between the first feed point 312 and the second feed point 322 may be understood as a distance between a center of a projection (in an extension direction perpendicular to the first radiator 310), on the first radiator 310, of an end part that is of the first metal member configured to feed the first antenna 301 and that faces the first radiator 310 and a center of a projection (in a thickness direction of the electronic device 100), on the second radiator 320, of an end part that is of the second metal member configured to feed the second antenna 302 and that faces the second radiator 320.

When the first radiator 310 and the second radiator 320 respectively perform feeding through an electrical connection and indirect coupling, refer to the foregoing embodiments for corresponding understanding.

When the distance between the first feed point 312 and the second feed point 322 is short, a transmission line distance between a radio frequency channel (for example, a first feed circuit 311 and a second feed circuit 321) in a radio frequency chip and a corresponding feed point (for example, the first feed point 312 or the second feed point 322) is short, and a loss of the radio frequency signal output by the radio frequency channel on the transmission path is small. This helps improve a radiation characteristic (for example, a gain) of the antenna (the first antenna 301 or the second antenna 302).

In an embodiment, the second antenna 302 may further include a fourth element 334, as shown in FIG. 31. The second radiator 320 further includes a seventh connection point 347. The fourth element 334 is coupled between the seventh connection point 347 and the ground plane 300.

It should be understood that, in an embodiment, the fourth element 334 coupled between the ground plane 300 and the seventh connection point 347 may be configured to switch a radiation characteristic (for example, a maximum radiation direction) of the second antenna 302 on the first frequency band (or the second frequency band). The fourth element 334 may adjust a frequency difference between a resonance point of the third resonance and a resonance point of the fourth resonance. In this way, the center frequency of the first frequency band (or the second frequency band) is close to the resonance point of the third resonance or the resonance point of the fourth resonance, so as to adjust the radiation characteristic (for example, the maximum radiation direction) of the second antenna 302 on the first frequency band (or the second frequency band). The fourth element 334 coupled between the ground plane 300 and the seventh connection point 347 can increase adjustment flexibility of the second antenna 302.

In an embodiment, an angle between the seventh connection point 347 and the second feed point 322 is greater than or equal to 45°. In an embodiment, an angle between the seventh connection point 347 and the second feed point 322 is greater than or equal to 90°. In an embodiment, an angle between the seventh connection point 347 and the second feed point 322 is greater than or equal to 135°.

It should be understood that the angle between the seventh connection point 347 and the second feed point 322 may be understood as a smaller angle in angles between the seventh connection point 347 and the second feed point 322 relative to the center of the second radiator 320, or may be understood as an angle less than or equal to 180° in angles between the seventh connection point 347 and the second feed point 322 relative to the center of the second radiator 320. As the angle between the seventh connection point 347 and the second feed point 322 increases, a range that can be adjusted by the fourth element 334 is further increased.

In an embodiment, the fourth element 334 may be a capacitor or an element equivalent to a capacitor. In an embodiment, an equivalent capacitance value of the fourth element 334 may be less than or equal to 1 pF.

In an embodiment, the fourth element 334 may be an inductor or an element equivalent to an inductor.

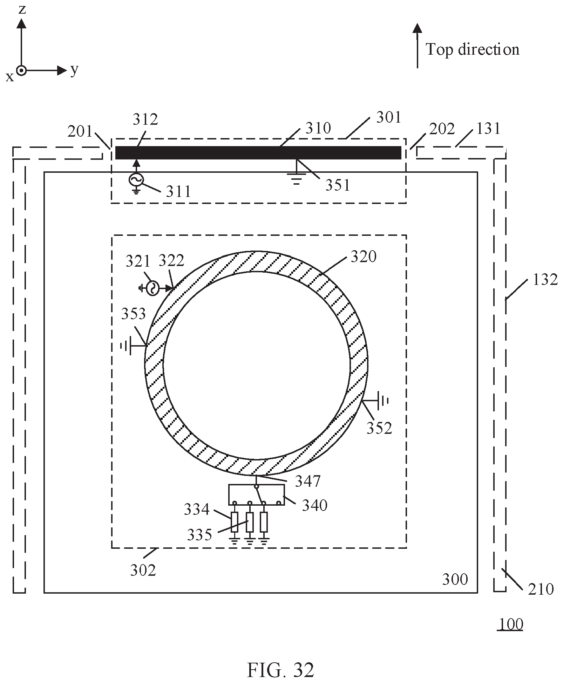

The second antenna 302 may further include a switch 340 and a plurality of elements, as shown in FIG. 32. In an embodiment, the second antenna 302 may include the fourth element 334 and a fifth element 335.

For brevity of description, in the electronic device 100 shown in FIG. 32, only an example in which the switch 340 is a single-pole four-throw (single-pole four-throw, DPFT) switch is used for description. In actual production or design, the switch 340 may be replaced. For example, the switch 340 may be a double-pole multi-throw (double-pole X-throw, DPXT) switch, or a multi-pole multi-throw (X pole X throw, XPXT) switch, or may be formed by combining a plurality of single-pole single-throw (single-pole single-throw, SPST) switches. This is not limited in embodiments of this application. The switch described in embodiments of this application may be correspondingly understood.

The switch 340 is coupled between the seventh connection point 347 and the ground plane 300. A plurality of elements (for example, the fourth element 334 and the fifth element 335) may be coupled between the switch 340 and the ground plane 300 or between the switch 340 and the seventh connection point 347.

In an embodiment, an element coupled between the ground plane 300 and the seventh connection point 347 may be used to switch the radiation characteristic (for example, the maximum radiation direction) of the second antenna 302 on the first frequency band (or the second frequency band).

It should be understood that the electronic device 100 shown in FIG. 31 may include only one element (for example, the fourth element 334). However, the electronic device 100 shown in FIG. 32 includes a plurality of elements (for example, the fourth element 334 and the fifth element 335). An equivalent capacitance value or an equivalent inductance value of an element coupled between the seventh connection point 347 and the ground plane 300 may be switched through the switch 340, or a boundary condition of the seventh connection point 347 may be switched through the switch 340. For example, the seventh connection point 347 is disconnected from the ground plane 300, or the seventh connection point 347 is directly connected to the ground plane 300 (no element is disposed) electrically, so that the frequency difference between the resonance point of the third resonance and the resonance point of the fourth resonance may be adjusted.

The frequency difference between the resonance point of the third resonance and the resonance point of the fourth resonance is adjusted, so that the center frequency of the first frequency band is close to the resonance point of the third resonance or the resonance point of the fourth resonance. For example, the fourth element 334 and the second radiator 320 are configured to generate a third resonance 1 and a fourth resonance 1. The fifth element 335 and the second radiator 320 are configured to generate a third resonance 2 and a fourth resonance 2. The first frequency difference is different from the second frequency difference, the first frequency difference is a frequency difference between the center frequency of the first frequency band and a resonance point frequency of the third resonance 1, and the second frequency difference is a frequency difference between the center frequency of the first frequency band and a resonance point frequency of the third resonance 2. Alternatively, the third frequency difference is different from the fourth frequency difference, the third frequency difference is a frequency difference between the center frequency of the first frequency band and a resonance point frequency of the fourth resonance 1, and the fourth frequency difference is a frequency difference between the center frequency of the first frequency band and a resonance point frequency of the fourth resonance 2.

Because the center frequency of the first frequency band may be close to the resonance point of the third resonance or the resonance point of the fourth resonance, the radiation characteristic (for example, the maximum radiation direction) of the second antenna 302 on the first frequency band (or the second frequency band) may be adjusted, so as to implement switching of the radiation characteristic (for example, the maximum radiation direction) of the second antenna 302 on the first frequency band.

In an embodiment, an element coupled between the ground plane 300 and the seventh connection point 347 may be configured to switch an operating frequency band of the second antenna 302.

It should be understood that the electronic device 100 shown in FIG. 31 may include only one element (for example, the fourth element 334). However, the electronic device 100 shown in FIG. 32 includes a plurality of elements (for example, the fourth element 334 and the fifth element 335). An equivalent capacitance value or an equivalent inductance value of an element coupled between the seventh connection point 347 and the ground plane 300 may be switched through the switch 340, or a boundary condition of the seventh connection point 347 may be switched through the switch 340. For example, the seventh connection point 347 is disconnected from the ground plane 300, or the seventh connection point 347 is directly connected to the ground plane 300 (no element is disposed) electrically, so that the resonance point frequency of the third resonance and the resonance point frequency of the fourth resonance may be adjusted. For example, the fourth element 334 and the second radiator 320 are configured to generate a third resonance 1 and a fourth resonance 1. The fifth element 335 and the second radiator 320 are configured to generate a third resonance 2 and a fourth resonance 2. A center frequency of the first frequency band is less than a resonance point frequency of the fourth resonance 1, and is greater than a resonance point frequency of the third resonance 1. A center frequency of the second frequency band is less than a resonance point frequency of the fourth resonance 2, and is greater than a resonance point frequency of the third resonance 2. An operating frequency band of the second antenna 302 may be switched by switching the fourth element 334 and the fifth element 335.

In an embodiment, when the electronic device 100 does not perform satellite communication, the switch 340 may be further configured to switch the operating frequency band of the second antenna 302, to implement antenna reuse. For example, the second antenna may alternatively serve as a cellular antenna, a Wi-Fi antenna, or the like. Details are not described again.

It should be understood that, in the electronic device 100 shown in FIG. 25 to FIG. 28 and FIG. 31 and FIG. 32, the first antenna 301 located at the top is the same as the first antenna 301 shown in FIG. 12 to FIG. 15. Details are not described again. The second antenna 302 attached to the rear cover 21 of the electronic device 100 may be simplified as an intermediate ground patch antenna, and an overall electrical size of the second antenna 302 is a half wavelength. An upper end (a side close to the first radiator 310) of the second radiator 320 performs feeding, and a lower end of the second radiator 320 is tuned by using a capacitor or an inductive component. A component for adjusting a resonance generated in the CM mode of the patch antenna is configured to adjust the resonance generated in the CM mode of the patch antenna before a resonance generated in the DM mode, so that the second antenna 302 has a current combination in the CM mode of the patch antenna and the DM mode of the patch antenna on an operating frequency band. Therefore, current distribution on the second radiator 320 is deflected toward the upper hemispherical area (an area close to the first radiator 310), and a direction pattern is also superposition of direction patterns generated in the CM mode of the patch antenna and the DM mode of the patch antenna, and is a direction pattern that mainly radiates in the top direction. Therefore, a good combined gain can be obtained by superimposing the direction patterns of the first antenna 301 and the second antenna 302 that are located at the top.

In addition, because the second radiator 320 of the second antenna 302 does not include the conductive part of the first side frame, system costs caused by a compatibility design when the conductive part of the first side frame is reused as a satellite antenna and a cellular antenna can be reduced.

For brevity of description, similar parts between the first antenna 301 and the second antenna 302 shown in FIG. 12 to FIG. 15 and the first antenna 301 and the second antenna 302 shown in FIG. 20(a) to FIG. 20(c) are not described again one by one. For example, the similar parts include: a position and a structure of the first radiator 310; a resonance generated by the first radiator 310; a position of the first feed point 312; a relationship between a first frequency band and a second frequency band; an equivalent inductance or equivalent capacitance value of a corresponding element when the first radiator 310 is of a metamaterial structure; a position of a connection point on the radiator; and the like.

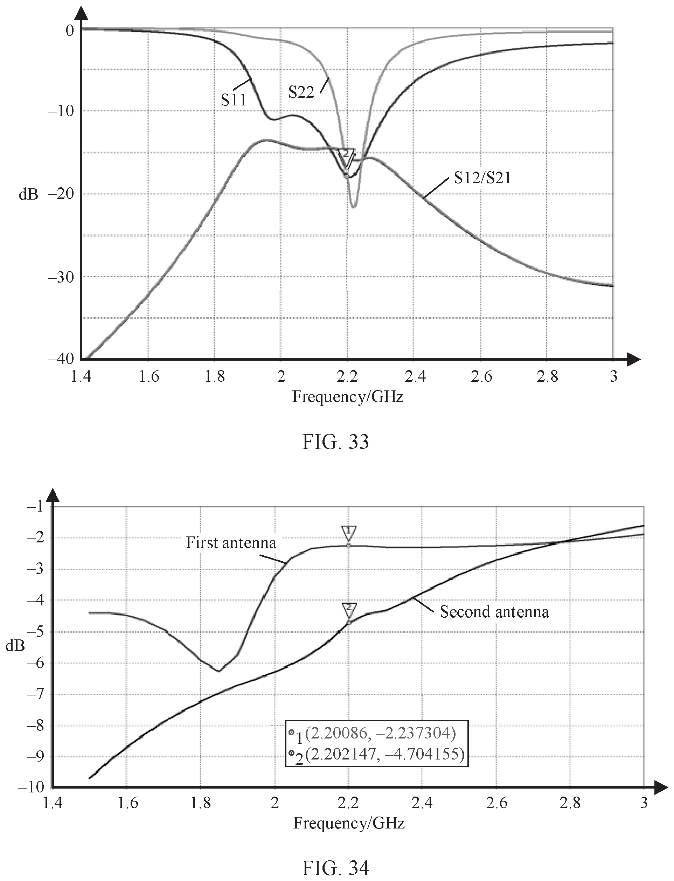

FIG. 33 and FIG. 34 show simulation results of the first antenna 301 and the second antenna 302 in the electronic device 100 shown in FIG. 31. FIG. 33 shows simulation results of S parameters of the first antenna 301 and the second antenna 302 in the electronic device 100 shown in FIG. 31. FIG. 34 shows simulation results of radiation efficiency of the first antenna 301 and the second antenna 302 in the electronic device 100 shown in FIG. 31.

As shown in FIG. 33, the first antenna (S11) may generate a resonance near 1.95 GHz and a resonance near 2.2 GHz. The resonance generated near 1.95 GHz may correspond to the second resonance in the foregoing embodiments, and the resonance generated near 2.2 GHz may correspond to the first resonance in the foregoing embodiments.

The second antenna (S22) may generate a resonance near 1.95 GHz and a resonance near 2.25 GHz. The resonance generated near 1.95 GHz may correspond to the fourth resonance in the foregoing embodiments, and the resonance generated near 2.25 GHz may correspond to the third resonance in the foregoing embodiments. A center frequency of the second frequency band is greater than a resonance point frequency of the fourth resonance, and is less than a resonance point frequency of the third resonance. On the second frequency band, the second antenna generates radiation in the CM mode and the DM mode of the patch antenna.

On the second frequency band (for example, from 2170 MHz to 2200 MHz), isolation (S12/S21) between the first antenna and the second antenna is greater than 13 dB, and the first antenna and the second antenna have good isolation.

As shown in FIG. 34, when the first antenna and the second antenna in the electronic device operate simultaneously, on the second frequency band (for example, from 2170 MHz to 2200 MHz), radiation efficiency of the first antenna is approximately -2.2 dB, and radiation efficiency of the second antenna decreases by approximately -4.7 dB.

It should be understood that, in the diagram of the simulation results shown in FIG. 34, radiation efficiency at a same frequency (2.2 GHz) is shown, and the frequency is located on the second frequency band (for example, from 2170 MHz to 2200 MHz). In an actual simulation and debugging result, radiation efficiency in a radiation efficiency curve may be different. Generally, it is considered that a communication function can be provided when the radiation efficiency is greater than -8 dB.

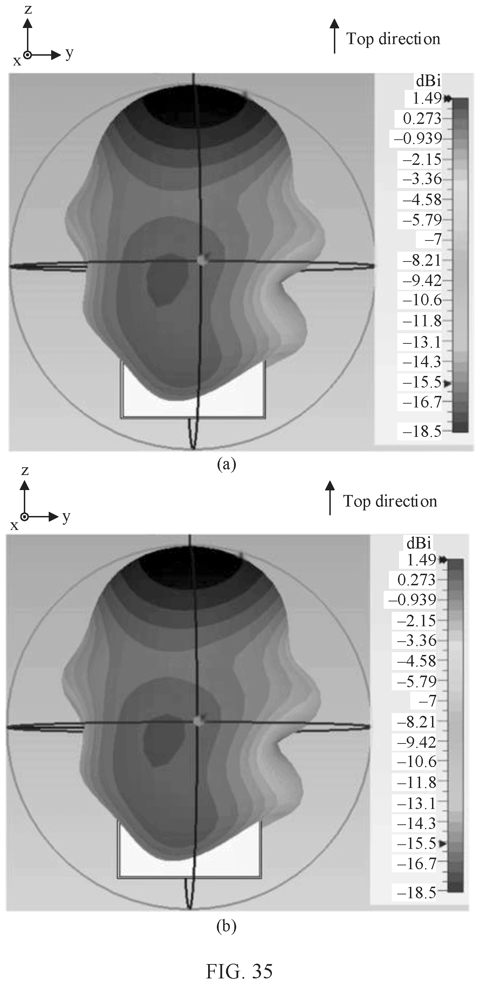

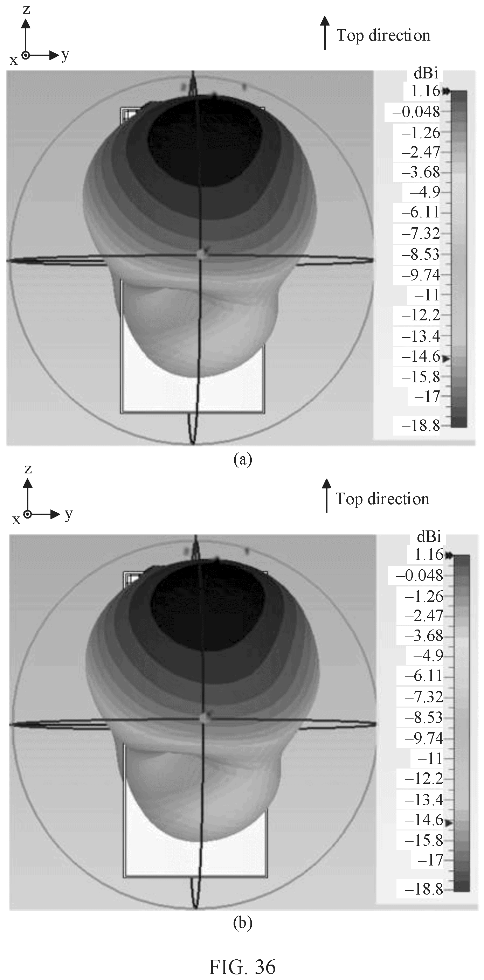

FIG. 35 and FIG. 36 are direction patterns generated by the first antenna 301 and the second antenna 302 in the electronic device 100 shown in FIG. 31. FIG. 35 is a first direction pattern generated by the first antenna 301 in the electronic device 100 shown in FIG. 31. FIG. 36 is a second direction pattern generated by a second antenna 302 in the electronic device 100 shown in FIG. 32.

As shown in FIG. 35, a maximum radiation direction of the first direction pattern generated by the first antenna faces the top direction (for example, the z direction) of the electronic device, and the first antenna has a good radiation characteristic in a nearby area of the top direction.

As shown in FIG. 36, because the center frequency of the second frequency band is greater than the resonance point frequency of the fourth resonance and less than the resonance point frequency of the third resonance, on the first frequency band, the second antenna generates radiation in both the CM mode and the DM mode of the patch antenna. The radiation of the direction pattern generated by the second antenna in the top direction (for example, the z direction) is enhanced, so that communication with the communication satellite can be better performed.

FIG. 37 is a diagram of another electronic device 100 according to an embodiment of this application.

As shown in FIG. 37, the electronic device 100 may include a first side frame 210.

The first side frame 210 includes a first position 201, a second position 202, a third position 203, and a fourth position 204 that are sequentially disposed. At least a part of the first side frame 210 is spaced from a ground plane 300.

It should be understood that the sequential disposal in this embodiment of this application may be understood as sequential arrangement. For example, that the first position 201, the second position 202, and the third position 203 are sequentially disposed may be understood as that the first position 201, the second position 202, and the third position 203 are sequentially arranged, where the third position 203 is not located between the first position 201 and the second position 202, but the second position 202 may overlap the third position 203. For brevity of description, the sequential disposal in embodiments of this application may be correspondingly understood. Details are not described again.

That the second position 202 overlaps the third position 203 may be understood as that the second position 202 and the third position 203 are the same, and the second position 202 and the third position 203 are a same position. For brevity of description, the overlapping in embodiments of this application may be correspondingly understood. Details are not described again.

The first side frame 210 has an insulation slot or is coupled to the ground plane 300 at the first position 201. The first side frame 210 has an insulation slot or is coupled to the ground plane 300 at the second position 202. The first side frame 210 has an insulation slot or is coupled to the ground plane 300 at the third position 203. The first side frame 210 has an insulation slot or is coupled to the ground plane 300 at the fourth position 204.

The first side frame 210 includes a first edge 131, a second edge 132 that intersects with the first edge 131 at an angle, and a third edge 133 that intersects with the first edge 131 at an angle. A length of the first edge 131 is less than a length of the second edge 132. The length of the first edge 131 is less than a length of the third edge 133. In an embodiment, the first edge 131 may be understood as a short side of the electronic device 100.

The electronic device 100 includes a first antenna 301 and a second antenna 302.

It should be understood that an operating frequency band of the first antenna 301 and an operating frequency band of the second antenna 302 each may include the first frequency band and/or the second frequency band in the foregoing embodiments. The electronic device 100 may perform satellite communication through the first antenna 301 and/or the second antenna 302.

A first radiator 310 of the first antenna 301 includes a conductive part of the first side frame 210 between the first position 201 and the second position 202. At least a part of the first radiator 310 is spaced from the ground plane 300. The first antenna 301 further includes a first feed circuit 311, the first radiator 310 includes a first feed point 312, and the first feed circuit 311 is coupled to the first feed point 312.

A second radiator 320 of the second antenna 302 includes a conductive part of the first side frame 210 between the third position 203 and the fourth position 204. At least a part of the second radiator 320 is spaced from the ground plane 300. The second antenna 302 further includes a second feed circuit 321, the second radiator 320 includes a second feed point 322, and the second feed circuit 321 is coupled to the second feed point 322.

The second position 202 and the third position 203 are located on the first edge 131.

It should be understood that at least a part of the first radiator 310 and at least a part of the second radiator 320 are located on the first edge 131, which is more conducive to radiation generated by the first antenna 301 and/or the second antenna 302 in a top direction, so that quality of communication between the electronic device 100 and a communication satellite is good.

Because at least a part of the first radiator 310 is located on a top edge of the electronic device 100, the first antenna 301 may generate good radiation in the top direction, and has a good radiation characteristic. The second antenna 302 may be configured to improve radiation of the electronic device 100 in an upper hemispherical area. For example, the second antenna 302 may be configured to enhance radiation of the electronic device 100 in the top direction toward a side on which the second radiator 320 is located, and the electronic device 100 may have a good communication characteristic within a larger angle range relative to the top direction.

The upper hemispherical area may be understood as an area within an angle less than or equal to 90° relative to the top direction. In a coordinate system, the upper hemispherical area may be understood as an area that faces a positive direction of a z direction and that is on an xoy plane.

In an embodiment, the first radiator 310 may be configured to generate a first resonance, and a resonance frequency band of the first resonance includes the first frequency band and/or the second frequency band.

In an embodiment, the first position 201 is located on the second edge 132. The first side frame 210 has a first insulation slot and a second insulation slot respectively at the first position 201 and the second position 202, as shown in FIG. 38.

In an embodiment, a distance between the first feed point 312 and the first position 201 (a length of the first side frame 210 between the first feed point 312 and the first position 201) is different from a distance between the first feed point 312 and the second position 202 (a length of the first side frame 210 between the first feed point 312 and the second position 202).

In an embodiment, the first feed point 312 is located on the first edge 131.

It should be understood that the first resonance generated by the first radiator 310 is generated in the wire DM mode in the foregoing embodiments. Similarly, for understanding, refer to the corresponding descriptions in the foregoing embodiments.

In an embodiment, two ends of the first radiator 310 are open ends, and the first radiator 310 may operate in a one-half-wavelength mode. An electrical length of the first radiator 310 is a half of a first wavelength.

In an embodiment, a length L1 of the first radiator 310 on the first edge 131 and a length L2 of the first radiator 310 on the second edge 132 satisfy: 0.5≤(L1/L2)≤3.

It should be understood that the length L1 of the first radiator 310 on the first edge 131 may be understood as a size of the first radiator 310 in an extension direction (for example, an x direction) of the first edge 131. For brevity of description, the length L2 of the first radiator 310 on the second edge 132 may also be correspondingly understood.

In addition, in this embodiment of this application, when the radiator of the antenna is in a fold line shape (a part of the radiator is located on the first edge 131), both a length of the radiator on the first edge 131 and a length of the radiator on the second edge 132 or the third edge 133 may be correspondingly understood. For brevity of description, details are not described again.

In an embodiment, the first radiator 310 may further include a first ground point 351, as shown in FIG. 39. The first radiator 310 is coupled to the ground plane 300 at the first ground point 351.

In an embodiment, the first ground point 351 may be located in a central area of the first radiator 310.

It should be understood that increasing structural symmetry of the first antenna 301 allows the first antenna 301 to have better communication performance.

In an embodiment, grounding may be implemented at the first ground point 351 through a ground member. A width of a joint between the ground member and the first side frame 210 is greater than or equal to 1 mm and less than or equal to 20 mm.

In an embodiment, when the ground member includes at least a part of the central area of the first radiator 310, it may be considered that the first ground point 351 is located in the central area of the first radiator 310.

It should be understood that, when the first radiator 310 is coupled to the ground plane 300 at the first ground point 351, the first radiator 310 may further generate a second resonance in the wire CM mode, and the second resonance may be used to improve a radiation characteristic (for example, radiation efficiency) of the first antenna 301 on the first frequency band and/or the second frequency band.

In addition, the ground member is coupled to the ground plane 300, so that structural strength of the electronic device 100 can be improved.

In an embodiment, a resonance point frequency of the first resonance may be higher than a resonance point frequency of the second resonance. A ratio of the resonance point frequency of the first resonance to the resonance point frequency of the second resonance may be greater than or equal to 1.1 and less than or equal to 1.5. In an embodiment, a ratio of the resonance point frequency of the first resonance to the resonance point frequency of the second resonance may be greater than or equal to 1.3 and less than or equal to 1.5.

In an embodiment, a frequency difference between the resonance point frequency of the first resonance and the resonance point frequency of the second resonance may be greater than or equal to 100 MHz and less than or equal to 500 MHz.

It should be understood that, on the first frequency band (or the second frequency band), the first antenna 301 may operate in the wire DM mode. The second resonance may be used to improve a radiation characteristic (for example, radiation efficiency) of the first antenna 301 on the resonance frequency band of the first resonance.

In an embodiment, the resonance point frequency of the first resonance may be higher than the resonance point frequency of the second resonance. A ratio of the resonance point frequency of the first resonance to the resonance point frequency of the second resonance may be less than or equal to 1.3. In an embodiment, a center frequency of the first frequency band is greater than the resonance point frequency of the second resonance, and is less than the resonance point frequency of the first resonance.

It should be understood that, on the first frequency band (or the second frequency band), the first antenna 301 may operate in a hybrid mode of the wire CM mode and the wire DM mode, and radiation is jointly generated in the wire CM mode and the wire DM mode. The first antenna 301 has both a part of radiation characteristics of the wire CM mode and a part of radiation characteristics of the wire DM mode.

In an embodiment, a ratio of the resonance point frequency of the first resonance to the resonance point frequency of the second resonance is less than or equal to 1.2. In an embodiment, a frequency difference between the resonance point frequency of the first resonance and the resonance point frequency of the second resonance is less than or equal to 300 MHz.

In an embodiment, the first position 201 may alternatively be located on the first edge 131, as shown in FIG. 40. The first side frame 210 has a first insulation slot and a second insulation slot respectively at the first position 201 and the second position 202.

In an embodiment, the second position 202 overlaps the third position 203.

In an embodiment, similarly, in the first antenna 301 shown in FIG. 40, the first radiator 310 may also include the first ground point 351. For brevity of description, details are not described again.

In an embodiment, the first position 201 is located on the first edge 131. The first side frame 210 is coupled to the ground plane 300 at the first position 201, and has a second insulation slot at the second position 202, as shown in FIG. 41.

In an embodiment, one end of the first radiator 310 is an open end, and the other end is a ground end, to form a structure similar to an inverted F antenna or a left-handed antenna.

When the first radiator 310 forms a structure similar to the inverted F antenna, the first feed point 312 is close to the ground end, and a distance between the first feed point 312 and the ground end (a length of the first radiator 310 between the first feed point 312 and the first position 201) is less than or equal to a half of a length of the first radiator 310.

When the first radiator 310 forms a structure similar to the left-handed antenna, the first feed point 312 is close to the open end, and a distance between the first feed point 312 and the ground end (a length of the first radiator 310 between the first feed point 312 and the first position 201) is greater than or equal to half of a length of the first radiator 310. When the first feed point 312 is close to the open end, miniaturization of the first radiator 310 is facilitated. A capacitor is coupled between the first feed circuit 311 and the first feed point 312, to better excite the first radiator 310.

For brevity of description, formation of the structure similar to the inverted F antenna or the left-handed antenna may be correspondingly understood in embodiments of this application. Details are not described again.

In an embodiment, the first radiator 310 may operate in a quarter-wavelength mode. An electrical length of the first radiator 310 is a quarter of the first wavelength.

In an embodiment, a distance between the first position 201 and the second edge 132 in the extension direction of the first edge 131 is less than or equal to 10 mm, and the first position 201 may be located in an intersection area of the first edge 131 and the second edge 132.

In an embodiment, the first side frame 210 further includes a fifth position 205 and a sixth position 206, as shown in FIG. 41. The fifth position 205 and the sixth position 206 are located on the second edge 132. The first side frame 210 has an insulation slot or is coupled to the ground plane 300 at the fifth position 205. The first side frame 210 has an insulation slot or is coupled to the ground plane 300 at the sixth position 206.

It should be understood that, for brevity of description, in this embodiment of this application, only an example in which one side frame 210 has an insulation slot at the fifth position 205 and is coupled to the ground plane 300 at the sixth position 206 is used for description.

In an embodiment, the first antenna 301 further includes a first parasitic stub 371. The first parasitic stub 371 includes a conductive part of the first side frame 210 between the fifth position 205 and the sixth position 206.

It should be understood that the first parasitic stub 371 is configured to generate a first parasitic resonance, which may be used to suppress a current on the ground plane 300 near the second edge 132, so as to reduce a component in a direction pattern corresponding to the first resonance in a bottom direction (a direction from the top of the electronic device 100 to the bottom) of the electronic device 100, and increase a component in the direction pattern in a top direction of the electronic device 100, thereby improving a radiation characteristic (for example, a gain) of the first antenna 301 in the top direction.

In an embodiment, the first feed circuit 311 feeds a signal, the first radiator 310 is configured to generate a first main resonance, the first parasitic stub 371 is configured to generate a first parasitic resonance, and the first main resonance and the first parasitic resonance jointly form the first resonance (because a frequency difference between a resonance point of the first parasitic resonance and a resonance point of the first main resonance is small, the first main resonance and the first parasitic resonance are integrated into one resonance in an S parameter diagram). In an embodiment, the resonance point of the first parasitic resonance is located on a resonance frequency band of the first main resonance. In an embodiment, a frequency difference between the resonance point frequency of the first parasitic resonance and the resonance point frequency of the first main resonance is less than or equal to 100 MHz. In an embodiment, a frequency difference between the resonance point frequency of the first parasitic resonance and the resonance point frequency of the first main resonance is less than or equal to 50 MHz. In an embodiment, the resonance point frequency of the first parasitic resonance may be less than the resonance point frequency of the first main resonance.

In addition, in this embodiment of this application, coupling between the first radiator 310 and the first parasitic stub 371 is weak, and the first parasitic resonance cannot be excited well. Therefore, a dip corresponding to the first parasitic resonance cannot appear significantly in the S parameter diagram. Because the first parasitic resonance is excited by a part of currents, an obvious dip appears in an efficiency curve (for example, radiation efficiency or total efficiency). For example, if the efficiency dip appears at a first frequency, the first frequency may be considered as a resonance point corresponding to the first parasitic resonance. In an embodiment, the dip results in a reduction of efficiency (for example, radiation efficiency or total efficiency) by no more than 1.5 dB. In an embodiment, the dip results in a reduction of efficiency (for example, radiation efficiency or total efficiency) by no more than 1 dB.

In an embodiment, a distance (for example, a maximum distance) between the first radiator 310 and the first parasitic stub 371 in an extension direction (for example, the z direction) of the second edge 132 is less than or equal to a half of a length of the second edge 132, so that the first parasitic stub 371 can be better excited.

In an embodiment, the first side frame 210 further includes a ninth position 209, as shown in FIG. 42. The ninth position 209 is located between the second position 202 and the third position 203. The first side frame 210 is coupled to the ground plane 300 at the ninth position 209.

In an embodiment, the first antenna 301 further includes a second parasitic stub 372. The second parasitic stub 372 includes a conductive part of the first side frame 210 between the second position 202 and the ninth position 209.

It should be understood that the second parasitic stub 372 is configured to generate a second parasitic resonance, and the second parasitic resonance may be used to improve a radiation characteristic (for example, radiation efficiency) of the first antenna 301 in the resonance frequency band of the first resonance.

In an embodiment, the second radiator 320 may be configured to generate a third resonance, and a resonance frequency band of the third resonance includes the first frequency band and/or the second frequency band.

In an embodiment, the first side frame 210 further includes a third edge 133 that intersects with the first edge 131 at an angle. The fourth position 204 is located on the third edge 133. The first side frame 210 has a third insulation slot and a fourth insulation slot respectively at the third position 203 and the fourth position 204, as shown in FIG. 38.

In an embodiment, a distance between the second feed point 322 and the third position 203 (a length of the first side frame 210 between the second feed point 322 and the third position 203) is different from a distance between the second feed point 322 and the fourth position 204 (a length of the first side frame 210 between the second feed point 322 and the fourth position 204).

In an embodiment, the second feed point 322 is located on the first edge 131.

It should be understood that the third resonance generated by the second radiator 320 is generated in the wire DM mode in the foregoing embodiments. Similarly, for understanding, refer to the corresponding descriptions in the foregoing embodiments.

In an embodiment, two ends of the second radiator 320 are open ends, and the second radiator 320 may operate in the one-half-wavelength mode. An electrical length of the second radiator 320 is a half of the first wavelength.

In an embodiment, the second radiator 320 may further include a second ground point 352, as shown in FIG. 39. The second radiator 320 is coupled to the ground plane 300 at the second ground point 352.

In an embodiment, the second ground point 352 may be located in a central area of the second radiator 320.

It should be understood that increasing structural symmetry of the second antenna 302 allows the second antenna 302 to have better communication performance.

In an embodiment, grounding may be implemented at the second ground point 352 through a ground member. A width of a joint between the ground member and the first side frame 210 is greater than or equal to 1 mm and less than or equal to 20 mm.

In an embodiment, when the ground member includes at least a part of the central area of the second radiator 320, it may be considered that the second ground point 352 is located in the central area of the second radiator 320.

It should be understood that, when the second radiator 320 is coupled to the ground plane 300 at the second ground point 352, the second radiator 320 may further generate a fourth resonance in the wire CM mode, and the fourth resonance may be used to improve a radiation characteristic (for example, radiation efficiency) of the second antenna 302 on the first frequency band and/or the second frequency band.

In addition, the ground member is coupled to the ground plane 300, so that structural strength of the electronic device 100 can be improved.

In an embodiment, a resonance point frequency of the third resonance may be higher than a resonance point frequency of the fourth resonance. A ratio of the resonance point frequency of the third resonance to the resonance point frequency of the fourth resonance may be greater than or equal to 1.1 and less than or equal to 1.5. In an embodiment, a ratio of the resonance point frequency of the third resonance to the resonance point frequency of the fourth resonance may be greater than or equal to 1.3 and less than or equal to 1.5.

In an embodiment, a frequency difference between the resonance point frequency of the third resonance and the resonance point frequency of the fourth resonance may be greater than or equal to 100 MHz and less than or equal to 500 MHz.

It should be understood that, on the first frequency band (or the second frequency band), the second antenna 302 may operate in the wire DM mode. The fourth resonance may be used to improve a radiation characteristic (for example, radiation efficiency) of the second antenna 302 on a resonance frequency band of the third resonance.

In an embodiment, a resonance point frequency of the third resonance may be higher than a resonance point frequency of the fourth resonance. A ratio of the resonance point frequency of the third resonance to the resonance point frequency of the fourth resonance may be less than or equal to 1.3. In an embodiment, the center frequency of the first frequency band is greater than the resonance point frequency of the fourth resonance and less than the resonance point frequency of the third resonance.

It should be understood that, on the first frequency band (or the second frequency band), the second antenna 302 may operate in a hybrid mode of the wire CM mode and the wire DM mode, and radiation is jointly generated in the wire CM mode and the wire DM mode. The second antenna 302 has both a part of radiation characteristics of the wire CM mode and a part of radiation characteristics of the wire DM mode.

In an embodiment, a ratio of the resonance point frequency of the third resonance to the resonance point frequency of the fourth resonance is less than or equal to 1.2. In an embodiment, a frequency difference between the resonance point frequency of the first resonance and the resonance point frequency of the second resonance is less than or equal to 300 MHz.

In an embodiment, the fourth position 204 is located on the first edge 131. The first side frame 210 is coupled to the ground plane 300 at the fourth position 204, and has a third insulation slot at the third position 203, as shown in FIG. 41.

In an embodiment, one end of the second radiator 320 is an open end, and the other end is a ground end, to form a structure similar to an inverted F antenna or a left-handed antenna. The second radiator 320 may operate in a quarter-wavelength mode. An electrical length of the second radiator 320 is a quarter of the first wavelength.

In an embodiment, a distance between the fourth position 204 and the third edge 133 in the extension direction of the first edge 131 is less than or equal to 10 mm, and the fourth position 204 may be located in an intersection area of the first edge 131 and the third edge 133.

In an embodiment, the first side frame 210 further includes a seventh position 207 and an eighth position 208, as shown in FIG. 41. The seventh position 207 and the eighth position 208 are located on the third edge 133. The first side frame 210 has an insulation slot or is coupled to the ground plane 300 at the seventh position 207. The first side frame 210 has an insulation slot or is coupled to the ground plane 300 at the eighth position 208.

It should be understood that, for brevity of description, in this embodiment of this application, only an example in which one side frame 210 has an insulation slot at the seventh position 207 and is coupled to the ground plane 300 at the eighth position 208 is used for description.

In an embodiment, the second antenna 302 further includes a third parasitic stub 373. The third parasitic stub 373 includes a conductive part of the first side frame 210 between the seventh position 207 and the eighth position 208.

It should be understood that the third parasitic stub 373 is configured to generate a third parasitic resonance, which may be used to suppress a current on the ground plane 300 near the third edge 133, so as to reduce a component in a direction pattern corresponding to the first resonance in a bottom direction (a direction from the top of the electronic device 100 to the bottom) of the electronic device 100, and increase a component in the direction pattern in a top direction of the electronic device 100, thereby improving a radiation characteristic (for example, a gain) of the second antenna 302 in the top direction.

In an embodiment, the second feed circuit 321 feeds a signal, the second radiator 320 is configured to generate a third main resonance, the third parasitic stub 373 is configured to generate a third parasitic resonance, and the third main resonance and the third parasitic resonance jointly form the third resonance (because a frequency difference between a resonance point of the third parasitic resonance and a resonance point of the third main resonance is small, the third main resonance and the third parasitic resonance are integrated into one resonance in an S parameter diagram). In an embodiment, the resonance point of the third parasitic resonance is located on a resonance frequency band of the third main resonance. In an embodiment, a frequency difference between a resonance point frequency of the third parasitic resonance and a resonance point frequency of the third main resonance is less than or equal to 100 MHz. In an embodiment, a frequency difference between a resonance point frequency of the third parasitic resonance and a resonance point frequency of the third main resonance is less than or equal to 50 MHz. In an embodiment, the resonance point frequency of the third parasitic resonance may be less than the resonance point frequency of the third main resonance.

In addition, in this embodiment of this application, coupling between the second radiator 320 and the third parasitic stub 373 is weak, and the third parasitic resonance cannot be excited well. Therefore, a dip corresponding to the third parasitic resonance cannot appear significantly in the S parameter diagram. Because the third parasitic resonance is excited by a part of currents, an obvious dip appears in an efficiency curve (for example, radiation efficiency or total efficiency). For example, if the efficiency dip appears at a third frequency, the third frequency may be considered as a resonance point corresponding to the third parasitic resonance. In an embodiment, the dip results in a reduction of efficiency (for example, radiation efficiency or total efficiency) by no more than 1.5 dB. In an embodiment, the dip results in a reduction of efficiency (for example, radiation efficiency or total efficiency) by no more than 1 dB.

In an embodiment, a distance (for example, a maximum distance) between the second radiator 320 and the third parasitic stub 373 in an extension direction (for example, the z direction) of the third edge 133 is less than or equal to a half of a length of the third edge 133, so that the third parasitic stub 373 can be better excited.

In an embodiment, the first side frame 210 further includes a ninth position 209, as shown in FIG. 42. The ninth position 209 is located between the second position 202 and the third position 203. The first side frame 210 is coupled to the ground plane 300 at the ninth position 209.

In an embodiment, the second antenna 302 further includes a fourth parasitic stub 374. The fourth parasitic stub 374 includes a conductive part of the first side frame 210 between the third position 203 and the ninth position 209.

It should be understood that the fourth parasitic stub 374 is configured to generate a fourth parasitic resonance, and the fourth parasitic resonance may be used to improve a radiation characteristic (for example, radiation efficiency) of the second antenna 302 in the resonance frequency band of the third resonance.

In an embodiment, the first antenna 301 and the second antenna 302 that are included in the electronic device 100 may be any first antenna 301 shown in FIG. 38 to FIG. 42, any second antenna 302, or any combination of the first antenna 301 and the second antenna 302.

It should be understood that, when a difference between the first direction pattern generated by the first antenna 301 and the second direction pattern generated by the second antenna 302 is large, the electronic device 100 switches between the first antenna 301 and the second antenna 302 to perform satellite communication, or performs satellite communication through both the first antenna 301 and the second antenna 302, so that good communication quality can be achieved in a larger area.

For example, the first antenna 301 and the second antenna 302 are the first antenna 301 and the second antenna 302 shown in FIG. 38. An electrical length of an entire stub (radiator) of the antenna is approximately a half wavelength. The antenna is fed at an end of the stub (radiator) located at the top, and is tuned at an end of the stub (radiator) located at the side edge through a capacitive component or an inductive component. A middle area of the stub (radiator) may be grounded or may not be grounded (when being grounded, refer to FIG. 39). When the middle area of the stub (radiator) can be grounded, a resonance generated in the wire CM mode is adjusted before a resonance generated in the wire DM mode, so that a resonance generated when the antenna operates is exactly in the wire DM mode, and has an optimal upward radiation pattern. For a right-corner antenna (the second antenna 302), a direction pattern generated by the right-corner antenna is left-deflected, and for a left-corner antenna (the first antenna 301), a direction pattern generated by the left-corner antenna is right-deflected. Direction patterns of the two antennas are very complementary. Combining the two antennas can implement wide beam coverage. This solution has very good upper hemispherical (upper hemispherical area) coverage, and is especially suitable for a dual-antenna combined reception solution.

The two corner antennas may not be antennas in the wire CM mode, but are IFAs in the quarter-wavelength mode, as shown in FIG. 41. Radiation efficiency of the IFA in the quarter-wavelength mode is better than radiation efficiency of the resonance generated in the wire CM mode, but upper hemispherical (upper hemispherical area) coverage is worse, a length of a used antenna stub is shorter, and no aperture tuning device or switch needs to be added. This is a system compromise solution.

When both the first antenna 301 and the second antenna 302 are IFAs in the quarter-wavelength mode, a length of the entire stub (radiator) is approximately a quarter wavelength. For the right-corner antenna (the second antenna 302), a direction of a generated direction pattern is left-deflected in a top direction, a bottom direction, and a side edge. For the left-corner antenna (the first antenna 301), a direction of a generated direction pattern is right-deflected in a top direction, a bottom direction, and a side edge. The direction patterns of the two antennas are very complementary. The two antennas can be combined to implement wide beam coverage. The overall coverage in this solution is not as good as that of the first antenna 301 and the second antenna 302 shown in FIG. 38, but the antenna size is smaller and the system costs are lower.

Based on both the first antenna 301 and the second antenna 302 being the IFAs in the quarter-wavelength mode, to improve upper hemispherical (upper hemispherical area) coverage of the IFA, a wavetrap (wavetrap) structure in the quarter-wavelength mode is added at each of left and right waist positions, thereby preventing a downward current (in the bottom direction), as shown in FIG. 41. Both the left-corner and right-corner antennas are IFAs, and the length of the entire stub (radiator) is approximately a quarter wavelength. The wavetrap is a quarter-wavelength stub (the first parasitic stub 371 and the third parasitic stub 373 shown in FIG. 41) at a waist position. An end (open end) of the wavetrap is tuned through a capacitive component or an inductive component. When a resonance generated by the wavetrap and a resonance generated by the radiator are at a same frequency, good wave blocking effect can be generated. After the wavetrap is designed, the antenna pattern is greatly improved, the upper hemispherical (upper hemispherical area) coverage capability is good, and the direction patterns of the left and right antennas are complementary. The two antennas can be combined to implement wide beam coverage.

Based on both the first antenna 301 and the second antenna 302 being IFAs in the quarter-wavelength mode, to improve efficiency of the IFA, a corresponding parasitic element is added to each of the left-corner and right-corner IFAs to improve efficiency, as shown in FIG. 42.

In an embodiment, a structure of the first radiator 310 is the same as a structure of the second radiator 320.

The same structure may be understood as a same boundary condition. For example, one end is a ground end, and the other end is an open end, or both ends are open ends. The same structure may also be understood as that the first radiator 310 and the second radiator 320 are symmetric in position. For example, a part of the first radiator 310 is located on the first edge 131, and a part of the first radiator 310 is located on the second edge 132. A part of the second radiator 320 is located on the first edge 131, and a part of the second radiator 320 is located on the third edge 133. Both the first radiator 310 and the second radiator 320 are in a fold line shape. The first radiator 310 is located on the first edge 131, the second radiator 320 is located on the first edge 131, and both the first radiator 310 and the second radiator 320 are in a straight line shape.

It should be understood that, when the first antenna 301 and the second antenna 302 have good symmetry, the electronic device 100 switches between the first antenna 301 and the second antenna 302 to perform satellite communication, or performs satellite communication through both the first antenna 301 and the second antenna 302, so that good communication quality can be achieved in a larger area.

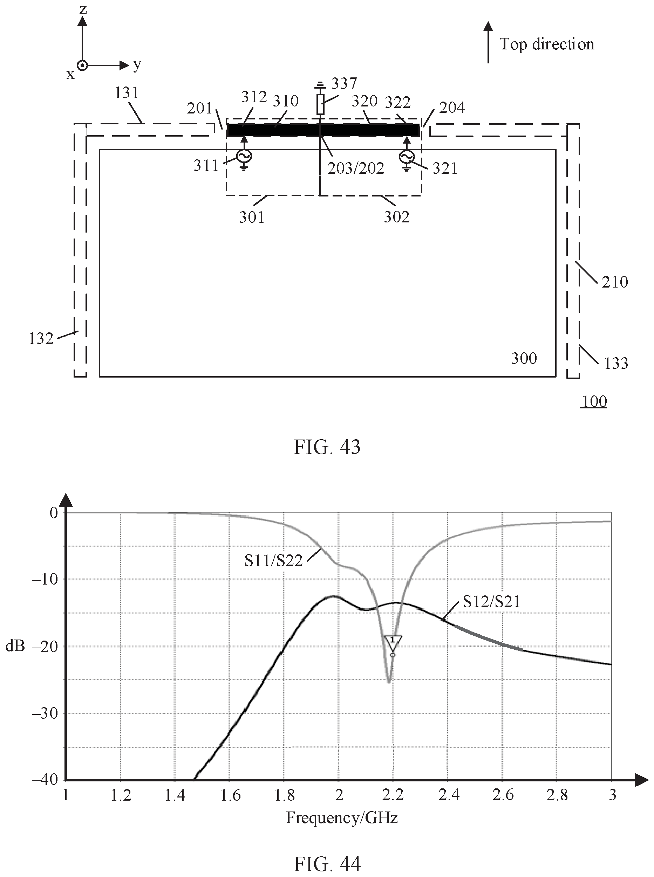

In an embodiment, the first position 201 and the fourth position 204 may alternatively be located on the first edge 131, as shown in FIG. 43. The second position 202 overlaps the third position 203. The first side frame 210 has a first insulation slot and a fourth insulation slot respectively at the first position 201 and the fourth position 204. The first side frame 210 is coupled to the ground plane 300 at the second position 202 and the third position 203.

It should be understood that both the first radiator 310 and the second radiator 320 are of a structure in which one end is a ground end and the other end is an open end, and form a structure similar to an inverted F antenna or a left-handed antenna. In an embodiment, the first resonance generated by the first radiator 310 and the third resonance generated by the second radiator 320 may correspond to the quarter-wavelength mode. An electrical length of the first radiator 310 may be a quarter of the first wavelength. An electrical length of the second radiator 320 may be a quarter of a second wavelength.

In an embodiment, the electronic device 100 further includes a seventh element 337. The seventh element 337 is coupled between the second position 202 (or the third position 203) and the ground plane 300, and is configured to improve isolation between the first antenna 301 and the second antenna 302.

In an embodiment, the seventh element 337 may be a capacitor or an element equivalent to a capacitor. In an embodiment, an equivalent capacitance value of the seventh element 337 may be less than or equal to 10 pF.

It should be understood that, to reduce an antenna size integrally occupied by a multi-antenna system, and the first antenna including the wire DM mode in the foregoing embodiments may be split into two left and right IFAs in the quarter-wavelength mode, which respectively serve as the first antenna 301 and the second antenna 302. Because the first antenna 301 and the second antenna 302 are co-grounded, isolation between the two antennas is poor. To implement decoupling between the two antennas, capacitors are connected in parallel to the ground at ground positions of the two antennas, and good isolation can be implemented in a compact arrangement. For the right-corner antenna (the second antenna 302), a direction of a generated direction pattern is left-deflected in a top direction, a bottom direction, and a side edge. For the left-corner antenna (the first antenna 301), a direction of a generated direction pattern is right-deflected in a top direction, a bottom direction, and a side edge. The direction patterns of the two antennas are very complementary. The two antennas can be combined to implement wide beam coverage.

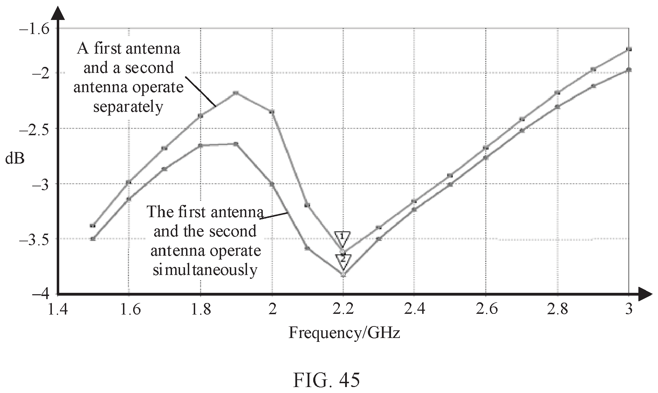

FIG. 44 and FIG. 45 show simulation results of the first antenna 301 and the second antenna 302 in the electronic device 100 shown in FIG. 39. FIG. 44 shows simulation results of S parameters of the first antenna 301 and the second antenna 302 in the electronic device 100 shown in FIG. 39. FIG. 45 shows simulation results of radiation efficiency of the first antenna 301 and the second antenna 302 in the electronic device 100 shown in FIG. 39.

It should be understood that, for brevity of description, only an example in which the first antenna 301 and the second antenna 302 in the electronic device 100 are the combination shown in FIG. 38 to FIG. 43 is used for description. In actual production or design, the first antenna 301 in the combination may be any first antenna shown in FIG. 38 to FIG. 43, and the second antenna 302 in the combination may be any second antenna shown in FIG. 38 to FIG. 43. For brevity of description, details are not described again.

As shown in FIG. 44, the first antenna (S11) and the second antenna (S22) may generate a resonance near 2 GHz and a resonance near 2.2 GHz. The resonance generated near 2.2 GHz may correspond to the first resonance and the third resonance in the foregoing embodiments. The resonance generated near 2 GHz may correspond to the second resonance and the fourth resonance in the foregoing embodiments.

On a second frequency band (for example, from 2170 MHz to 2200 MHz), isolation (S12/S21) between the first antenna and the second antenna is greater than 13 dB, and the first antenna and the second antenna have good isolation.

As shown in FIG. 45, when only the first antenna in the electronic device operates, on the second frequency band (for example, from 2170 MHz to 2200 MHz), radiation efficiency of the first antenna is approximately -3.6 dB.

When only the second antenna in the electronic device operates, on the second frequency band (for example, from 2170 MHz to 2200 MHz), radiation efficiency of the second antenna is approximately -3.6 dB.

When the first antenna and the second antenna in the electronic device operate simultaneously, on the second frequency band (for example, from 2170 MHz to 2200 MHz), radiation efficiency of the first antenna decreases by approximately 0.2 dB, and radiation efficiency of the second antenna decreases by approximately 0.2 dB.

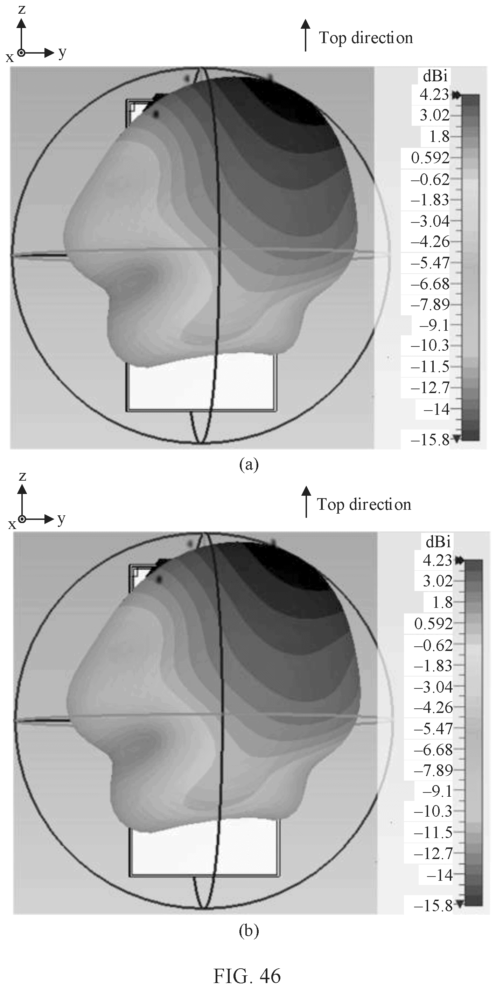

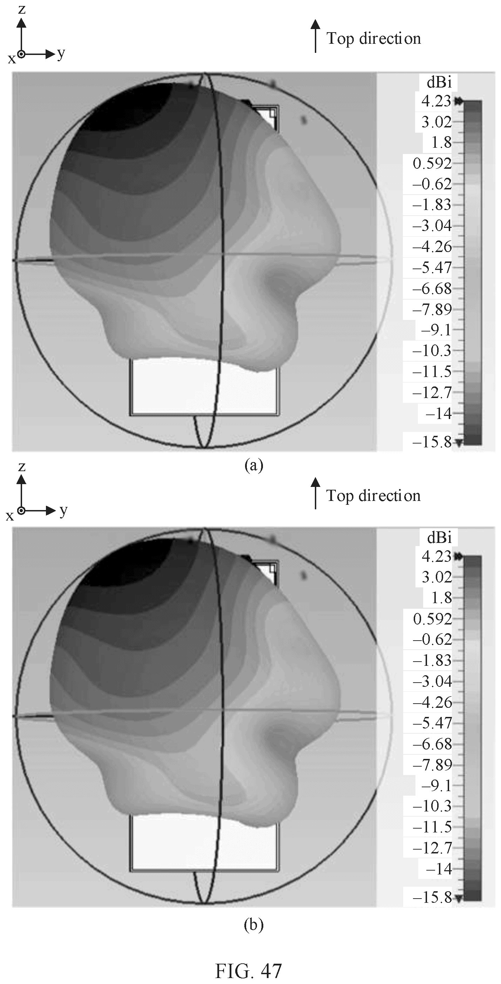

FIG. 46 and FIG. 47 are direction patterns generated by the first antenna 301 and the second antenna 302 in the electronic device 100 shown in FIG. 39. FIG. 46 is a first direction pattern generated by the first antenna 301 in the electronic device 100 shown in FIG. 39. FIG. 47 is a second direction pattern generated by the second antenna 302 in the electronic device 100 shown in FIG. 39.

As shown in FIG. 46, in the electronic device 100 shown in FIG. 39, a part of the first radiator is located on the first edge, and another part of the first radiator is located on the second edge. A maximum radiation direction of the first direction pattern generated by the first antenna faces the top direction (for example, the z direction) of the electronic device and is deflected toward a side on which the second antenna is located.

As shown in FIG. 47, in the electronic device 100 shown in FIG. 39, a part of the second radiator is located on the first edge, and another part of the second radiator is located on the third edge. A maximum radiation direction of the second direction pattern generated by the second antenna faces the top direction (for example, the z direction) of the electronic device and is deflected toward a side on which the first antenna is located.

It should be understood that an angle between the maximum radiation direction of the first direction pattern generated by the first antenna and the maximum radiation direction of the second direction pattern generated by the second antenna is large, and the electronic device may switch the first antenna or the second antenna (or the first antenna and the second antenna operate simultaneously), so that the communication satellite is always in an area in which the electronic device has a good radiation characteristic.

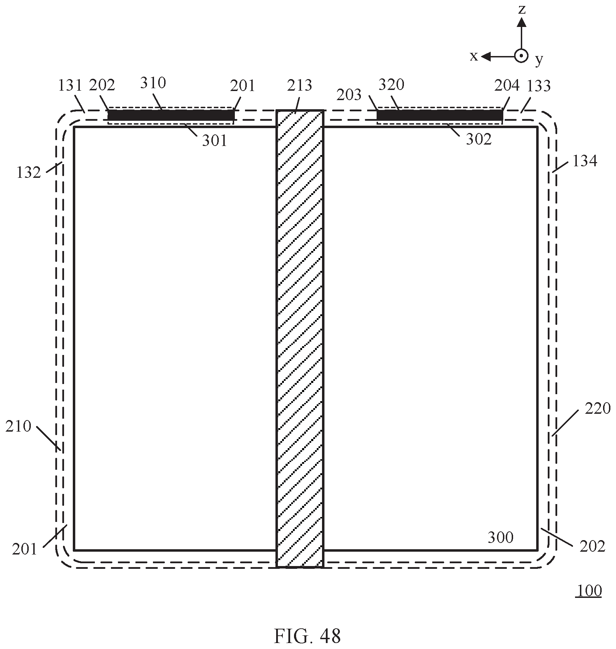

FIG. 48 is a diagram of another electronic device 100 according to an embodiment of this application.

As shown in FIG. 48, the electronic device 100 may include a first housing 211, a second housing 212, and a first rotating shaft 213.

The first housing 211 includes a first side frame 210, and at least a part of the first side frame 210 is spaced from a ground plane 300. The second housing 212 includes a second side frame 220, and at least a part of the second side frame 220 is spaced from the ground plane 300.

The first rotating shaft 213 is located between the first housing 211 and the second housing 212, and the first rotating shaft 213 is rotatably connected to the first housing 211 and the second housing 212 separately, so that the first housing 211 and the second housing 212 can rotate relative to each other.

It should be understood that, in the electronic device 100 shown in FIG. 48, the electronic device 100 is a foldable electronic device, and the first rotating shaft 213 is directly connected to the first housing 211 and the second housing 212 separately, so that the first housing 211 and the second housing 212 can rotate relative to each other. In addition, "the first rotating shaft 213 is rotatably connected to the first housing 211 and the second housing 212 separately" includes that the first rotating shaft 213 may be rotatably connected to the first housing or the second housing through one or more second rotating shafts and one or more intermediate housings. For example, in an embodiment, the electronic device 100 may further include a first rotating shaft, a second rotating shaft, and one or more intermediate housings located between the first rotating shaft and the second rotating shaft. The first rotating shaft is located between the first housing 211 and the intermediate housing, and the first rotating shaft is rotatably connected to the first housing 211 and the intermediate housing separately, so that the first housing 211 and the intermediate housing can rotate relative to each other. The second rotating shaft is located between the intermediate housing and the second housing 212, and the first rotating shaft 213 is rotatably connected to the intermediate housing and the second housing 212 separately, so that the intermediate housing and the second housing 212 can rotate relative to each other.

The first side frame 210 includes a first position 201 and a second position 202. The first side frame 210 has an insulation slot or is coupled to the ground plane 300 at the first position 201. The first side frame 210 has an insulation slot or is coupled to the ground plane 300 at the second position 202.

The first side frame 210 includes a first edge 131.

The second side frame 220 includes a third position 203 and a fourth position 204. The second side frame 220 has an insulation slot or is coupled to the ground plane 300 at the third position 203. The second side frame 220 has an insulation slot or is coupled to the ground plane 300 at the fourth position 204.

In an embodiment, when the first side frame 210 has an insulation slot at the first position 201 and/or the second position 202, and the second side frame has an insulation slot at the third position 203 and/or the fourth position 204, the insulation slot on the first side frame 210 is aligned with the insulation slot on the second side frame 220, to improve a degree of aesthetics of the electronic device 100.

It should be understood that, in this embodiment of this application, alignment may be understood as that when the electronic device 100 is in a folded state, the two insulation slots at least partially overlap in a thickness direction of the electronic device 100.

The second side frame 220 includes a third edge 133.

In an embodiment, the first side frame 210 may further include a second edge 132 that intersects with the first edge 131 at an angle. A length of the first edge 131 is less than a length of the second edge 132. The second side frame 220 may further include a fourth edge 134 that intersects with the third edge 133 at an angle. A length of the third edge 133 is less than a length of the fourth edge 134.

It should be understood that when the electronic device 100 includes a plurality of housings, the first side frame 210 or the second side frame 220 may include two sides that do not intersect at an angle. When the electronic device 100 includes a plurality of housings, and when the electronic device 100 is in an unfolded state, the first edge 131 and the third edge 133 may not be adjacent to each other.

When the electronic device 100 is in the unfolded state, the first edge 131 and the third edge 133 are top edges or bottom edges of the electronic device 100.

It should be understood that, for brevity of description, in this embodiment of this application, only an example in which the first edge 131 and the third edge 133 are top edges of the electronic device 100 is used for description.

As shown in FIG. 48, the electronic device 100 includes a first antenna 301 and a second antenna 302.

It should be understood that an operating frequency band of the first antenna 301 and an operating frequency band of the second antenna 302 each may include the first frequency band and/or the second frequency band in the foregoing embodiments. The electronic device 100 may perform satellite communication through the first antenna 301 and/or the second antenna 302.

A first radiator 310 of the first antenna 301 includes a conductive part of the first side frame 210 between the first position 201 and the second position 202. At least a part of the first radiator 310 is spaced from the ground plane 300. The first antenna 301 further includes a first feed circuit 311, the first radiator 310 includes a first feed point 312, and the first feed circuit 311 is coupled to the first feed point 312.

The second radiator 320 of the second antenna 302 includes a conductive part of the first side frame 210 between the third position 203 and the fourth position 204. At least a part of the second radiator 320 is spaced from the ground plane 300. The second antenna 302 further includes a second feed circuit 321, the second radiator 320 includes a second feed point 322, and the second feed circuit 321 is coupled to the second feed point 322.

The first position 201 is located on the first edge 131. The third position 203 is located on the third edge 133.

In an embodiment, the first feed point 312 is located on the first edge 131. The second feed point 322 is located on the third edge 133.

It should be understood that at least a part of the first radiator 310 and at least a part of the second radiator 320 are located on the top edge of the electronic device 100, which is more conducive to radiation generated by the first antenna 301 and/or the second antenna 302 in a top direction, so that quality of communication between the electronic device 100 and a communication satellite is good.

Because at least a part of the first radiator 310 is located on a top edge of the electronic device 100, the first antenna 301 may generate good radiation in the top direction, and has a good radiation characteristic. The second antenna 302 may be configured to improve radiation of the electronic device 100 in an upper hemispherical area, so that the electronic device 100 can have a good communication characteristic within a larger angle range relative to the top direction.

The upper hemispherical area may be understood as an area within an angle less than or equal to 90° relative to the top direction. In a coordinate system, the upper hemispherical area may be understood as an area that faces a positive direction of a z direction and that is on an xoy plane.

In an embodiment, the first radiator 310 may be configured to generate a first resonance, and a resonance frequency band of the first resonance includes the first frequency band and/or the second frequency band.

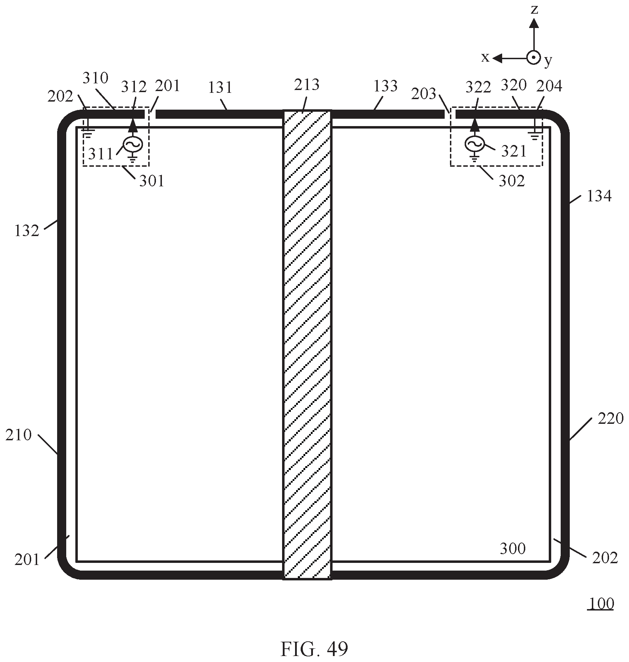

In an embodiment, the first side frame 210 has a first insulation slot at the first position 201, and is coupled to the ground plane 300 at the second position 202, as shown in FIG. 49.

It should be understood that, in this embodiment of this application, only an example in which the first position 201 is closer to the rotating shaft 213 than the second position 202 is used for description. In actual production or design, arrangement in this sequence may not be adopted. For example, the second position 202 is closer to the rotating shaft 213 than the first position 201, and the third position 203 and the fourth position 204 may also be correspondingly understood. For brevity of description, details are not described again.

In an embodiment, one end of the first radiator 310 is an open end, and the other end is a ground end, to form a structure similar to an inverted F antenna or a left-handed antenna.

When the first radiator 310 forms a structure similar to the inverted F antenna, the first feed point 312 is close to the ground end, and a distance between the first feed point 312 and the ground end (a length of the first radiator 310 between the first feed point 312 and the second position 202) is less than or equal to a half of a length of the first radiator 310.

When the first radiator 310 forms a structure similar to the left-handed antenna, the first feed point 312 is close to the open end, and a distance between the first feed point 312 and the ground end (a length of the first radiator 310 between the first feed point 312 and the second position 202) is greater than or equal to half of a length of the first radiator 310. When the first feed point 312 is close to the open end, miniaturization of the first radiator 310 is facilitated. A capacitor is coupled between the first feed circuit 311 and the first feed point 312, to better excite the first radiator 310.

For brevity of description, formation of the structure similar to the inverted F antenna or the left-handed antenna may be correspondingly understood in embodiments of this application. Details are not described again.

In an embodiment, the first radiator 310 may operate in a quarter-wavelength mode. An electrical length of the first radiator 310 is a quarter of a first wavelength.

In an embodiment, the second position 202 is located on the first edge 131. A distance between the second position 202 and the second edge 132 in an extension direction of the first edge 131 is less than or equal to 10 mm, and the second position 202 may be located in an intersection area of the first edge 131 and the second edge 132.

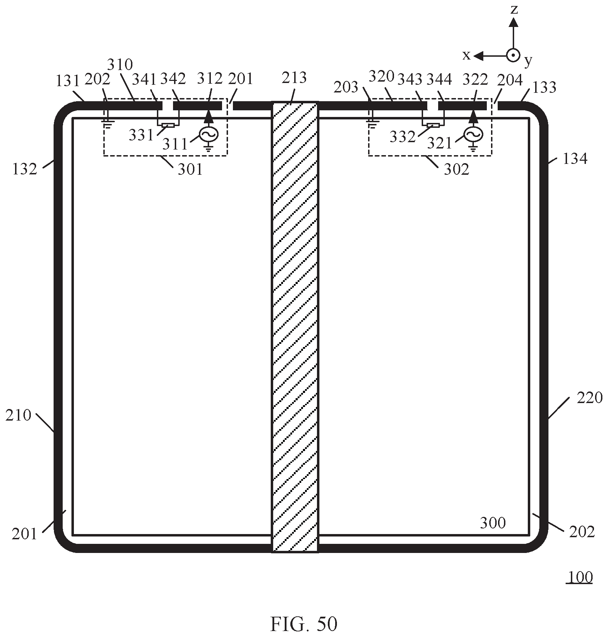

In an embodiment, the first radiator 310 includes a first connection point 341 and a second connection point 342, as shown in FIG. 50. The first radiator 310 has a fifth insulation slot between the first connection point 341 and the second connection point 342.

In an embodiment, the first antenna 301 may further include a first element 331. The first element 331 is coupled between the first connection point 341 and the second connection point 342.

It should be understood that the first radiator 310 is a structure in which one end is a ground end and the other end is an open end. Similarly, in the electronic device 100 shown in FIG. 49, the first radiator 310 may also form a metamaterial structure. For brevity of description, details are not described again. Refer to the metamaterial structure in the foregoing embodiments for corresponding understanding.

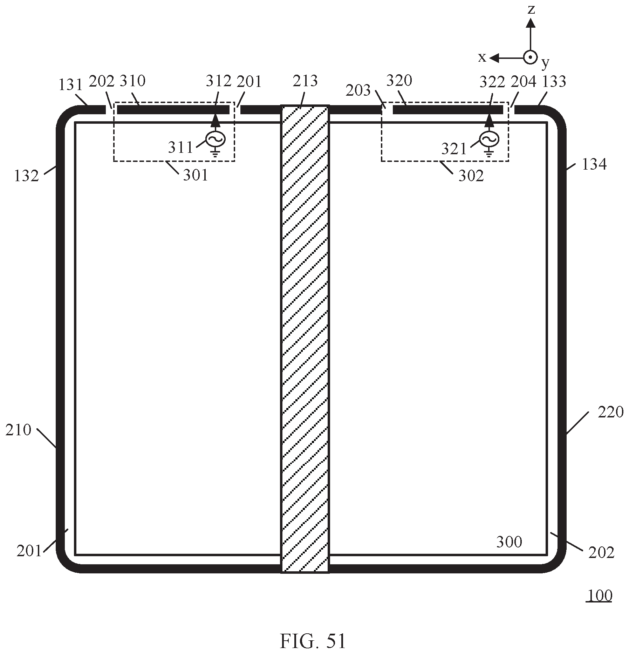

In an embodiment, the first side frame 210 has a first insulation slot and a second insulation slot respectively at the first position 201 and the second position 202, as shown in FIG. 51.

In an embodiment, a distance between the first feed point 312 and the first position 201 (a length of the first side frame 210 between the first feed point 312 and the first position 201) is different from a distance between the first feed point 312 and the second position 202 (a length of the first side frame 210 between the first feed point 312 and the second position 202).

It should be understood that the third resonance generated by the first radiator 310 is generated in the wire DM mode in the foregoing embodiments. Similarly, for understanding, refer to the corresponding descriptions in the foregoing embodiments.

In an embodiment, two ends of the first radiator 310 are open ends, and the first radiator 310 may operate in a one-half-wavelength mode. An electrical length of the first radiator 310 is a half of the first wavelength.

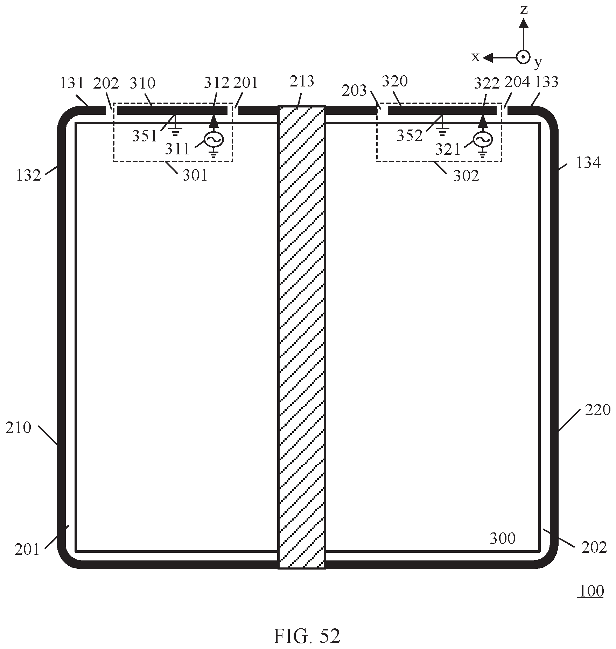

In an embodiment, the first radiator 310 may further include a first ground point 351, as shown in FIG. 52. The first radiator 310 is coupled to the ground plane 300 at the first ground point 351.

In an embodiment, the first ground point 351 may be located in a central area of the first radiator 310. The central area may be understood as an area within 5 mm from a center of the first radiator 310, and lengths of the first radiator 310 on two sides of the center are the same.

It should be understood that increasing structural symmetry of the first antenna 301 allows the first antenna 301 to have better communication performance.

In an embodiment, grounding may be implemented at the first ground point 351 through a ground member. A width of a joint between the ground member and the first side frame 210 is greater than or equal to 1 mm and less than or equal to 20 mm.

In an embodiment, when the ground member includes at least a part of the central area of the first radiator 310, it may be considered that the first ground point 351 is located in the central area of the first radiator 310.

It should be understood that, when the first radiator 310 is coupled to the ground plane 300 at the first ground point 351, the first radiator 310 may further generate a second resonance in the wire CM mode, and the second resonance may be used to improve a radiation characteristic (for example, radiation efficiency) of the first antenna 301 on the first frequency band and/or the second frequency band.

In an embodiment, a resonance point frequency of the first resonance may be higher than a resonance point frequency of the second resonance. A ratio of the resonance point frequency of the first resonance to the resonance point frequency of the second resonance may be greater than or equal to 1.1 and less than or equal to 1.5. In an embodiment, a ratio of the resonance point frequency of the first resonance to the resonance point frequency of the second resonance may be greater than or equal to 1.3 and less than or equal to 1.5.

In an embodiment, a frequency difference between the resonance point frequency of the first resonance and the resonance point frequency of the second resonance may be greater than or equal to 100 MHz and less than or equal to 500 MHz.

It should be understood that, on the first frequency band (or the second frequency band), the first antenna 301 may operate in the wire DM mode. The second resonance may be used to improve a radiation characteristic (for example, radiation efficiency) of the first antenna 301 on the resonance frequency band of the first resonance.

In an embodiment, the resonance point frequency of the first resonance may be higher than the resonance point frequency of the second resonance. A ratio of the resonance point frequency of the first resonance to the resonance point frequency of the second resonance may be less than or equal to 1.3. In an embodiment, a center frequency of the first frequency band is greater than the resonance point frequency of the second resonance, and is less than the resonance point frequency of the first resonance.

It should be understood that, on the first frequency band (or the second frequency band), the first antenna 301 may operate in a hybrid mode of the wire CM mode and the wire DM mode, and radiation is jointly generated in the wire CM mode and the wire DM mode. The first antenna 301 has both a part of radiation characteristics of the wire CM mode and a part of radiation characteristics of the wire DM mode.

In an embodiment, a ratio of the resonance point frequency of the first resonance to the resonance point frequency of the second resonance is less than or equal to 1.2. In an embodiment, a frequency difference between the resonance point frequency of the first resonance and the resonance point frequency of the second resonance is less than or equal to 300 MHz.

In an embodiment, the second position 202 may be located on the first edge 131, as shown in FIG. 51 and FIG. 52.

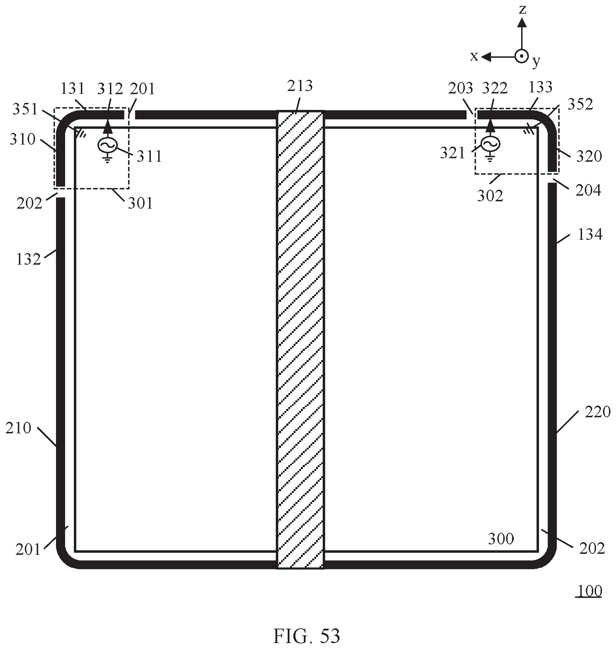

In an embodiment, the second position 202 may be located on the second edge 132, as shown in FIG. 53.

In an embodiment, the second radiator 320 may be configured to generate a third resonance, and a resonance frequency band of the third resonance includes the first frequency band and/or the second frequency band.

In an embodiment, the second side frame 220 has a third insulation slot at the third position 203, and is coupled to the ground plane 300 at the fourth position 204, as shown in FIG. 49.

In an embodiment, one end of the second radiator 320 is a ground end, and the other end is an open end, to form a structure similar to an inverted F antenna or a left-handed antenna. In an embodiment, the third resonance generated by the second radiator 320 may correspond to the quarter-wavelength mode. An electrical length of the second radiator 320 may be a quarter of a second wavelength, and the second wavelength is a wavelength corresponding to the third resonance.

In an embodiment, the fourth position 204 is located on the third edge 133. A distance between the fourth position 204 and the fourth edge 134 in an extension direction of the third edge 133 is less than or equal to 10 mm, and the fourth position 204 may be located in an intersection area of the third edge 133 and the fourth edge 134.

In an embodiment, the second radiator 320 includes a third connection point 343 and a fourth connection point 344, as shown in FIG. 50. The second radiator 320 has a sixth insulation slot between the third connection point 343 and the fourth connection point 344.

In an embodiment, the second antenna 302 may further include a second element 332. The second element 332 is coupled between the third connection point 343 and the fourth connection point 344.

It should be understood that the second radiator 320 is a structure in which one end is a ground end and the other end is an open end. Similarly, in the electronic device 100 shown in FIG. 49, the second radiator 320 may also form a metamaterial structure. For brevity of description, details are not described again. Refer to the metamaterial structure in the foregoing embodiments for corresponding understanding.

In an embodiment, the second side frame 220 has a third insulation slot and a fourth insulation slot respectively at the third position 203 and the fourth position 204, as shown in FIG. 51.

In an embodiment, a distance between the first feed point 312 and the third position 203 (a length of the second side frame 220 between the second feed point 322 and the third position 203) is different from a distance between the second feed point 322 and the fourth position 204 (a length of the second side frame 220 between the second feed point 322 and the fourth position 204).

It should be understood that the third resonance generated by the second radiator 320 is generated in the wire DM mode in the foregoing embodiments. Similarly, for understanding, refer to the corresponding descriptions in the foregoing embodiments.

In an embodiment, two ends of the second radiator 320 are open ends, and the second radiator 320 may operate in the one-half-wavelength mode. An electrical length of the second radiator 320 is a half of the first wavelength.

In an embodiment, the second radiator 320 may further include a second ground point 352, as shown in FIG. 52. The second radiator 320 is coupled to the ground plane 300 at the second ground point 352.

In an embodiment, the second ground point 352 may be located in a central area of the second radiator 320. The central area may be understood as an area within 5 mm from the center of the second radiator 320, and lengths of the second radiator 320 on two sides of the center are the same.

It should be understood that increasing structural symmetry of the second antenna 302 allows the second antenna 302 to have better communication performance.

In an embodiment, grounding may be implemented at the second ground point 352 through a ground member. A width of a joint between the ground member and the second side frame 220 is greater than or equal to 1 mm and less than or equal to 20 mm.

In an embodiment, when the ground member includes at least a part of the central area of the second radiator 320, it may be considered that the second ground point 352 is located in the central area of the second radiator 320.

It should be understood that, when the second radiator 320 is coupled to the ground plane 300 at the second ground point 352, the second radiator 320 may further generate a fourth resonance in the wire CM mode, and the fourth resonance may be used to improve a radiation characteristic (for example, radiation efficiency) of the second antenna 302 on the first frequency band and/or the second frequency band.

In an embodiment, a resonance point frequency of the third resonance may be higher than a resonance point frequency of the fourth resonance. A ratio of the resonance point frequency of the third resonance to the resonance point frequency of the fourth resonance may be greater than or equal to 1.1 and less than or equal to 1.5. In an embodiment, a ratio of the resonance point frequency of the third resonance to the resonance point frequency of the fourth resonance may be greater than or equal to 1.3 and less than or equal to 1.5.

In an embodiment, a frequency difference between the resonance point frequency of the third resonance and the resonance point frequency of the fourth resonance may be greater than or equal to 100 MHz and less than or equal to 500 MHz.

It should be understood that, on the first frequency band (or the second frequency band), the second antenna 302 may operate in the wire DM mode. The fourth resonance may be used to improve a radiation characteristic (for example, radiation efficiency) of the second antenna 302 on a resonance frequency band of the third resonance.

In an embodiment, a resonance point frequency of the third resonance may be higher than a resonance point frequency of the fourth resonance. A ratio of the resonance point frequency of the third resonance to the resonance point frequency of the fourth resonance may be less than or equal to 1.3. In an embodiment, the center frequency of the first frequency band is greater than the resonance point frequency of the fourth resonance and less than the resonance point frequency of the third resonance.

It should be understood that, on the first frequency band (or the second frequency band), the second antenna 302 may operate in a hybrid mode of the wire CM mode and the wire DM mode, and radiation is jointly generated in the wire CM mode and the wire DM mode. The second antenna 302 has both a part of radiation characteristics of the wire CM mode and a part of radiation characteristics of the wire DM mode.

In an embodiment, a ratio of the resonance point frequency of the third resonance to the resonance point frequency of the fourth resonance is less than or equal to 1.2. In an embodiment, a frequency difference between the resonance point frequency of the third resonance and the resonance point frequency of the fourth resonance is less than or equal to 300 MHz.

In an embodiment, the fourth position 204 may be located on the third edge 133, as shown in FIG. 51 and FIG. 52.

In an embodiment, the fourth position 204 may be located on the fourth edge 134, as shown in FIG. 53.

In an embodiment, the first antenna 301 and the second antenna 302 that are included in the electronic device 100 may be any combination of the first antenna 301 and the second antenna 302 shown in FIG. 49 to FIG. 53.

It should be understood that, when a difference between a first direction pattern generated by the first antenna 301 and a second direction pattern generated by the second antenna 302 is large, the electronic device 100 switches between the first antenna 301 and the second antenna 302 to perform satellite communication, or performs satellite communication through both the first antenna 301 and the second antenna 302, so that good communication quality can be achieved in a larger area.

In an embodiment, a structure of the first radiator 310 is the same as a structure of the second radiator 320.

The same structure may be understood as a same boundary condition. For example, one end is a ground end, and the other end is an open end, or both ends are open ends.

It should be understood that, when the first antenna 301 and the second antenna 302 have good symmetry, the electronic device 100 switches between the first antenna 301 and the second antenna 302 to perform satellite communication, or performs satellite communication through both the first antenna 301 and the second antenna 302, so that good communication quality can be achieved in a larger area.

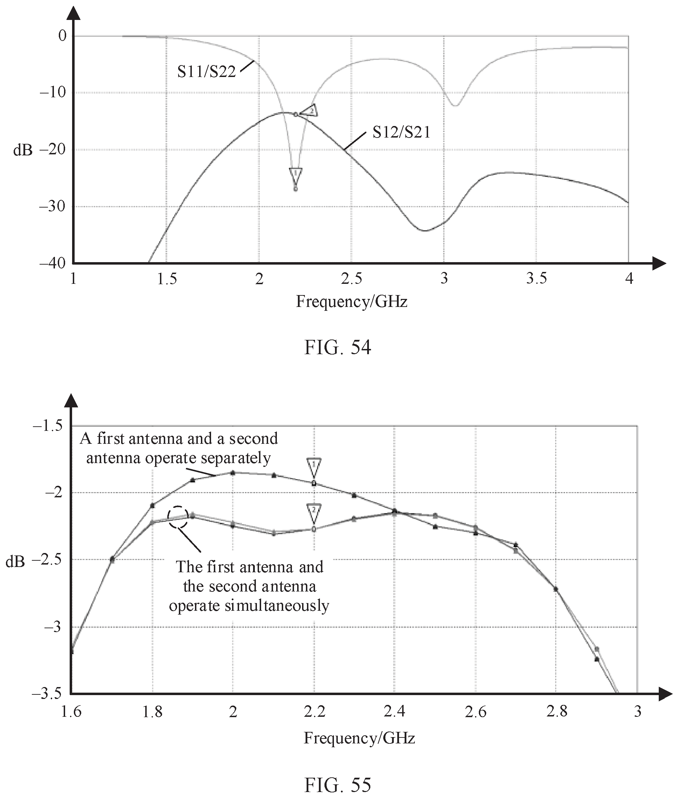

FIG. 54 and FIG. 55 show simulation results of the first antenna 301 and the second antenna 302 in the electronic device 100 shown in FIG. 50. FIG. 54 shows simulation results of S parameters of the first antenna 301 and the second antenna 302 in the electronic device 100 shown in FIG. 50. FIG. 55 shows simulation results of radiation efficiency of the first antenna 301 and the second antenna 302 in the electronic device 100 shown in FIG. 50.

As shown in FIG. 54, both the first antenna (S11) and the second antenna (S22) may generate a resonance near 2.2 GHz, and the resonance generated near 2.2 GHz may correspond to the first resonance/the third resonance in the foregoing embodiments.

On the second frequency band (for example, from 2170 MHz to 2200 MHz), isolation (S12/S21) between the first antenna and the second antenna is greater than 13 dB, and the first antenna and the second antenna have good isolation.

As shown in FIG. 55, when only the first antenna/the second antenna in the electronic device operates, on the second frequency band (for example, from 2170 MHz to 2200 MHz), radiation efficiency of the first antenna/the second antenna is approximately -1.9 dB.

When the first antenna and the second antenna in the electronic device operate simultaneously, on the second frequency band (for example, from 2170 MHz to 2200 MHz), radiation efficiency of the first antenna/the second antenna decreases by approximately 0.3 dB.

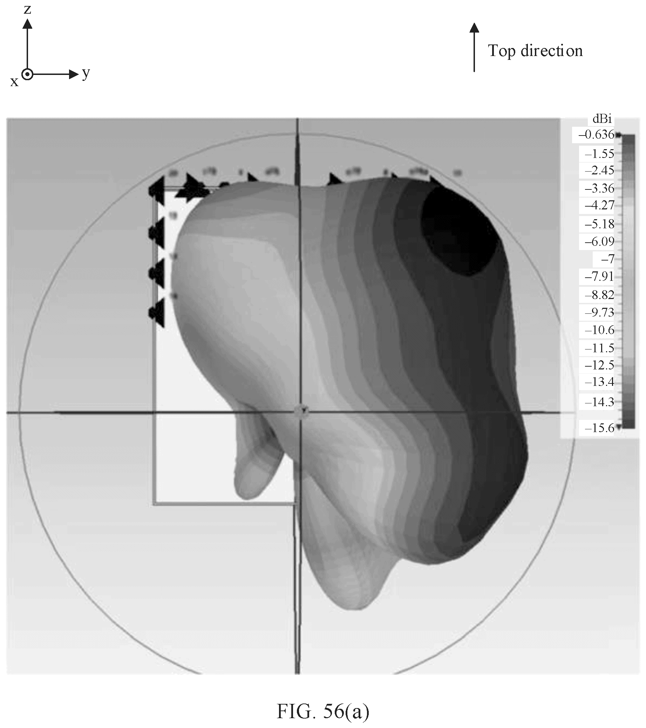

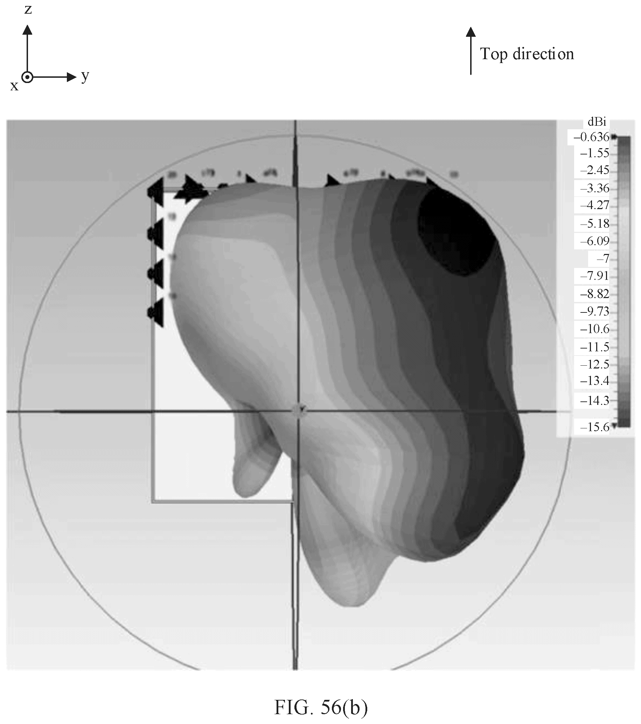

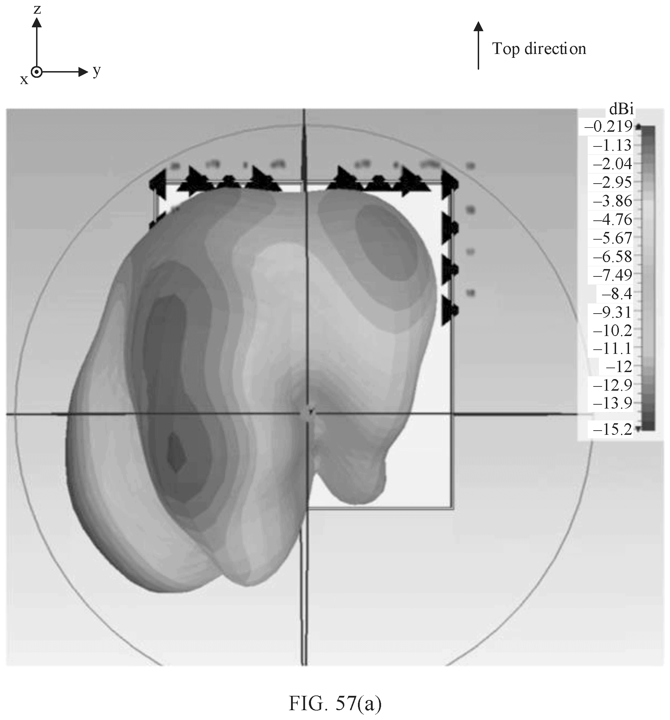

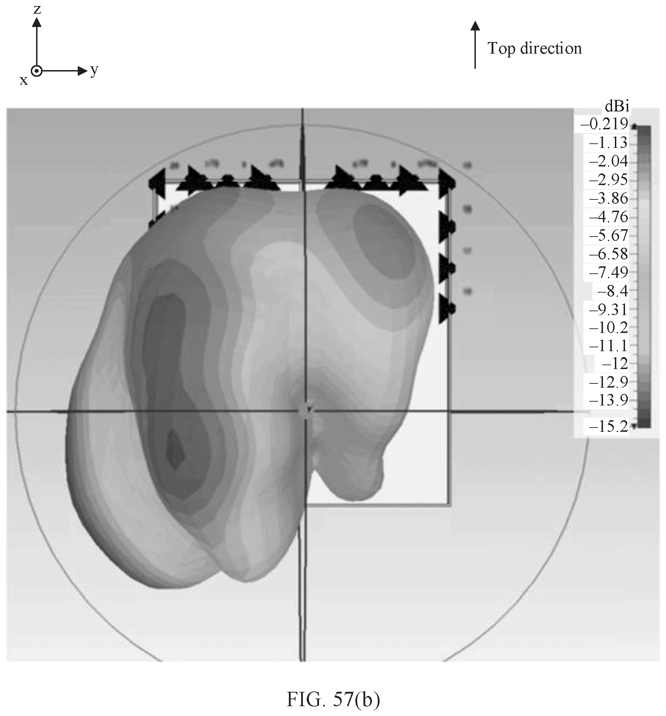

FIG. 56(a) to FIG. 57(b) are direction patterns generated by the first antenna 301 and the second antenna 302 in the electronic device 100 shown in FIG. 50. FIG. 56(a) and FIG. 56(b) are the first direction pattern generated by the first antenna 301 in the electronic device 100 shown in FIG. 50. FIG. 57(a) and FIG. 57(b) are the second direction pattern generated by the second antenna 302 in the electronic device 100 shown in FIG. 50.

As shown in FIG. 56(a) and FIG. 56(b), in the electronic device 100 shown in FIG. 50, a size of the ground plane is large, and due to traction of a current generated on the ground plane, a maximum radiation direction of the first direction pattern generated by the first antenna faces a top direction (for example, a z direction) of the electronic device and is deflected toward a side on which the second antenna is located (deflected toward a side on which the second housing is located).

As shown in FIG. 57(a) and FIG. 57(b), in the electronic device 100 shown in FIG. 50, a size of the ground plane is large, and due to traction of a current generated on the ground plane, a maximum radiation direction of the second direction pattern generated by the second antenna faces the top direction (for example, the z direction) of the electronic device and is deflected toward a side on which the first antenna is located (deflected toward a side on which the first housing is located).

It should be understood that an angle between the maximum radiation direction of the first direction pattern generated by the first antenna and the maximum radiation direction of the second direction pattern generated by the second antenna is large, and the electronic device may switch the first antenna or the second antenna (or the first antenna and the second antenna operate simultaneously), so that the communication satellite is always in an area in which the electronic device has a good radiation characteristic.

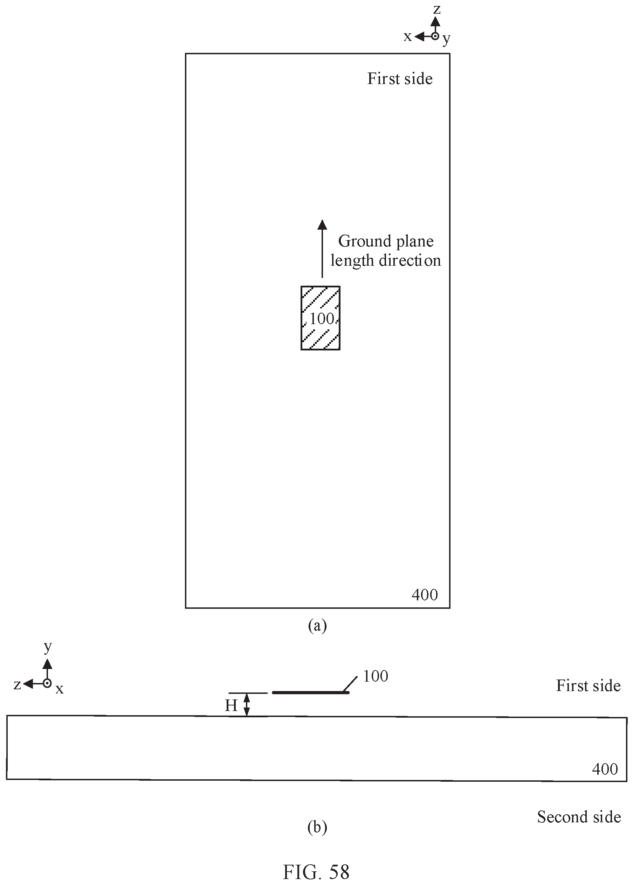

FIG. 58 is a diagram of a use scenario of the electronic device 100 according to an embodiment of this application.

As shown in FIG. 58, the electronic device 100 is placed on a first side of a dielectric block 400. The electronic device 100 may be disposed adjacent to the dielectric block 400.

It should be understood that, in the electronic device 100 shown in FIG. 58, the electronic device 100 may include any pair of the first antenna 301 and the second antenna 302 shown in FIG. 10 to FIG. 32. A radiator of the first antenna 301 is located on the first edge 131 of the electronic device 100, for example, a short edge (in an embodiment, a short edge of the foldable electronic device in a folded state, for example, a top edge). A radiator of the second antenna 302 is located on the second edge 132 of the electronic device 100, for example, a long edge (in an embodiment, a short edge of the foldable electronic device in a folded state, for example, a side edge), or is attached to a rear cover of the electronic device 100.

In an embodiment, the electronic device 100 may be spaced from the dielectric block 400 or at least partially in contact with a surface of the dielectric block 400. In an embodiment, a distance H between the electronic device 100 and the dielectric block 400 may be less than or equal to 50 mm.

When the electronic device 100 performs satellite communication, a radiation characteristic of the antenna on a second side of the dielectric block 400 is related to a relative location at which the antenna is disposed on the electronic device 100.

It should be understood that when the user uses the electronic device 100, a human body may also be equivalent to the dielectric block 400 in the foregoing embodiments. For example, when a user places the electronic device 100 in a trouser pocket, places the electronic device 100 in a waist bag, or performs satellite communication through an earpiece, the human body serves as a dielectric. For example, a radiation characteristic of a satellite communication antenna of the electronic device 100 on another side (a side away from the electronic device 100) of the human body is related to a relative position at which the antenna is disposed on the electronic device 100.

According to this embodiment of this application, when the radiator of the second antenna is located on the long side of the electronic device 100, a size of the ground plane in a length direction of the radiator of the second antenna is large. On a surface of the dielectric block 400, the second antenna generates a strong crawling wave in a length direction of the ground plane. The radiation generated by the second antenna may be transmitted to the second side from the first side of the dielectric block 400 by using a crawling wave, to enhance a communication characteristic of the electronic device 100 on the second side of the dielectric block 400.

When the radiator of the second antenna is attached to the rear cover of the electronic device 100, on the surface of the dielectric block 400, the second antenna generates a strong crawling wave in the length direction of the ground plane. A resonance mode of the second antenna includes a CM mode of a patch antenna, a polarization mode of radiation generated in the CM mode is vertical polarization, and an electric field component in radiation generated by the second antenna is perpendicular to the radiator of the second antenna (correspondingly, is also perpendicular to the surface of the dielectric block 400). Therefore, the crawling wave generated by the second antenna on the ground plane can be enhanced. The radiation generated by the second antenna may be transmitted to the second side from the first side of the dielectric block 400 by using a crawling wave, to enhance a communication characteristic of the electronic device 100 on the second side of the dielectric block 400.

Therefore, when the electronic device 100 is close to the dielectric block (for example, when the user places the electronic device 100 in a trouser pocket, places the electronic device 100 in a waist bag, or performs satellite communication through an earpiece), the electronic device 100 may perform satellite communication through the second antenna or perform satellite communication through both the first antenna and the second antenna.

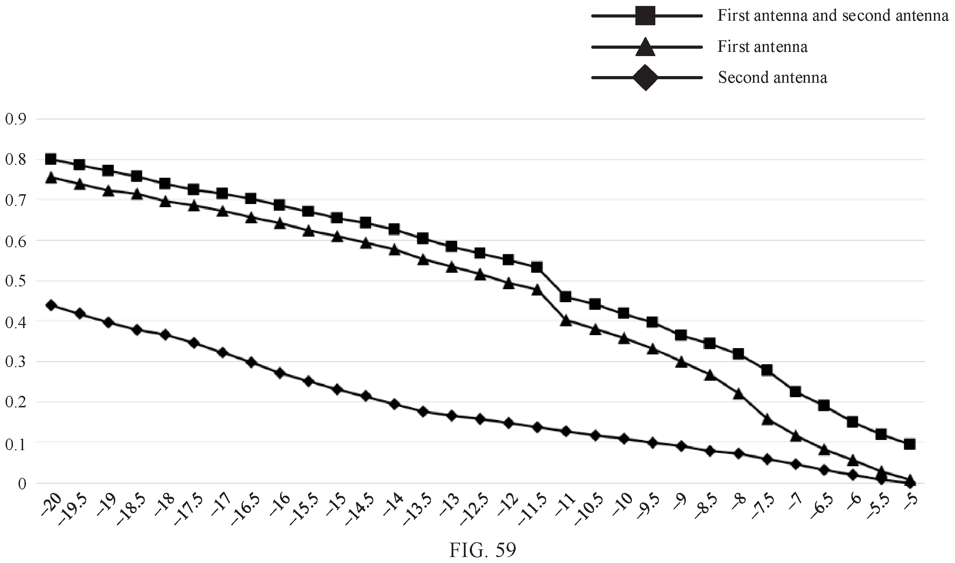

FIG. 59 is a diagram of gains of the first antenna and the second antenna in the scenario shown in FIG. 58.

It should be understood that, for brevity of description, in FIG. 59 and subsequent simulation results, only an example in which the radiator of the first antenna is located on the first edge of the electronic device 100 and the radiator of the second antenna is attached to the rear cover of the electronic device 100 is used for description. Details are not described again.

A simulation result shown in FIG. 59 is a distribution curve (cumulative distribution function, CDF) of gains of the antennas in an upper hemispherical area. Horizontal coordinates are gain values. Vertical coordinates are proportions of the gains that are of the antennas in the upper hemispherical area and that are greater than the horizontal coordinates.

As shown in FIG. 59, the gain of the second antenna in the upper hemispherical area is higher than the gain of the first antenna in the upper hemispherical area. When the electronic device performs satellite communication through the second antenna or performs satellite communication through both the first antenna and the second antenna, the electronic device has better communication performance.

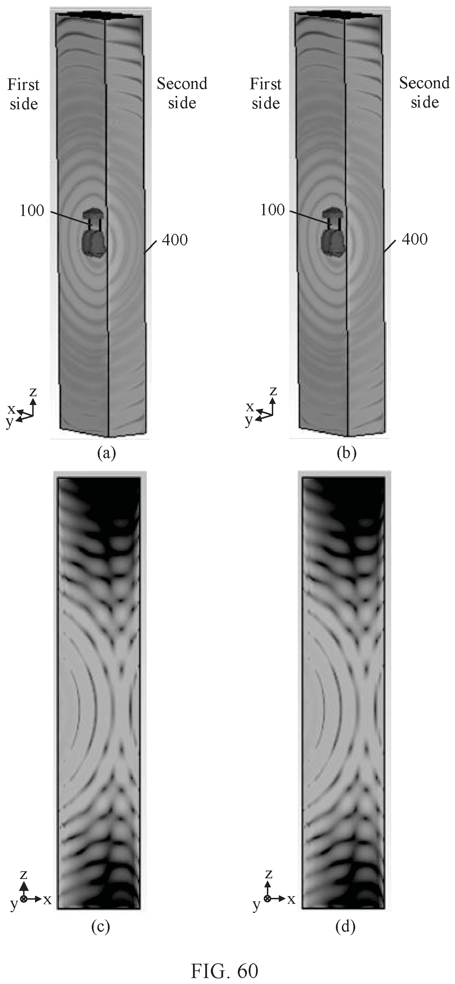

FIG. 60 is a diagram of simulation of satellite communication performed by the electronic device through the second antenna in the scenario shown in FIG. 58.

As shown in (a) and (b) in FIG. 60, a crawling wave generated by the second antenna on the ground plane is strong. Radiation generated by the second antenna can be transmitted to another surface from a surface that is of the dielectric block 400 and that corresponds to the second antenna.

As shown in (c) and (d) in FIG. 60, radiation generated by the second antenna may be transmitted to the second side from the first side of the dielectric block 400 by using a crawling wave, and the second antenna also has a good radiation characteristic on a back side (a surface away from the electronic device 100) of the dielectric block 400.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  An electronic device, comprising:

    a ground plane;
    a first side frame, wherein
    the first side frame comprises a first position, a second position, a third position, and a fourth position that are sequentially disposed, the first side frame is coupled to the ground plane or has an insulation slot at the first position, the first side frame is coupled to the ground plane or has an insulation slot at the second position, the first side frame is coupled to the ground plane or has an insulation slot at the third position, and the first side frame is coupled to the ground plane or has an insulation slot at the fourth position, and

    the first side frame comprises a first edge and a second edge that intersect at an angle, a length of the first edge is less than a length of the second edge, the first position and the second position are located on the first edge, and the third position and the fourth position are located on the second edge;
    a first antenna, wherein the first antenna comprises:

    a first radiator, wherein the first radiator comprises a conductive part of the first side frame between the first position and the second position, and at least a part of the first radiator is spaced from the ground plane, and
    a first feed circuit, wherein the first radiator comprises a first feed point, the first feed circuit is coupled to the first feed point, and the first feed circuit is configured to transmit a radio frequency signal of a satellite communication frequency band; and
    a second antenna, wherein the second antenna comprises:

    a second radiator, wherein the second radiator comprises a conductive part of the first side frame between the third position and the fourth position, and at least a part of the second radiator is spaced from the ground plane, and
    a second feed circuit, wherein the second radiator comprises a second feed point, the second feed circuit is coupled to the second feed point, and the second feed circuit is configured to transmit the radio frequency signal of the satellite communication frequency band, wherein
    a first antenna pattern generated by the first antenna is different from a second antenna pattern generated by the second antenna, and the electronic device performs satellite communication on the satellite communication frequency band through at least one of the first antenna or the second antenna.

2.  The electronic device according to claim 1, wherein the first side frame has a first insulation slot and a second insulation slot respectively at the first position and the second position.

3.  The electronic device according to claim 2, wherein the first antenna further comprises a first tuning circuit, the first radiator comprises a first connection point, the first tuning circuit is coupled to the first connection point, the first connection point and the first feed point are respectively located on two sides of a first virtual axis of the first radiator, and lengths of the first radiator on the two sides of the first virtual axis are the same.

4. The electronic device according to claim 3, wherein

the first tuning circuit further comprises a first switch branch, a second switch branch, and a first switch; and
the first switch branch and the second switch branch are coupled between the first connection point and the ground plane through the first switch.

5. The electronic device according to claim 4, wherein

based on coupling between the first connection point and the first switch branch, the first radiator is configured to generate a first resonance;
based on coupling between the first connection point and the second switch branch, the first radiator is configured to generate a second resonance; and
a resonance frequency band of the first resonance and a resonance frequency band of the second resonance each comprise the satellite communication frequency band.

6. The electronic device according to claim 4 or 5, wherein

the first side frame further comprises a first ground point between the first position and the second position, and the first side frame is coupled to the ground plane at the first ground point;
based on the coupling between the first connection point and the first switch branch, the first radiator is further configured to generate a third resonance, and there is a first frequency difference between a resonance point frequency of the first resonance and a resonance point frequency of the third resonance; and
based on the coupling between the first connection point and the second switch branch, the first radiator is further configured to generate a fourth resonance, there is a second frequency difference between a resonance point frequency of the second resonance and a resonance point frequency of the fourth resonance, and a frequency difference between the second frequency difference and the first frequency difference is greater than or equal to 50 MHz.

7. The electronic device according to any one of claims 4 to 6, wherein

based on the coupling between the first connection point and the first switch branch, a current on the ground plane on a first side of the virtual axis is greater than a current on the ground plane on a second side of the virtual axis; and
based on the coupling between the first connection point and the second switch branch, the current on the ground plane on the first side of the virtual axis is less than the current on the ground plane on the second side of the virtual axis.

8. The electronic device according to any one of claims 4 to 7, wherein
a length of the first side frame between the first feed point and the third position is less than a length of the first side frame between the first connection point and the third position.

9. The electronic device according to any one of claims 2 to 4, wherein

the first side frame further comprises a first ground point between the first position and the second position, and the first side frame is coupled to the ground plane at the first ground point; and
the first radiator is configured to generate a first resonance and the second resonance, and a resonance point frequency of the second resonance is lower than a resonance point frequency of the first resonance, wherein
a ratio of the resonance point frequency of the first resonance to the resonance point frequency of the second resonance is less than or equal to 1.3; and
a center frequency of the satellite communication frequency band is greater than the resonance point frequency of the second resonance, and is less than the resonance frequency of the first resonance.

10. The electronic device according to claim 6 or 9, wherein
a length of the first radiator between the first ground point and the first position is greater than or equal to one quarter of a length of the first radiator, and a length of the first radiator between the first ground point and the second position is greater than or equal to one quarter of the length of the first radiator.

11. The electronic device according to claim 1, wherein

the first antenna further comprises a first element, the first radiator comprises a second connection point and a third connection point, the first radiator has a third insulation slot between the second connection point and the third connection point, and the first element is coupled between the second connection point and the third connection point; and

the first side frame has a first insulation slot at the first position, and the first side frame is coupled to the ground plane at the second position; or the first side frame is coupled to the ground plane at the first position, and the first side frame has a second insulation slot at the second position.

12. The electronic device according to claim 11, wherein

based on the first insulation slot of the first side frame at the first position, and coupling between the first side frame and the ground plane at the second position, a length of the first radiator between the second position and the third insulation slot is less than a length of the first radiator between the first position and the third insulation slot; or

based on coupling between the first side frame and the ground plane at the first position, and the second insulation slot of the first side frame at the second position, the length of the first radiator between the second position and the third insulation slot is greater than the length of the first radiator between the first position and the third insulation slot.

13. The electronic device according to any one of claims 1 to 12, wherein

the first side frame has a fourth insulation slot at the third position, and the first side frame is coupled to the ground plane at the fourth position; or the first side frame is coupled to the ground plane at the third position, and the first side frame has a fifth insulation slot at the fourth position.

14. The electronic device according to any one of claims 1 to 13, wherein

the second antenna further comprises a second element; and

the second radiator comprises a fourth connection point and a fifth connection point, the second radiator has a sixth insulation slot between the fourth connection point and the fifth connection point, and the second element is coupled between the fourth connection point and the fifth connection point, wherein the first side frame has the fourth insulation slot at the third position, and the first side frame is coupled to the ground plane at the fourth position; or the first side frame is coupled to the ground plane at the third position, and the first side frame has the fifth insulation slot at the fourth position.

15. The electronic device according to claim 14, wherein

based on the fourth insulation slot of the first side frame at the third position, and coupling between the first side frame and the ground plane at the fourth position, a length of the second radiator between the fourth position and the sixth insulation slot is less than a length of the second radiator between the third position and the sixth insulation slot; or

based on coupling between the first side frame and the ground plane at the third position, and the fifth insulation slot of the first side frame at the fourth position, the length of the second radiator between the fourth position and the sixth insulation slot is greater than the length of the second radiator between the third position and the sixth insulation slot.

16. The electronic device according to any one of claims 1 to 12, wherein
the first side frame has a fourth insulation slot and a fifth insulation slot respectively at the third position and the fourth position.

17. The electronic device according to claim 16, wherein
the second antenna further comprises a second tuning circuit, the second radiator comprises a second connection point, the second tuning circuit is coupled to the second connection point, the second connection point and the second feed point are respectively located on two sides of a second virtual axis of the second radiator, and lengths of second radiator on the two sides of the second virtual axis are the same.

18. The electronic device according to claim 16 or 17, wherein
the first side frame further comprises a second ground point between the third position and the fourth position, and the first side frame is coupled to the ground plane at the second ground point.

19. The electronic device according to claim 18, wherein

the second radiator is configured to generate a fifth resonance and the sixth resonance, and a resonance point frequency of the sixth resonance is lower than a resonance point frequency of the fifth resonance, wherein
a ratio of the resonance point frequency of the fifth resonance to the resonance point frequency of the sixth resonance is less than or equal to 1.3; and
the center frequency of the satellite communication frequency band is less than the resonance point frequency of the fifth resonance, and is greater than the resonance frequency of the sixth resonance.

20. The electronic device according to any one of claims 1 to 19, wherein

the electronic device further comprises a first housing, a second housing, and a first rotating shaft, the first rotating shaft is located between the first housing and the second housing, and the first rotating shaft is rotatably connected to the first housing and the second housing separately; and
the first housing comprises the first side frame.

21. The electronic device according to any one of claims 1 to 20, wherein a minimum distance between the second radiator and the first radiator in an extension direction of the second edge is greater than or equal to 20 mm and less than or equal to a half of the length of the second edge.

22. The electronic device according to any one of claims 1 to 21, wherein

the satellite communication frequency band comprises a first frequency band; and
the first frequency band is a transmit frequency band in the satellite communication frequency band.

23. The electronic device according to any one of claims 1 to 22, wherein

the satellite communication frequency band comprises a second frequency band; and
the second frequency band is a receive frequency band in the satellite communication frequency band.

24. The electronic device according to claim 22, wherein

at first time, the electronic device performs satellite communication on the first frequency band through the first antenna, and at second time, the electronic device performs satellite communication on the first frequency band through the second antenna; or
at the first time, the electronic device performs satellite communication on the first frequency band separately through the first antenna and the second antenna.

25. The electronic device according to claim 23, wherein

at third time, the electronic device performs satellite communication on the second frequency band through the first antenna, and at fourth time, the electronic device performs satellite communication on the second frequency band through the second antenna; or
at the third time, the electronic device performs satellite communication on the second frequency band separately through the first antenna and the second antenna.

26. The electronic device according to any one of claims 1 to 25, wherein

the second antenna is configured to improve a radiation characteristic of the electronic device in an upper hemispherical area, wherein
the upper hemispherical area is an area whose angle with a top direction is less than or equal to 90°, and the top direction is a direction that is perpendicular to the first edge and that points from the inside of the electronic device to the first edge.

27. An electronic device, comprising:

a ground plane;
a first side frame, wherein
the first side frame comprises a first position and a second position, the first side frame is coupled to the ground plane or has an insulation slot at the first position, and the first side frame is coupled to the ground plane or has an insulation slot at the second position;
a first antenna, wherein the first antenna comprises:

a first radiator, wherein the first radiator comprises a conductive part of the first side frame between the first position and the second position, and at least a part of the first radiator is spaced from the ground plane, and
a first feed circuit, wherein the first radiator comprises a first feed point, the first feed circuit is coupled to the first feed point, and the first feed circuit is configured to transmit a radio frequency signal of a satellite communication frequency band; and
a second antenna, wherein the second antenna comprises:

a second radiator, wherein the second radiator comprises a first ground point, the first ground point is coupled to the ground plane, the second radiator is attached to a rear cover of the electronic device, and at least a part of the second radiator is spaced from the ground plane, and

a second feed circuit, wherein the second radiator comprises a second feed point, the second feed circuit is coupled to the second feed point, and the second feed circuit is configured to transmit the radio frequency signal of the satellite communication frequency band, wherein

the first side frame comprises a first edge and a second edge that intersect at an angle, a length of the first edge is less than a length of the second edge, and the first position and the second position are located on the first edge;

a maximum distance between the first radiator and the second radiator in an extension direction of the second edge is less than or equal to a half of the length of the second edge; and

a first antenna pattern generated by the first antenna is different from a second antenna pattern generated by the second antenna, and the electronic device performs satellite communication on the satellite communication frequency band through at least one of the first antenna or the second antenna.

28. The electronic device according to claim 27, wherein the first side frame has a first insulation slot and a second insulation slot respectively at the first position and the second position.

29. The electronic device according to claim 28, wherein

the first side frame further comprises a first ground point between the first position and the second position, and the first side frame is coupled to the ground plane at the first ground point; and

the first radiator is configured to generate a first resonance and the second resonance, and a resonance point frequency of the second resonance is lower than a resonance point frequency of the first resonance, wherein

a ratio of the resonance point frequency of the first resonance to the resonance point frequency of the second resonance is less than or equal to 1.3; and

a center frequency of the satellite communication frequency band is greater than the resonance point frequency of the second resonance, and is less than the resonance frequency of the first resonance.

30. The electronic device according to any one of claims 27 to 29, wherein

the second radiator further comprises a second ground point, and the second ground point is coupled to the ground plane; and

the second radiator comprises a first center line, the second feed point and a center of the second radiator are located on the first center line, the first center line divides the second radiator into a first part and a second part, the first ground point is located on the first part, and the second ground point is located on the second part.

31. The electronic device according to any one of claims 27 to 30, wherein the second radiator is in a ring shape.

32. The electronic device according to claim 30 or 31, wherein

the second radiator is configured to generate a third resonance and a fourth resonance, a resonance point frequency of the fourth resonance is higher than a resonance point frequency of the third resonance, and a ratio of the resonance point frequency of the fourth resonance to the resonance point frequency of the third resonance is less than or equal to 1.3.

33. The electronic device according to claim 32, wherein the center frequency of the satellite communication frequency band is less than the resonance point frequency of the second resonance, and is greater than the resonance point frequency of the first resonance.

34. The electronic device according to claim 32 or 33, wherein

at a resonance point of the third resonance, currents on the second radiator on two sides of the first ground point are reverse in direction, currents on the second radiator on two sides of the second ground point are reverse in direction, and currents on the second radiator between the first ground point and the second ground point are reverse in direction; and

at a resonance point of the fourth resonance, the currents on the second radiator on the two sides of the first ground point are co-directional, the currents on the second radiator on the two sides of the second ground point are co-directional, and the currents on the second radiator between the first ground point and the second ground point are reverse in direction.

35. The electronic device according to any one of claims 27 to 34, wherein

the second radiator further comprises a third connection point, and an angle between the third connection point and the second feed point relative to the center of the second radiator is less than or equal to 180° and greater than or equal to 45°; and

the second antenna further comprises a second element, and the second element is coupled between the third connection point and the ground plane.

36. The electronic device according to claim 35, wherein the second antenna further comprises a first switch and a third element, the first switch is coupled between the third connection point and the ground plane, and the second element and the third element are connected in parallel between the first switch and the third connection point or between the first switch and the ground plane.

37. The electronic device according to any one of claims 27 to 36, wherein
a distance between the first feed point and the second feed point is less than or equal to 20 mm.

38. The electronic device according to any one of claims 27 to 37, wherein

the satellite communication frequency band comprises a first frequency band; and
the first frequency band is a transmit frequency band in the satellite communication frequency band.

39. The electronic device according to any one of claims 27 to 38, wherein

the satellite communication frequency band comprises a second frequency band; and
the second frequency band is a receive frequency band in the satellite communication frequency band.

40. The electronic device according to claim 38, wherein

at first time, the electronic device performs satellite communication on the first frequency band through the first antenna, and at second time, the electronic device performs satellite communication on the first frequency band through the second antenna; or
at the first time, the electronic device performs satellite communication on the first frequency band separately through the first antenna and the second antenna.

41. The electronic device according to claim 39, wherein

at third time, the electronic device performs satellite communication on the second frequency band through the first antenna, and at fourth time, the electronic device performs satellite communication on the second frequency band through the second antenna; or
at the third time, the electronic device performs satellite communication on the second frequency band separately through the first antenna and the second antenna.

42. An electronic device, comprising:

a ground plane;
a first side frame, wherein
the first side frame comprises a first position, a second position, a third position, and a fourth position that are sequentially disposed, the first side frame is coupled to the ground plane or has an insulation slot at the first position, the first side frame is coupled to the ground plane or has an insulation slot at the second position, the first side frame is coupled to the ground plane or has an insulation slot at the third position, and the first side frame is coupled to the ground plane or has an insulation slot at the fourth position, and the first side frame comprises a first edge and a second edge that intersect at an angle, a length of the first edge is less than a length of the second edge, and the second position and the third position are located on the first edge;
a first antenna, wherein the first antenna comprises:

a first radiator, wherein the first radiator comprises a conductive part of the first side frame between the first position and the second position, and at least a part of the first radiator is spaced from the ground plane, and
a first feed circuit, wherein the first radiator comprises a first feed point, the first feed circuit is coupled to the first feed point, and the first feed circuit is configured to transmit a radio frequency signal of a satellite communication frequency band; and
a second antenna, wherein the second antenna comprises:

a second radiator, wherein the second radiator comprises a conductive part of the first side frame between the third position and the fourth position, and at least a part of the second radiator is spaced from the ground plane, and
a second feed circuit, wherein the second radiator comprises a second feed point, the second feed circuit is coupled to the second feed point, and the second feed circuit is configured to transmit the radio frequency signal of the satellite communication frequency band, wherein

a first antenna pattern generated by the first antenna is different from a second antenna pattern generated by the second antenna, and the electronic device performs satellite communication on the satellite communication frequency band through at least one of the first antenna or the second antenna.

43. The electronic device according to claim 42, wherein

the first position is located on the first edge, and the second position coincides with the third position; and
the first side frame has a first insulation slot and a second insulation slot respectively at the first position and the second position.

44. The electronic device according to claim 42, wherein

the first position is located on the second edge; and
the first side frame has a first insulation slot and a second insulation slot respectively at the first position and the second position.

45. The electronic device according to claim 42, wherein

the first position is located on the first edge, and a distance between the first position and the second edge in an extension direction of the first edge is less than or equal to 10 mm; and
the first side frame is coupled to the ground plane at the first position, and the first side frame has a second insulation slot at the second position.

46. The electronic device according to claim 45, wherein

the second edge further comprises a fifth position and a sixth position, the first side frame is coupled to the ground plane or has an insulation slot at the fifth position, and the first side frame is coupled to the ground plane or has an insulation slot at the sixth position;
the first antenna further comprises a first parasitic stub, the first parasitic stub comprises a conductive part of the first side frame between the fifth position and the sixth position, and at least a part of the first parasitic stub is spaced from the ground plane; and
the first radiator is configured to generate a first main resonance, the first parasitic stub is configured to generate a first parasitic resonance, a resonance point of the first parasitic resonance is located on a resonance frequency band of the first main resonance, the first main resonance and the first parasitic resonance jointly form a first resonance, and a resonance frequency band of the first resonance comprises the satellite communication frequency band.

47. The electronic device according to any one of claims 42 to 46, wherein

the first side frame further comprises a third edge that intersects with the first edge at an angle;
a distance between the fourth position and the first edge and a distance between the fourth position and the third edge in the extension direction of the first edge are less than or equal to 10 mm; and
the first side frame is coupled to the ground plane at the fourth position, and the first side frame has a third insulation slot at the third position.

48. The electronic device according to claim 47, wherein

the third edge further comprises a seventh position and an eighth position, the first side frame is coupled to the ground plane or has an insulation slot at the seventh position, and the first side frame is coupled to the ground plane or has an insulation slot at the eighth position;
the second antenna further comprises a second parasitic stub, the second parasitic stub comprises a conductive part of the first side frame between the seventh position and the eighth position, and at least a part of the second parasitic stub is spaced from the ground plane; and
the second radiator is configured to generate a second main resonance, the second parasitic stub is configured to generate a second parasitic resonance, a resonance point of the second parasitic resonance is located on a resonance frequency band of the second main resonance, the second main resonance and the second parasitic resonance jointly form a second resonance, and a resonance frequency band of the second resonance comprises the satellite communication frequency band.

49. The electronic device according to any one of claims 42 to 46, wherein

the first side frame further comprises a third edge that intersects with the first edge at an angle;
the fourth position is located on the third edge;

and
the first side frame has a third insulation slot and a fourth insulation slot respectively at the third position and the fourth position.

50. The electronic device according to claim 42, wherein

the first position and the fourth position are located on the first edge;
the electronic device further comprises a first element, the second position coincides with the third position, and the first element is coupled between the second position and the ground plane; and
the first side frame has a first insulation slot and a fourth insulation slot respectively at the first position and the fourth position.

51. The electronic device according to any one of claims 42 to 50, wherein

the satellite communication frequency band comprises a first frequency band; and
the first frequency band is a transmit frequency band in the satellite communication frequency band.

52. The electronic device according to any one of claims 42 to 51, wherein

the satellite communication frequency band comprises a second frequency band; and
the second frequency band is a receive frequency band in the satellite communication frequency band.

53. The electronic device according to claim 51, wherein

at first time, the electronic device performs satellite communication on the first frequency band through the first antenna, and at second time, the electronic device performs satellite communication on the first frequency band through the second antenna; or
at the first time, the electronic device performs satellite communication on the first frequency band separately through the first antenna and the second antenna.

54. The electronic device according to claim 52, wherein

at third time, the electronic device performs satellite communication on the second frequency band through the first antenna, and at fourth time, the electronic device performs satellite communication on the second frequency band through the second antenna; or
at the third time, the electronic device performs satellite communication on the second frequency band separately through the first antenna and the second antenna.

55. The electronic device according to any one of claims 42 to 54, wherein

the first side frame is coupled to the ground plane at the first position and the fourth position, and the first side frame has the second insulation slot and the third insulation slot respectively at the second position and the third position; or
the first side frame has the first insulation slot and the fourth insulation slot respectively at the first position and the fourth position, and the first side frame is coupled to the ground plane at the second position and the third position; or
the first side frame has the first insulation slot, the second insulation slot, the third insulation slot, and the fourth slot respectively at the first position, the second position, the third position, and the fourth position.

56. An electronic device, comprising:

a first housing, a second housing, and a ground plane, wherein
the first housing comprises a first side frame, and the second housing comprises a second side frame,
the first side frame comprises a first position and a second position, the first side frame is coupled to the ground plane or has an insulation slot at the first position, and the first side frame is coupled to the ground plane or has an insulation slot at the second position, and
the second side frame comprises a third position and a fourth position, the second side frame is coupled to the ground plane or has an insulation slot at the third position, and the second side frame is coupled to the ground plane or has an insulation slot at the fourth position;
a first rotating shaft, wherein the first rotating shaft is located between the first housing and the second housing, and the first rotating shaft is rotatably connected to the first housing and the second housing separately;
a first antenna, wherein the first antenna comprises:

a first radiator, wherein the first radiator comprises a conductive part of the first side frame between the first position and the second position, and at least a part of the first radiator is spaced from the ground plane, and
a first feed circuit, wherein the first radiator comprises a first feed point, the first feed circuit is coupled to the first feed point, and the first feed circuit is configured to transmit a radio frequency signal of a satellite communication frequency band; and
a second antenna, wherein the second antenna comprises:

a second radiator, wherein the second radiator comprises a conductive part of the second side frame between the third position and the fourth position, and at least a part of the second radiator is spaced from the ground plane, and
a second feed circuit, wherein the second radiator comprises a second feed point, the second feed circuit is coupled to the second feed point, and the second feed circuit is configured to transmit the radio frequency signal of the satellite communication frequency band, wherein
the first side frame comprises a first edge that intersects at an angle, the second side frame comprises a third edge, and when the electronic device is in an unfolded state, the first edge and the third edge are top edges or bottom edges of the electronic device, the first position is located on the first edge, and the third position is located on the third edge; and
a first antenna pattern generated by the first antenna is different from a second antenna pattern generated by the second antenna, and the electronic device performs satellite communication on the satellite communication frequency band through at least one of the first antenna or the second antenna.

57. The electronic device according to claim 56, wherein the first side frame has a first insulation slot and a second insulation slot respectively at the first position and the second position.

58. The electronic device according to claim 57, wherein

the first side frame further comprises a first ground point between the first position and the second position, and the first side frame is coupled to the ground plane at the first ground point;
the first radiator is configured to generate a first resonance and the second resonance, and a resonance point frequency of the second resonance is lower than a resonance point frequency of the first resonance, wherein a ratio of the resonance point frequency of the first resonance to the resonance point frequency of the second resonance is less than or equal to 1.3; and
a center frequency of the satellite communication frequency band is greater than the resonance point frequency of the second resonance, and is less than the resonance frequency of the first resonance.

59. The electronic device according to claim 56, wherein the first side frame has a first insulation slot at the first position, and the first side frame is coupled to the ground plane at the second position.

60. The electronic device according to any one of claims 56 to 59, wherein
the second position is located on the first edge.

61. The electronic device according to any one of claims 56 to 60, wherein
the second side frame has a fourth insulation slot at the third position, and the second side frame is coupled to the ground plane at the fourth position.

62. The electronic device according to any one of claims 56 to 60, wherein
the second side frame has a fourth insulation slot and a fifth insulation slot respectively at the third position and the fourth position.

63. The electronic device according to claim 62, wherein

the second side frame further comprises a second ground point between the third position and the fourth position, and the second side frame is coupled to the ground plane at the second ground point; and
the second radiator is configured to generate a third resonance and the fourth resonance, and a resonance point frequency of the fourth resonance is lower than a resonance point frequency of the third resonance, wherein
a ratio of the resonance point frequency of the third resonance to the resonance point frequency of the fourth resonance is less than or equal to 1.3; and
the center frequency of the satellite communication frequency band is less than the resonance point frequency of the third resonance, and is greater than the resonance frequency of the fourth resonance.

64. The electronic device according to any one of claims 56 to 63, wherein
the fourth position is located on the first edge.

65. The electronic device according to any one of claims 56 to 64, wherein

the satellite communication frequency band comprises a first frequency band; and
the first frequency band is a transmit frequency band in the satellite communication frequency band.

66. The electronic device according to any one of claims 56 to 65, wherein

the satellite communication frequency band comprises a second frequency band; and
the second frequency band is a receive frequency band in the satellite communication frequency band.

67. The electronic device according to claim 65, wherein

at first time, the electronic device performs satellite communication on the first frequency band through the first antenna, and at second time, the electronic device performs satellite communication on the first frequency band through the second antenna; or
at the first time, the electronic device performs satellite communication on the first frequency band separately through the first antenna and the second antenna.

68. The electronic device according to claim 66, wherein

at third time, the electronic device performs satellite communication on the second frequency band through the first antenna, and at fourth time, the electronic device performs satellite communication on the second frequency band through the second antenna; or
at the third time, the electronic device performs satellite communication on the second frequency band separately through the first antenna and the second antenna.

FIG. 1

FIG. 2

FIG. 3

100

110

126    125    127    129    128

FIG. 4

110

128
125    127    126    129

FIG. 5

FIG. 6

(a)

(b)

FIG. 7

(a)

Electric field node
(current strong point)

(b)

Current        Electric field

FIG. 8

FIG. 9

FIG. 10

z

x • → y

Top direction

201  310  202  131

132

301

203

320

302

204

210

300

100

FIG. 11

FIG. 12

FIG. 13

FIG. 14

FIG. 15

FIG. 16

FIG. 17

(a)

(b)

FIG. 18

(a)

(b)

FIG. 19

FIG. 20(a)

FIG. 20(b)

FIG. 20(c)

FIG. 21

FIG. 22

EP 4 787 733 A1

FIG. 23(a)

FIG. 23(b)

FIG. 24(a)

FIG. 24(b)

FIG. 25

FIG. 26

FIG. 27

FIG. 28

(a)

(b)

(c)

(d)

(e)

FIG. 29

z

x ⊙ → y

← Current

322

353 352 Virtual ground line

(a) 320

z

x ⊙ → y

← Current

322

352

353

(b) 320

x

z ⊙ → y

← Electric field

Virtual ground line
320

300

(c) 100

z

x ⊙ → y

↑ Top direction

(d) 100

x

y ⊙ → z

← Electric field

Direction pattern

320

300

(e) 100

FIG. 30

FIG. 31

FIG. 32

FIG. 33

FIG. 34

(a)

(b)

FIG. 35

(a)

(b)

FIG. 36

FIG. 37

FIG. 38

FIG. 39

FIG. 40

FIG. 41

FIG. 42

FIG. 43

FIG. 44

FIG. 45

(a)

(b)

FIG. 46

(a)

(b)

FIG. 47

FIG. 48

FIG. 49

FIG. 50

FIG. 51

FIG. 52

FIG. 53

FIG. 54

FIG. 55

FIG. 56(a)

FIG. 56(b)

FIG. 57(a)

FIG. 57(b)

z

x ⊙ y

First side

Ground plane
length direction

100

400

(a)

y

z ⊙ x

100

First side

H

400

Second side

(b)

FIG. 58

EP 4 787 733 A1

FIG. 59

First side · Second side · 100 · 400

(a)

First side · Second side · 100 · 400

(b)

(c)

(d)

FIG. 60

## INTERNATIONAL SEARCH REPORT

| International application No. |
|---|
| **PCT/CN2024/137170** |

### A. CLASSIFICATION OF SUBJECT MATTER

H04B 7/185(2006.01)i

According to International Patent Classification (IPC) or to both national classification and IPC

### B. FIELDS SEARCHED

Minimum documentation searched (classification system followed by classification symbols)

IPC: H04B, H01Q

Documentation searched other than minimum documentation to the extent that such documents are included in the fields searched

Electronic data base consulted during the international search (name of data base and, where practicable, search terms used)

CNTXT, ENTXTC, ENTXT, CNKI, DWPI, VEN: 第一天线, 第二天线, 天线, 边框, 卫星, 频段, 辐射体, 馈电点, 辐射方向, 地板, 绝缘, 缝隙, 方向图, first antenna, second antenna, antenna, frame, satellite, band, radiator, feed point, radiation direction, ground, insulation, slot, pattern

### C. DOCUMENTS CONSIDERED TO BE RELEVANT

| Category* | Citation of document, with indication, where appropriate, of the relevant passages | Relevant to claim No. |
|---|---|---|
| A | CN 116388842 A (LENOVO (BEIJING) CO., LTD.) 04 July 2023 (2023-07-04) description, paragraphs 0026-0103 | 1-68 |
| A | US 2023083466 A1 (APPLE INC.) 16 March 2023 (2023-03-16) entire document | 1-68 |
| A | WO 2023093213 A1 (HONOR DEVICE CO., LTD.) 01 June 2023 (2023-06-01) entire document | 1-68 |
| A | WO 2023155559 A1 (GUANGDONG OPPO MOBILE TELECOMMUNICATIONS CORP., LTD.) 24 August 2023 (2023-08-24) entire document | 1-68 |
| A | WO 2023221876 A1 (HUAWEI TECHNOLOGIES CO., LTD.) 23 November 2023 (2023-11-23) entire document | 1-68 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 March 2025** | **18 March 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/137170**

| Patent document cited in search report | | | Publication date (day/month/year) | Patent family member(s) | | | Publication date (day/month/year) |
|---|---|---|---|---|---|---|---|
| CN | 116388842 | A | 04 July 2023 | None | | | |
| US | 2023083466 | A1 | 16 March 2023 | None | | | |
| WO | 2023093213 | A1 | 01 June 2023 | CN | 116169462 | A | 26 May 2023 |
| WO | 2023155559 | A1 | 24 August 2023 | CN | 114530691 | A | 24 May 2022 |
| WO | 2023221876 | A1 | 23 November 2023 | EP | 4498527 | A1 | 29 January 2025 |
| | | | | CN | 117117470 | A | 24 November 2023 |
| | | | | CN | 118786582 | A | 15 October 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311840097
- CN 202410544898
- CN 202411649804